# EUROPEAN PATENT SPECIFICATION

(11) **EP 3 519 320 B1**
(45) Date of publication and mention of the grant of the patent: **19.02.2025**
(21) Application number: 17781604.8
(22) Date of filing: 28.09.2017
(51) Int. Cl.: B65D 81/34

(54) **FOODSTUFF PACKAGING ASSEMBLY AND RELATED METHODS**
LEBENSMITTELVERPACKUNGSANORDNUNG UND ZUGEHÖRIGE VERFAHREN
ENSEMBLE D'EMBALLAGE DE PRODUITS ALIMENTAIRES ET PROCÉDÉS ASSOCIÉS

(30) Priority: 29.09.2016 US 201662401302 P
(43) Date of publication of application: 07.08.2019
(73) Proprietor: Kellanova, Battle Creek, MI 49016 (US)
(72) Inventor: POLAK, Mieczyslaw, B., Caledonia MI 49316 (US)
(74) Representative: Pons Ariño, Angel
(86) International application number: PCT/US2017/053881
(87) International publication number: WO 2018/064256

(56) References cited:
- WO-A1-96/07604
- WO-A1-96/07604
- JP-A- S5 531 243
- JP-A- S5 531 243
- US-A- 3 079 911
- US-A- 3 079 911
- US-A- 4 874 618
- US-A- 4 874 618
- US-A1- 2010 112 146

## Description

### TECHNICAL FIELD

This disclosure relates to a foodstuff packaging assembly and more particularly to a foodstuff packaging assembly including foodstuff packaging, a first foodstuff disposed within the foodstuff packaging, and a second foodstuff disposed within the foodstuff packaging. The disclosure also relates to a method for assembling a foodstuff packaging assembly and a method for utilizing a foodstuff packaging assembly.

### BACKGROUND

Foodstuff packaging including foodstuff contained therein are known. While existing foodstuff packaging including foodstuff contained therein perform adequately for their intended purpose, improvements to foodstuff packaging including foodstuff contained therein are continuously being sought in order to advance the arts.
in the state of the art are known documents
- US 3 079 911 A which discloses a heating device.
- WO 96/07604 A1 A discloses packaging for a comestible product having two components, one of which is to be heated. The component to be heated is contained in an upper container releasably coupled to a lower container, the lower container being opaque to microwave radiations.
- US 4 874 618 A which discloses a package containing a moisture resistant edible internal barrier.
- JP S55 31243 A which discloses a heating structure which facilitates releasing of water along with a good preservation by means of tearing tape provided for a water bag.
- US 2010/112146A1 Describes food packages having features such as multiple containers in a single package; the packages can contain multiple food products including (for example) cereal and milk, for consumption together in a convenient manner.

### SUMMARY

One aspect of the disclosure provides an assembly as set out in claim 1.

Implementations of the disclosure may include one or more of the following optional features. The second foodstuff material may be selected from the group consisting of: granola, muesli, oats, seeds, nuts and cereal.

In some implementations, the first foodstuff material may be selected from the group consisting of: chocolate and fudge.

In some examples, the first foodstuff material may include ice cream.

In some examples, the heating element may include a first portion and a second portion that is detachably-connected to the first portion. The first portion of the heating element may include an inner surface, an outer surface and one or more passages formed in the outer surface of the first portion of the heating element. The second portion of the heating element may include an inner surface and an outer surface. The inner surface of the second portion of the heating element may be disposed adjacent the outer surface of the first portion of the heating element. The inner surface of the first portion of the heating element may be disposed adjacent the outer surface of the base portion of the foodstuff container.

In some implementations, the first portion of the heating element may define a cavity that contains a chemically-activated material. More particularly, the chemically-activated material may be an oxygen-activated material. The second portion of the heating element may be a removable film member. Upon removing the removable film member of the heating element from the first portion of the heating element, the one or more passages formed in the outer surface of the first portion of the heating element may arrange the chemically-activated material in direct fluid communication with the surrounding atmosphere for permitting oxygen to chemically react with the chemically-activated material for causing the first portion of the heating element to generate heat.

In some examples, the chemically-activated material includes zinc. When the oxygen chemically reacts with the zinc, the zinc may become zinc oxide.

Both of the first foodstuff and the second foodstuff are contained within the foodstuff-receiving cavity of the foodstuff container.

The foodstuff packaging includes a foodstuff separator arranged within the foodstuff-receiving cavity of the foodstuff container for separating the foodstuff-receiving cavity into: a first foodstuff-receiving cavity portion that is sized for receiving an amount of the first foodstuff and a second foodstuff-receiving cavity portion that is sized for receiving an amount of the second foodstuff.

The foodstuff separator includes an upper surface, a lower surface and a side surface connecting the upper surface to the lower surface. The foodstuff separator may also be defined by a thickness extending between the upper surface of the foodstuff separator and the lower surface of the foodstuff separator. The foodstuff separator includes a plurality of passages that extend through the thickness of the foodstuff separator for arranging the first foodstuff-receiving cavity portion in fluid communication with the second foodstuff-receiving cavity portion.

In some examples, the heating element is attached to the foodstuff container. In other examples, the heating element is formed with the foodstuff container. In yet other examples, not according to the invention, the heating element is formed with the closure.

Another aspect of the disclosure provides a method for assembling an assembly, as set out in claim 7.

Yet another aspect of the disclosure, not according to the invention, provides a method for utilizing an assembly.
The method may include: providing foodstuff packaging including a foodstuff container defining a foodstuff-receiving cavity, a heating element attached to a surface of the foodstuff container. The heating element may include a first portion and a second portion that is detachably-connected to the first portion. The first portion of the heating element includes chemically-activated material. The method may also include detachably-removing the second portion of the heating element from the first portion of the heating element for permitting oxygen from surrounding atmosphere to chemically react with the chemically-activated material for causing the first portion of the heating element to generate heat. The method may also include transferring the heat generated by the first portion of the heating element from the heating element to the foodstuff container. The method may also include further transferring the heat generated by the first portion of the heating element from the heating element to a first foodstuff by way of the foodstuff container. The first foodstuff may be contained within the foodstuff-receiving cavity of the foodstuff container. The method may also include utilizing the heat that is transferred to the first foodstuff for transitioning the first foodstuff from a substantially solid state to a substantially liquid state. The method may also include comingling the first foodstuff that is in the liquid state with the second foodstuff that is contained within the foodstuff-receiving cavity of the foodstuff container for forming a comingled foodstuff within the foodstuff-receiving cavity of the foodstuff container.

This aspect may include one or more of the following optional features. In some implementations, the method also includes removing a closure from the foodstuff packaging for accessing the comingled foodstuff within the foodstuff-receiving cavity of the foodstuff container.

In some implementations, the method includes: stirring or shaking the comingled foodstuff within the foodstuff-receiving cavity of the foodstuff container; and consuming the comingled foodstuff that is contained within the foodstuff-receiving cavity of the foodstuff container.

In some examples, the second foodstuff material is selected from the group consisting of: granola, muesli, oats, seeds, nuts and cereal, not being limited by the first foodstuff.

In some implementations, the first foodstuff includes a foodstuff material is selected from the group consisting of: chocolate and fudge, not being limited by the second foodstuff material.

The details of one or more implementations of the disclosure are set forth in the accompanying drawings and the description below. Other aspects, features, and advantages will be apparent from the description and drawings, and from the claims.

### DESCRIPTION OF DRAWINGS

FIG. 1 illustrates an exploded view of an assembly including foodstuff packaging, a first foodstuff and a second foodstuff in accordance with the principles of the present disclosure, not covered by the present invention;
FIGS. 2A-2F illustrate cross-sectional views of a methodology for assembling the assembly of FIG. 1;

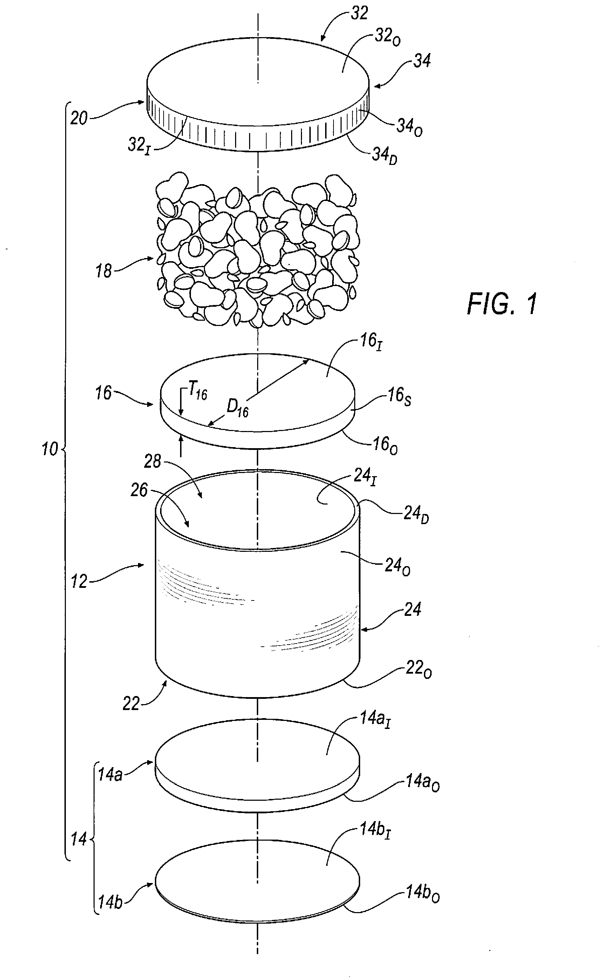

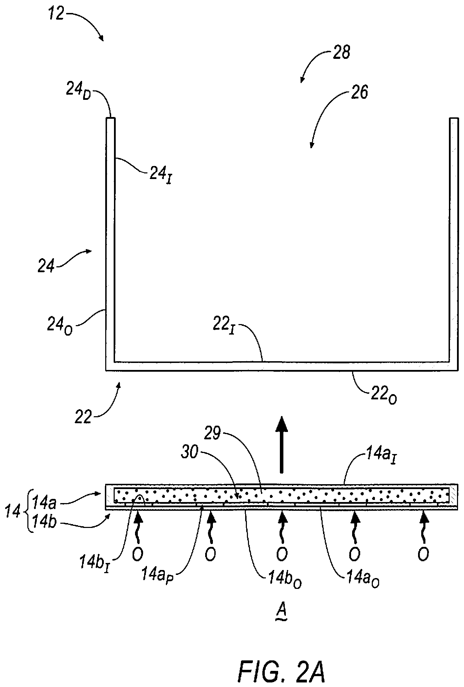

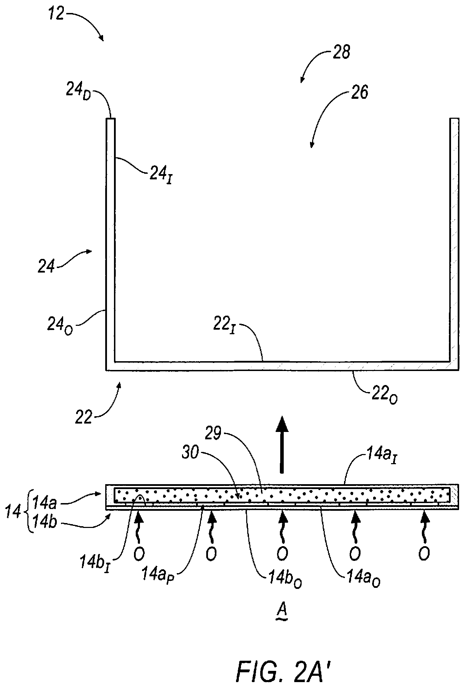

FIGS. 2A'-2E' illustrate cross-sectional views of another methodology for assembling the assembly of FIG. 1;

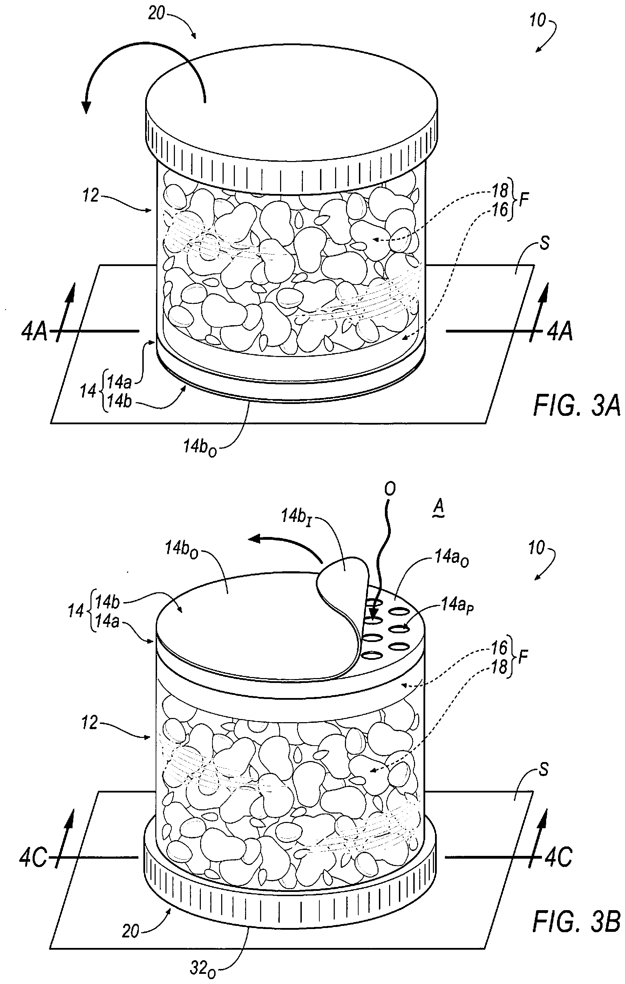

FIGS. 3A-3D illustrate perspective views of a method of utilizing the assembly of FIG. 1;

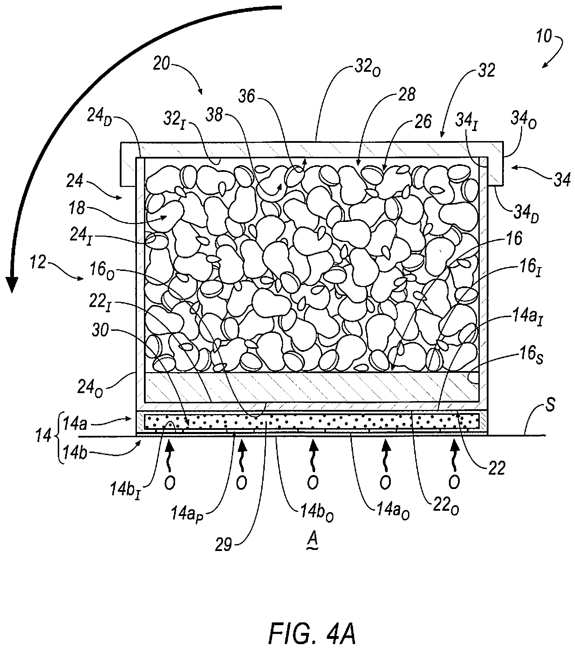

FIGS. 4A-4I illustrate cross-sectional views of a method of utilizing the assembly of FIG. 1;

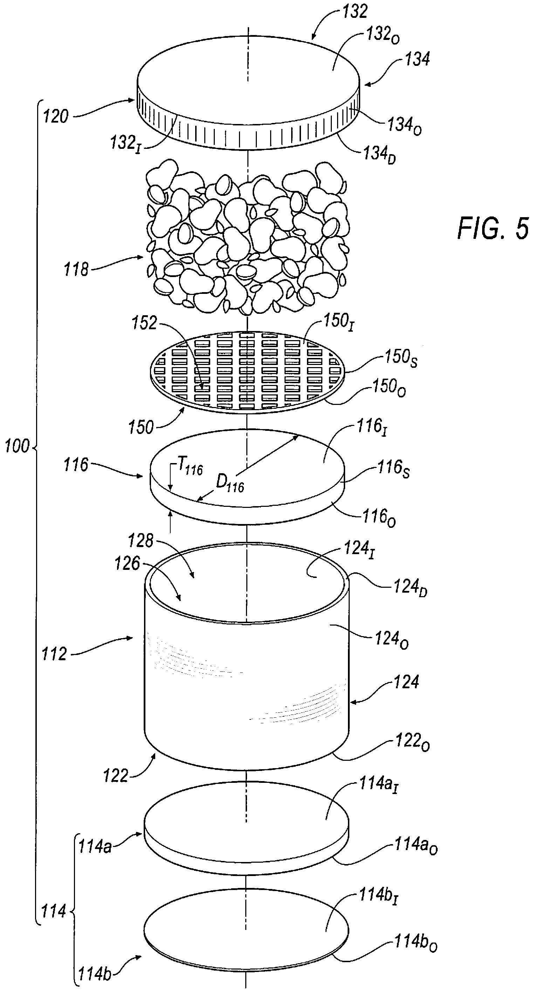

FIG. 5 illustrates an exploded view of another assembly including foodstuff packaging, a first foodstuff, and a second foodstuff in accordance with the principles of the present disclosure;

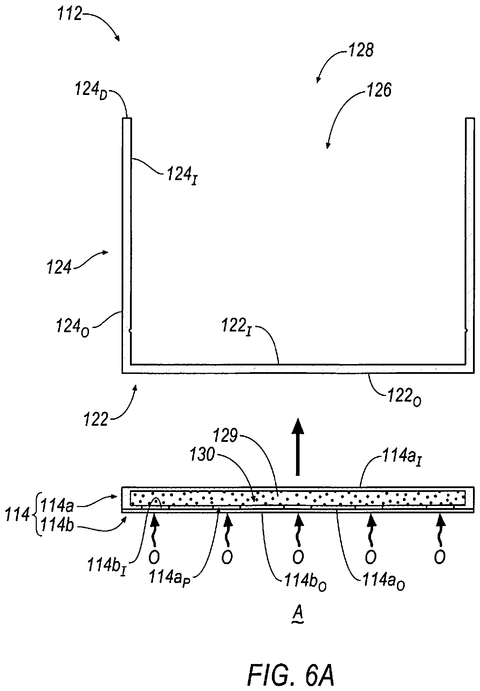

FIGS. 6A-6G illustrate cross-sectional views of a methodology for assembling the assembly of FIG. 5;

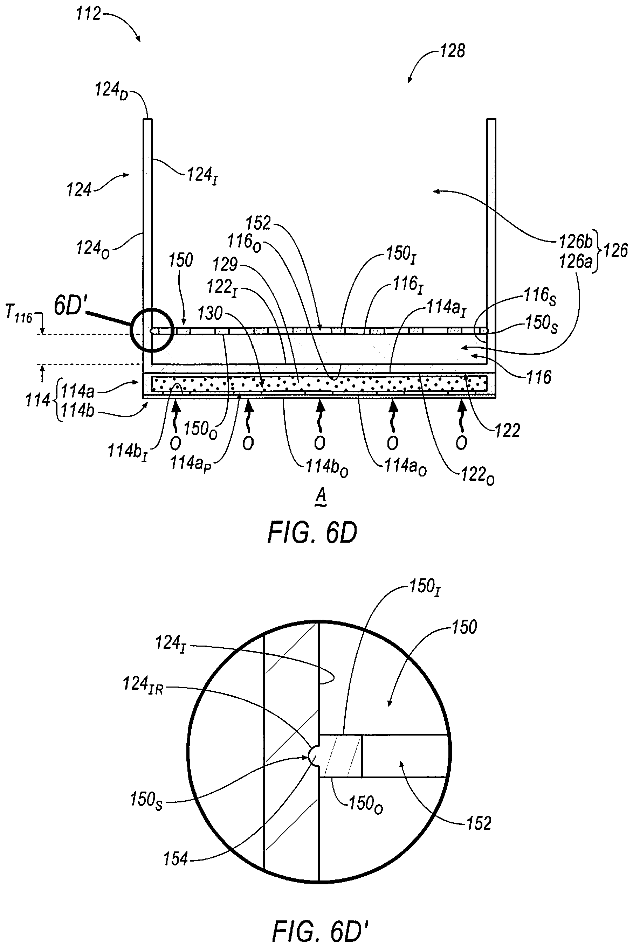

FIG. 6D' is an enlarged view of FIG. 6D according to line 6D';

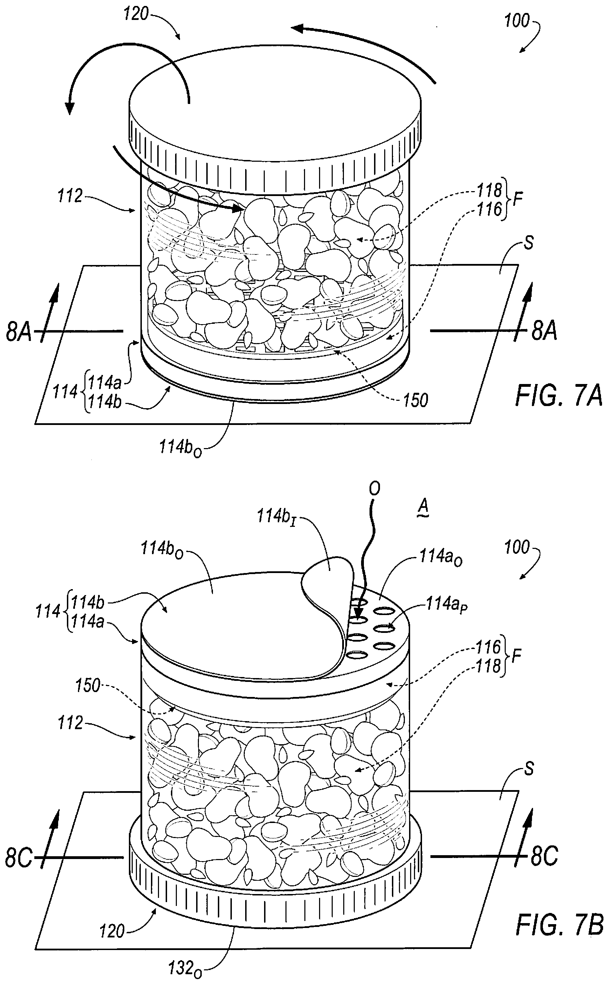

FIGS. 7A-7D illustrate perspective views of a method of utilizing the assembly of FIG. 5; and

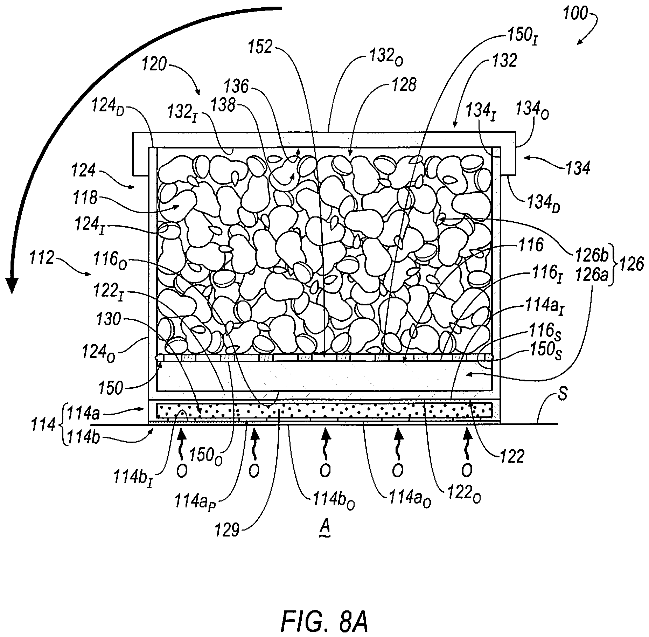

FIGS. 8A-8I illustrate cross-sectional views of a method of utilizing the assembly of FIG. 5.

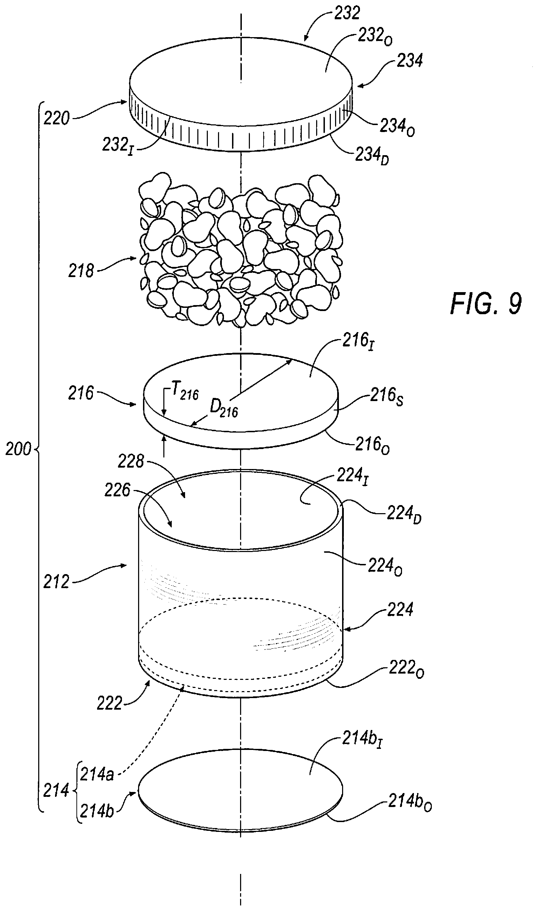

FIG. 9 illustrates an exploded view of another assembly including foodstuff packaging, a first foodstuff, and a second foodstuff in accordance with the principles of the present
   disclosure, not covered by the present invention;

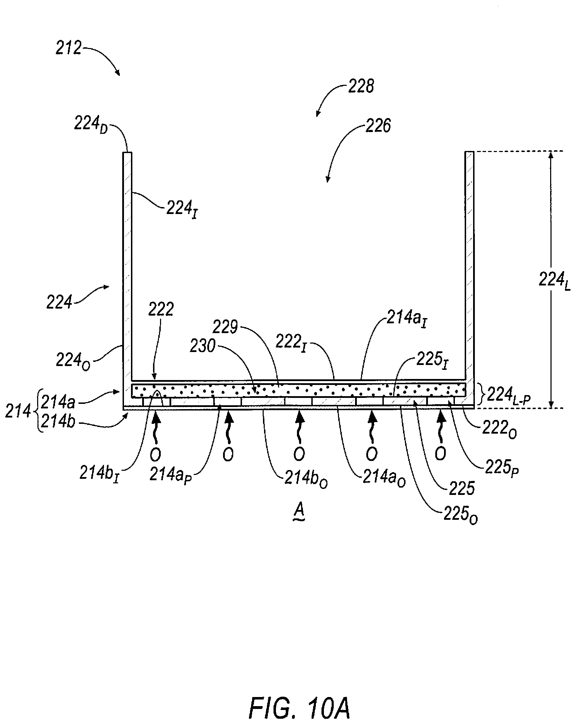

FIGS. 10A-10F illustrate cross-sectional views of a methodology for assembling the assembly of FIG. 9;

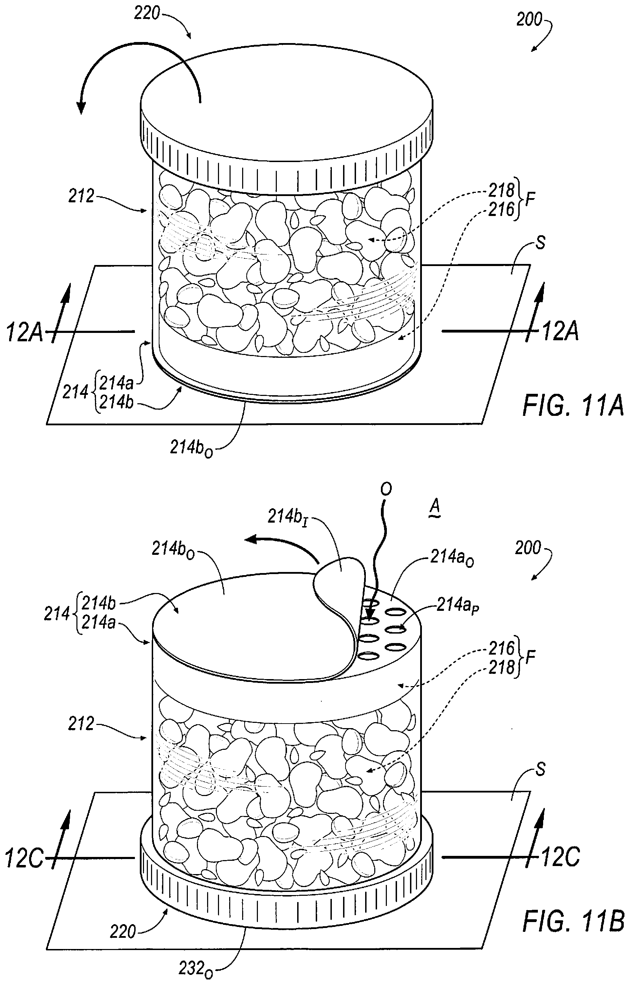

FIGS. 11A-11D illustrate perspective views of a method of utilizing the assembly of FIG. 9; and

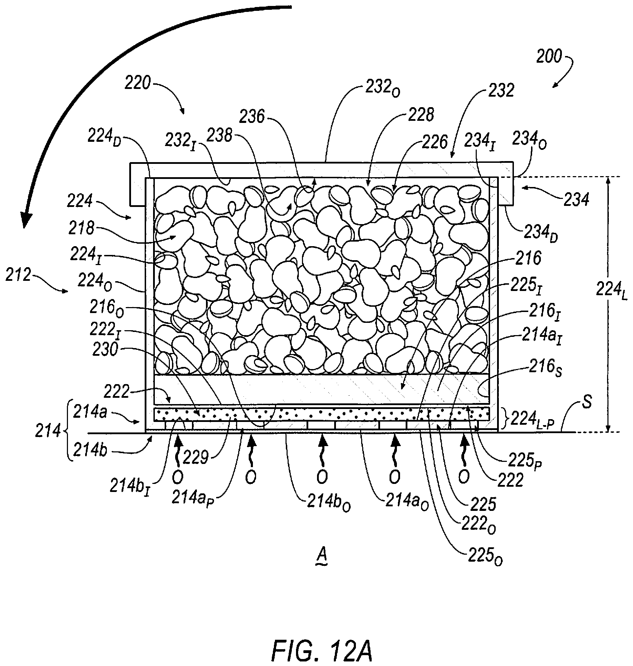

FIGS. 12A-12I illustrate cross-sectional views of a method of utilizing the assembly of FIG. 9.

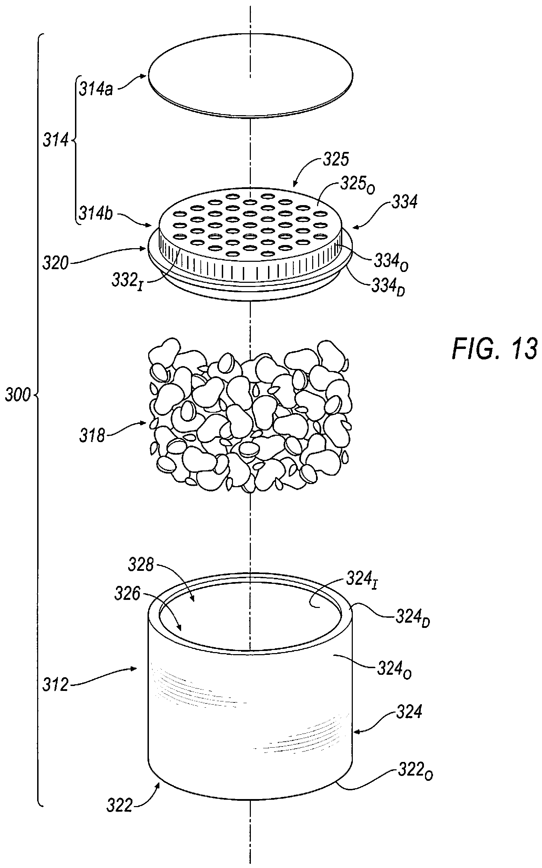

FIG. 13 illustrates an exploded view of another assembly including foodstuff packaging, a first foodstuff, and a second foodstuff in accordance with the principles of the present disclosure, not covered by the present invention;

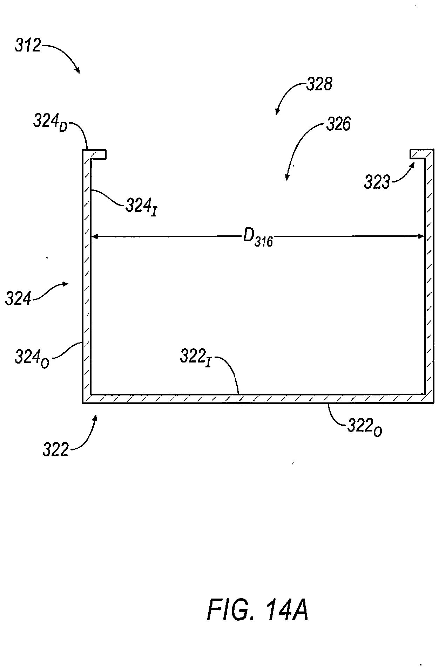

FIGS. 14A-14D illustrate cross-sectional views of a methodology for assembling the assembly of FIG. 13;

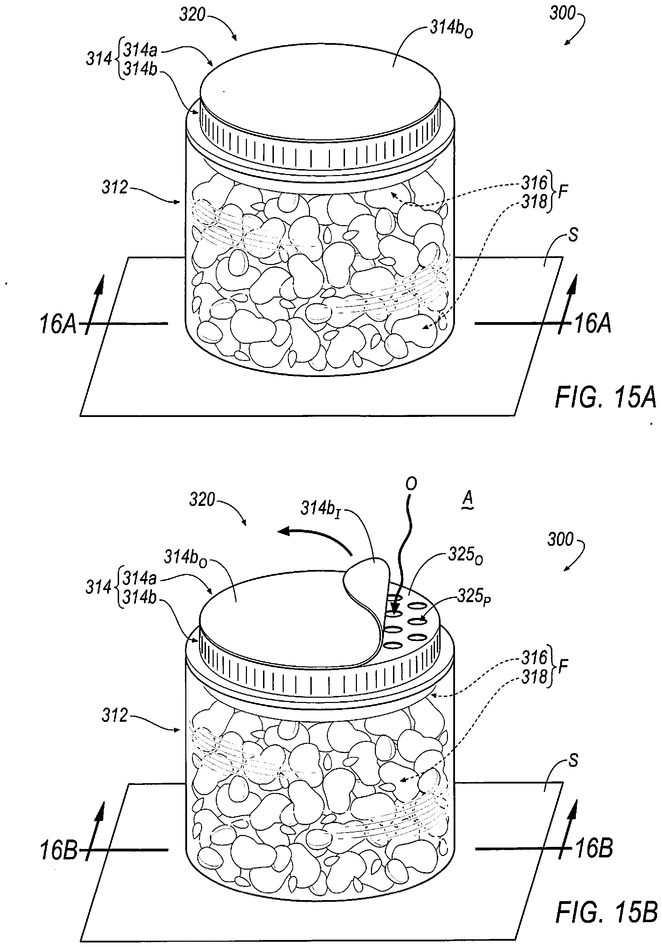

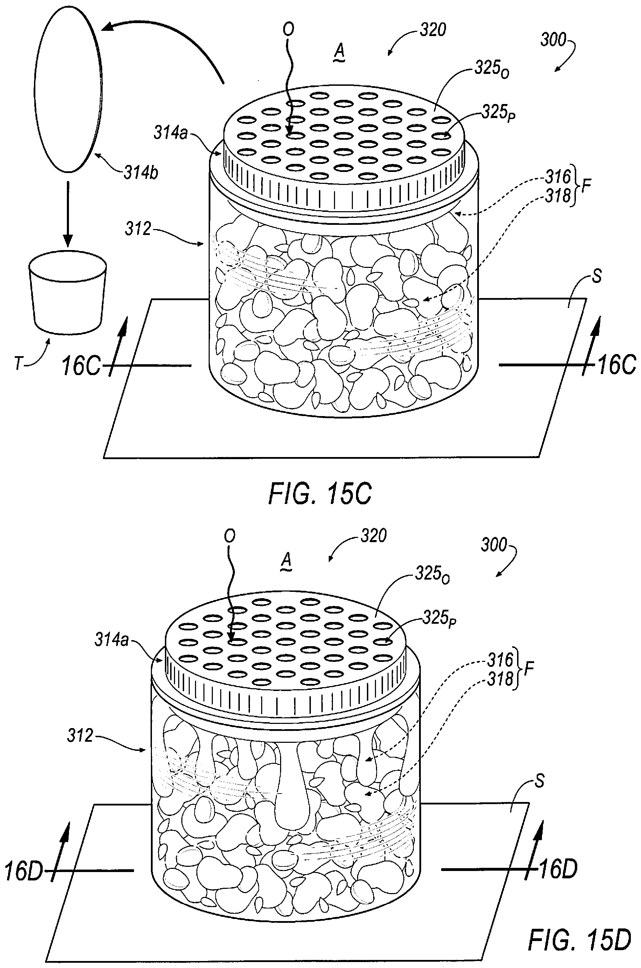

FIGS. 15A-15D illustrate perspective views of a method of utilizing the assembly of FIG. 13; and

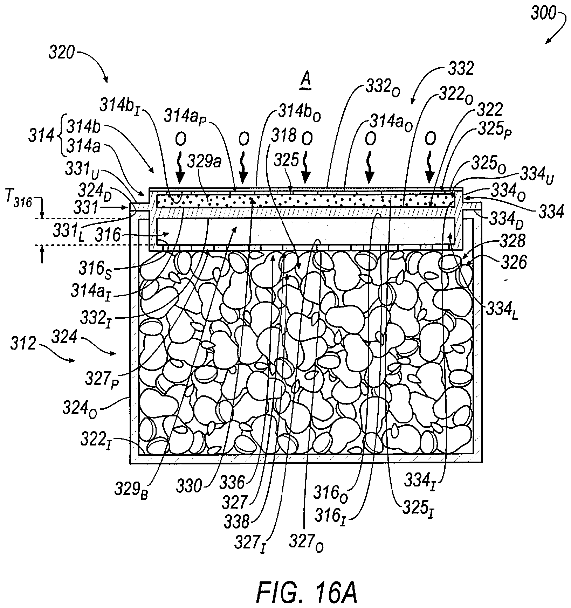

FIGS. 16A-16G illustrate cross-sectional views of a method of utilizing the assembly of FIG. 13.

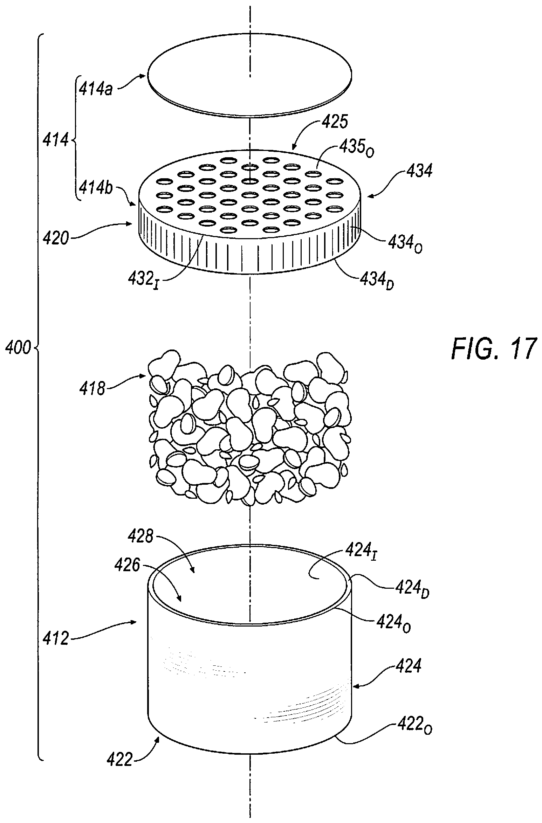

FIG. 17 illustrates an exploded view of another assembly including foodstuff packaging, a first foodstuff, and a second foodstuff in accordance with the principles of the present disclosure, not covered by the present invention;

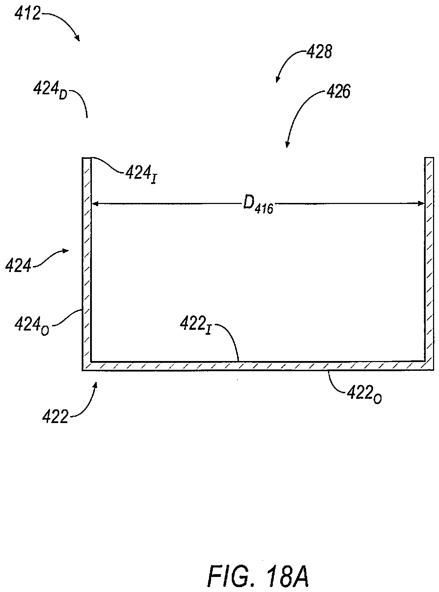

FIGS. 18A-18D illustrate cross-sectional views of a methodology for assembling the assembly of FIG. 17;

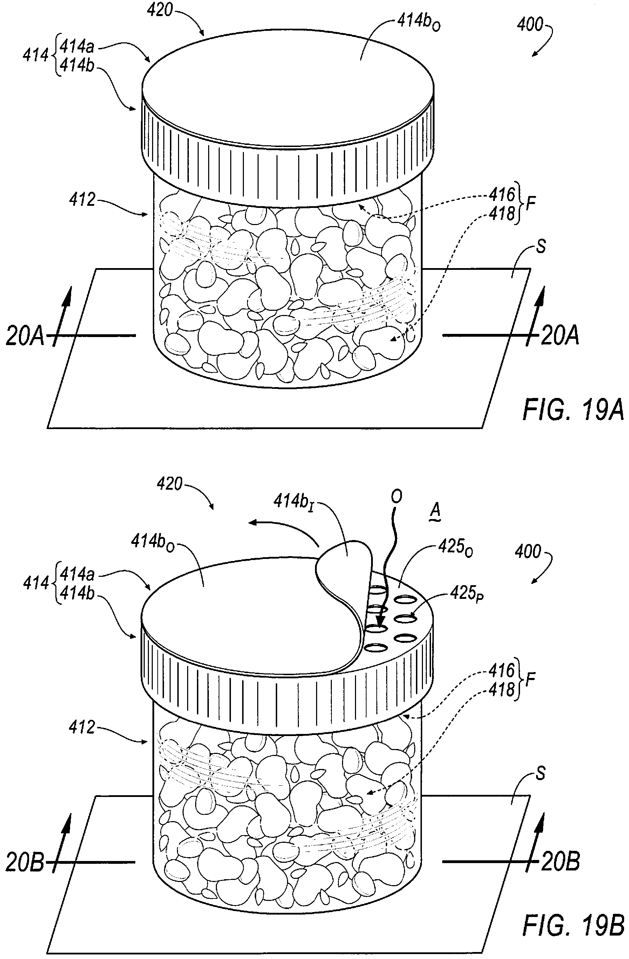

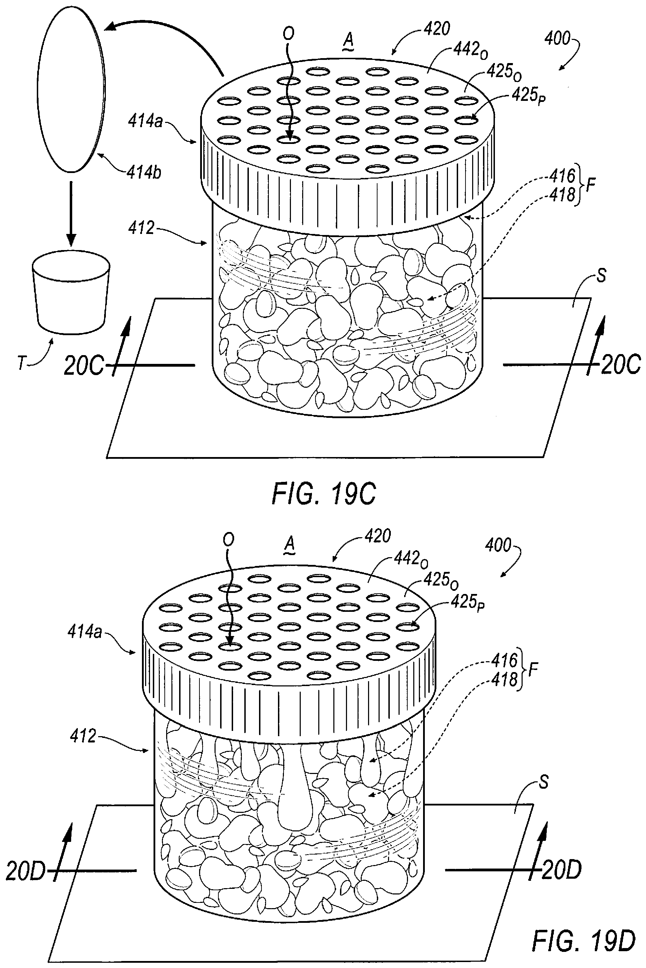

FIGS. 19A-19D illustrate perspective views of a method of utilizing the assembly of FIG. 17; and

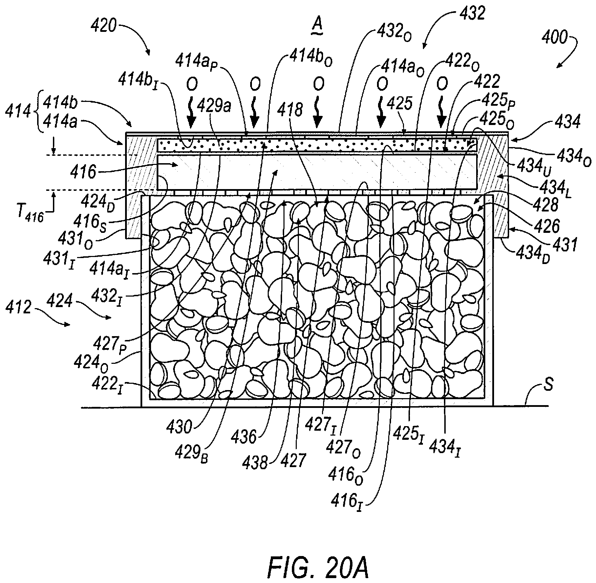

FIGS. 20A-20G illustrate cross-sectional views of a method of utilizing the assembly of FIG. 17.

### DETAILED DESCRIPTION

Example configurations will now be described more fully with reference to the accompanying drawings. Example configurations are provided so that this disclosure will be thorough, and will fully convey the scope of the disclosure to those of ordinary skill in the art. Specific details are set forth such as examples of specific components, devices, and methods, to provide a thorough understanding of configurations of the present disclosure. It will be apparent to those of ordinary skill in the art that specific details need not be employed, that example configurations may be embodied in many different forms, and that the specific details and the example configurations should not be construed to limit the scope of the disclosure.

The terminology used herein is for the purpose of describing particular exemplary configurations only and is not intended to be limiting. As used herein, the singular articles "a," "an," and "the" may be intended to include the plural forms as well, unless the context clearly indicates otherwise. The terms "comprises," "comprising," "including," and "having," are inclusive and therefore specify the presence of features, steps, operations, elements, and/or components, but do not preclude the presence or addition of one or more other features, steps, operations, elements, components, and/or groups thereof. The method steps, processes, and operations described herein are not to be construed as necessarily requiring their performance in the particular order discussed or illustrated, unless specifically identified as an order of performance. Additional or alternative steps may be employed.

When an element or layer is referred to as being "on," "engaged to," "connected to," "attached to," or "coupled to" another element or layer, it may be directly on, engaged, connected, attached, or coupled to the other element or layer, or intervening elements or layers may be present. In contrast, when an element is referred to as being "directly on," "directly engaged to," "directly connected to," "directly attached to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The terms first, second, third, etc. may be used herein to describe various elements, components, regions, layers and/or sections. These elements, components, regions, layers and/or sections should not be limited by these terms. These terms may be only used to distinguish one element, component, region, layer or section from another region, layer or section. Terms such as "first," "second," and other numerical terms do not imply a sequence or order unless clearly indicated by the context. Thus, a first element, component, region, layer or section discussed below could be termed a second element, component, region, layer or section without departing from the teachings of the example configurations.

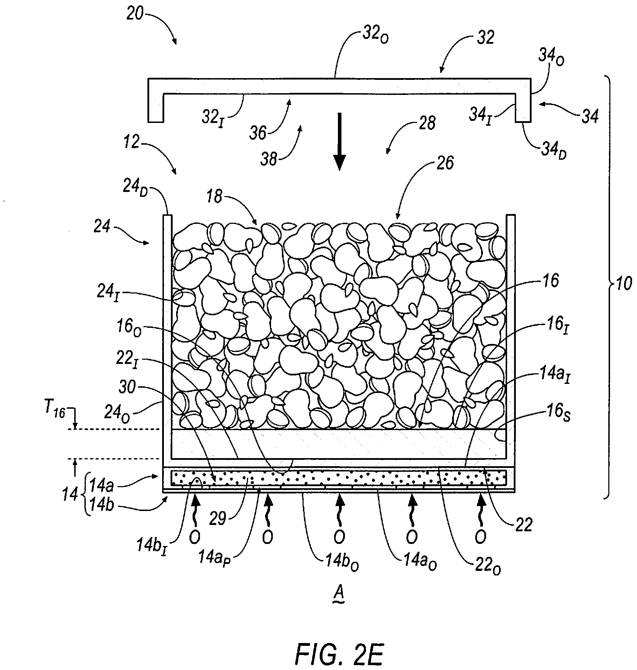

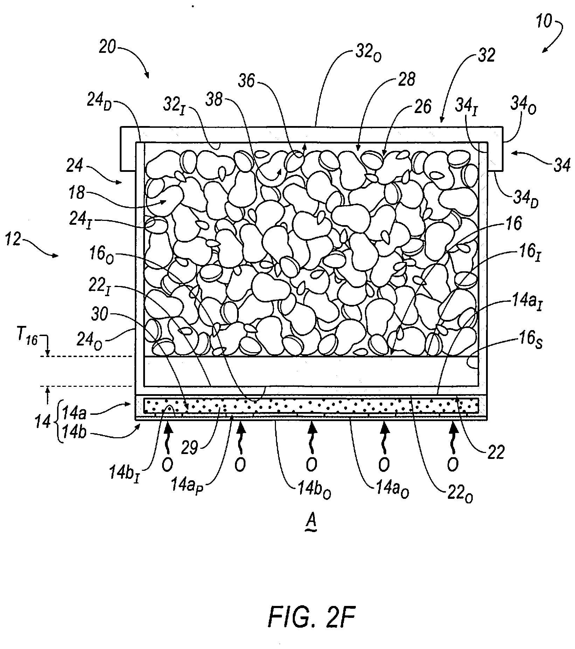

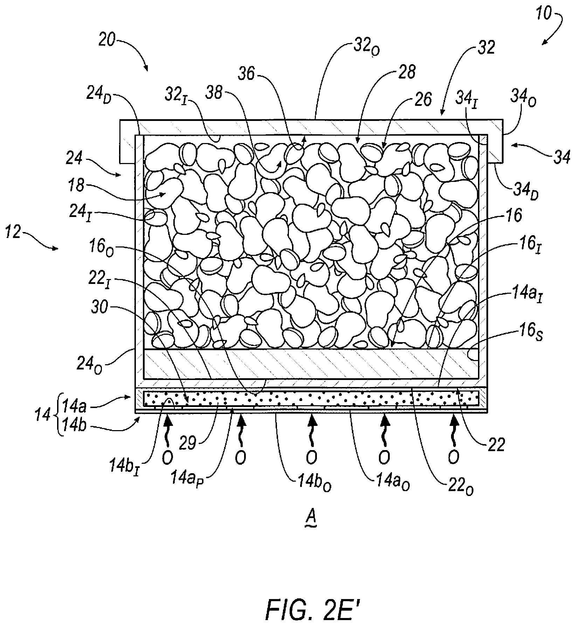

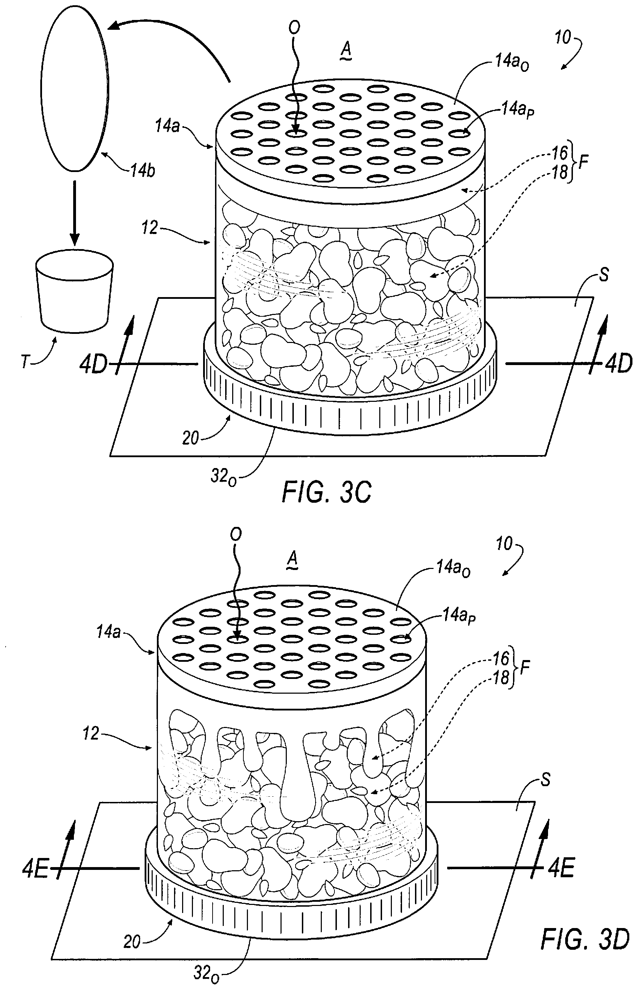

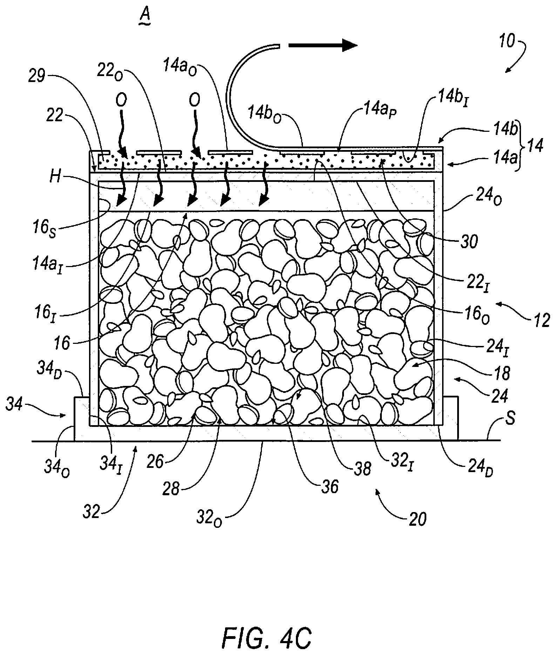

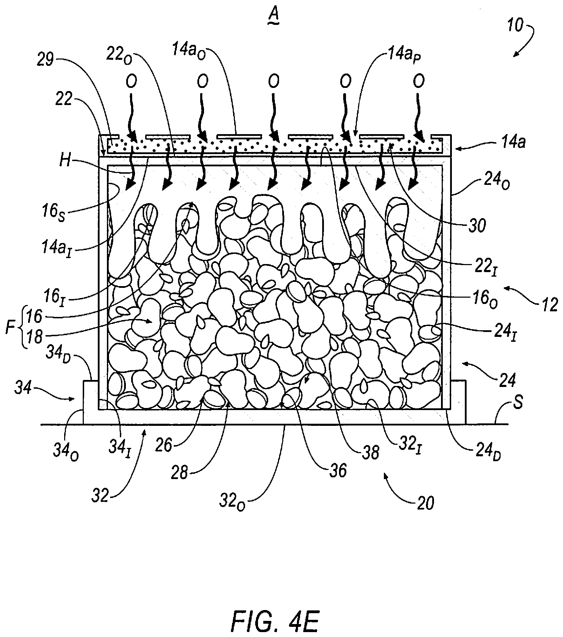

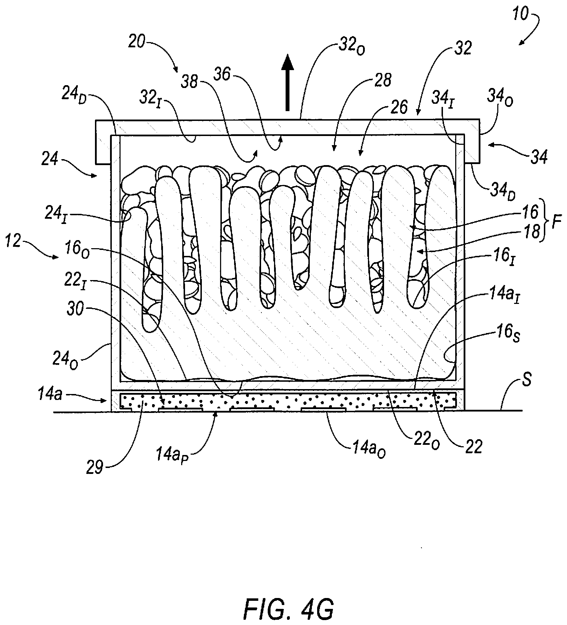

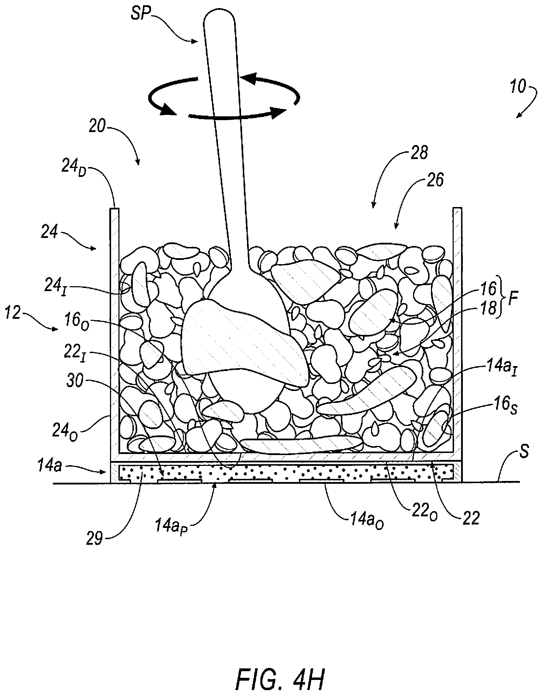

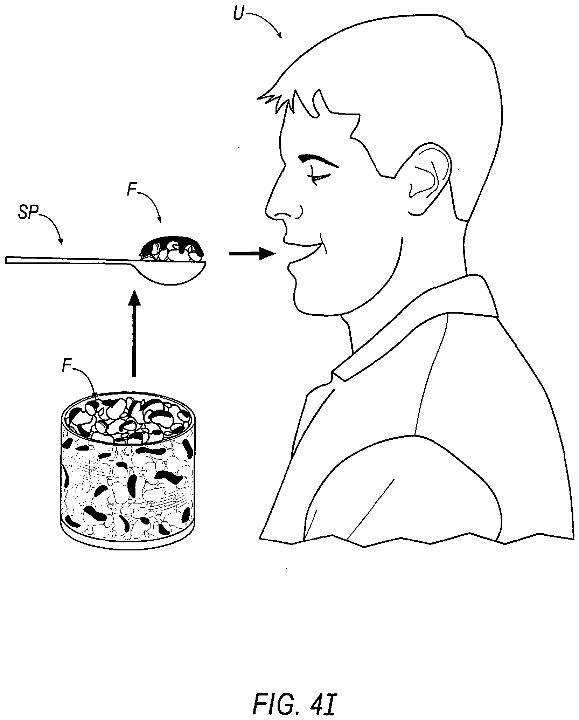

With reference to FIG. 1, an assembly 10 is shown. The assembly 10 includes a plurality of members defining foodstuff packaging (see, e.g., reference numerals 12, 14, 20), a first foodstuff (see, e.g., reference numeral 16) and a second foodstuff (see, e.g., reference numeral 18). When the assembly 10 is assembled (see, e.g., FIGS. 2F or 2E'), the first foodstuff 16 may be separated from, and not comingled throughout, the second foodstuff 18. The assembly 10 may be subsequently activated (see, e.g., FIGS. 3B-3C, 4C-4D) by a user U (see, e.g., FIG. 4I) in order to cause a portion (see, e.g., reference numeral 14a) of the foodstuff packaging 12, 14, 20 to impart heat (see, e.g., reference letter H in FIGS. 4C-4F) to the first foodstuff 16; the heat H imparted to the first foodstuff 16 may cause the first foodstuff 16 to transition or phase change (e.g., melt) from a first state (e.g., solid) to a second state (e.g., liquid). With the assistance of gravity, in the second state the first foodstuff 16 may seep or ooze into the second foodstuff 18 such that the first foodstuff 16 is comingled throughout the second foodstuff 18 while the first foodstuff 16 and the second foodstuff 18 are contained within another portion (see, e.g., reference numeral 12) of the foodstuff packaging 12, 14, 20 in order to define a comingled foodstuff (see, e.g., reference letter F in FIGS. 3C-3D, 4E-4I) that is contained within the foodstuff packaging 12, 14, 20. The user U may then remove (see, e.g., FIGS. 4G-4H) another portion (see, e.g., reference numeral 20) of the foodstuff packaging 12, 14, 20 in order to gain access (see, e.g., FIG. 4H) to the portion (see, e.g., reference numeral 12) of the foodstuff packaging 12, 14, 20 that contains the comingled foodstuff F in order to subsequently consume (see, e.g., FIG. 4I) the comingled foodstuff F.

Referring to FIG. 1, the assembly 10 may include a foodstuff container 12, a heating element 14, a first foodstuff 16, a second foodstuff 18, and a closure 20. FIGS. 2A-2F illustrate a first methodology for assembling the assembly 10. FIGS. 2A'-2E' illustrate a second methodology for assembling the assembly 10. The heating element (14) in one possible embodiment could be attached to the foodstuff container (12) and can be formed either with the foodstuff container or with the closure (20).

Referring to FIG. 2A, the foodstuff container 12 may include a base portion 22 connected to a sidewall portion 24. The base portion 22 includes an inner surface 22_{I} and an outer surface 22_{O}. The sidewall portion 24 includes an inner surface 24_{I}, an outer surface 24_{O}, and a distal end surface 24_{D} that connects the inner surface 24_{I} to the outer surface 24_{O}.

The inner surface 22_{I} of the base portion 22 and the inner surface 24_{I} of the sidewall portion 24 define a foodstuff-receiving cavity 26 of the foodstuff container 12. Access to the foodstuff-receiving cavity 26 is formed by an opening 28 defined by the inner surface 24_{I} of the sidewall portion 24 and the distal end surface 24_{D} of the sidewall portion 24.

With continued reference to FIGS. 1 and 2A, the heating element 14 includes a first portion 14a and a second portion 14b. Referring to FIG. 2A, the first portion 14a of the heating element 14 includes an inner surface 14a_{I}, an outer surface 14ao, and one or more passages 14a_{P} formed in the outer surface 14ao. The second portion 14b of the heating element 14 includes an inner surface 14b_{I} and an outer surface 14bo. The inner surface 14b_{I} of the second portion 14b of the heating element 14 is disposed adjacent the outer surface 14ao of the first portion 14a of the heating element 14. The inner surface 14a_{I} of the first portion 14a of the heating element 14 is disposed adjacent the outer surface 22_{O} of the base portion 22. The second portion 14b of the heating element 14 may be a removable film member that is discarded into a trash receptacle T once the inner surface 14b_{I} of the second portion 14b of the heating element 14 is selectively-detached from (and no longer disposed adjacent to) the outer surface 14ao of the first portion 14a of the heating element 14.

The first portion 14a of the heating element 14 further defines a cavity 29. The cavity 29 may include a chemically-activated material 30. For example, the chemically-activated material 30 may be disposed within the cavity 29. The chemically-activated material 30 may include an air-activated material, and more particularly, an oxygen-activated material, such as, for example, zinc. When the inner surface 14bi of the second portion 14b of the heating element 14 is disposed adjacent the outer surface 14ao of the first portion 14a, the second portion 14b may prevent fluid communication between the cavity 29 and the atmosphere A through the one or more passages 14a_{P} formed in the outer surface 14ao of the first portion 14a. In particular, when the inner surface 14bi of the second portion 14b of the heating element 14 is disposed adjacent the outer surface 14ao of the first portion 14a, the one or more passages 14a_{P} may be prevented from fluidly communicating with surrounding atmosphere A (thereby preventing oxygen O from surrounding atmosphere A to pass through the one or more passages 14a_{P} formed in the outer surface 14ao of the first portion 14a of the heating element 14 for subsequently contacting the chemically-activated material 30). However, as will be described in the following disclosure at FIGS. 3B-3C, 4C-4D, a user U may selectively activate the chemically-activated material 30 by removing the second portion 14b of the heating element 14 from the first portion 14a of the heating element 14 in order to permit the oxygen O from the surrounding atmosphere A to pass through the one or more passages 14a_{P} formed in the outer surface 14ao of the first portion 14a and into the cavity 29 such that the oxygen O may come into contact with the chemically-activated material 30. When the oxygen O comes into contact with the chemically-activated material 30, a chemical reaction takes place (e.g., the zinc defining the chemically-activated material 30 becomes zinc oxide), which causes the chemically-activated material 30 to generate heat.

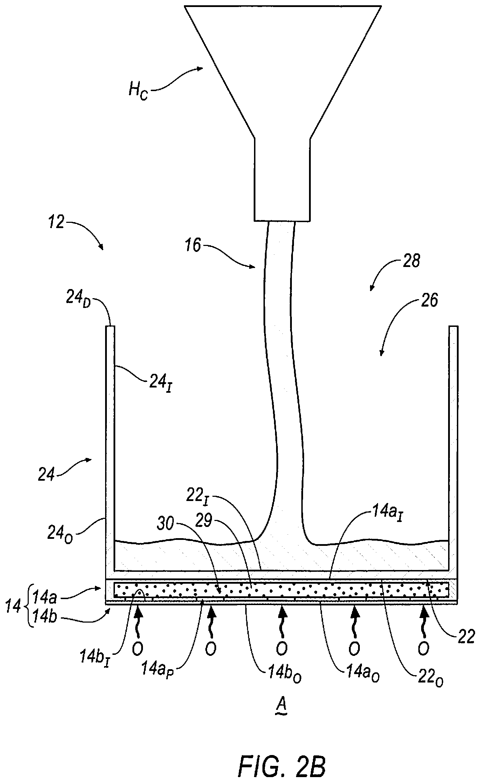

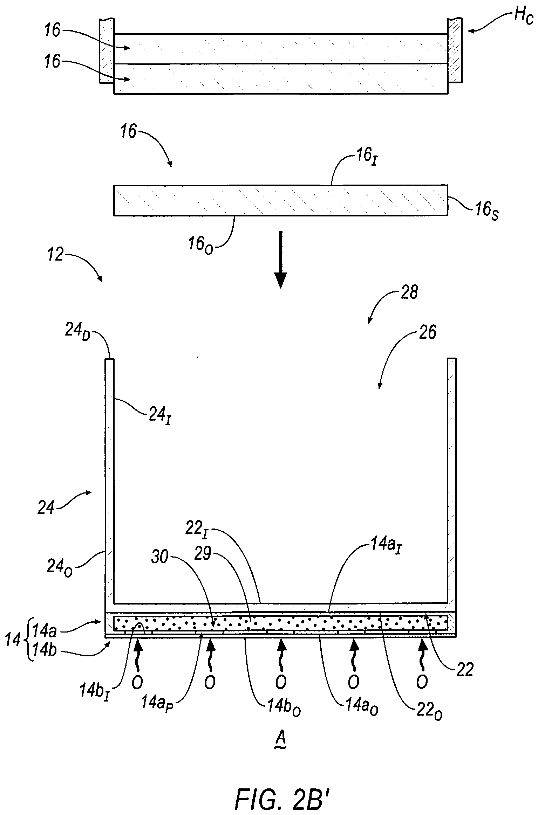

Referring to FIG. 2B, the first foodstuff 16 (e.g., chocolate, fudge or the like) may be deposited into the foodstuff-receiving cavity 26 of the foodstuff container 12. In an example, as seen in FIG. 2B, the first foodstuff 16 may be deposited into the foodstuff-receiving cavity 26 of the foodstuff container 12 in a liquid state or a solid state. If the first foodstuff 16 is in liquid state when it is deposited into the foodstuff-receiving cavity 26 of the foodstuff container 12, the first foodstuff 16 may be extruded into the foodstuff-receiving cavity 26 of the foodstuff container 12 from an extruder or first foodstuff hopper Hc.

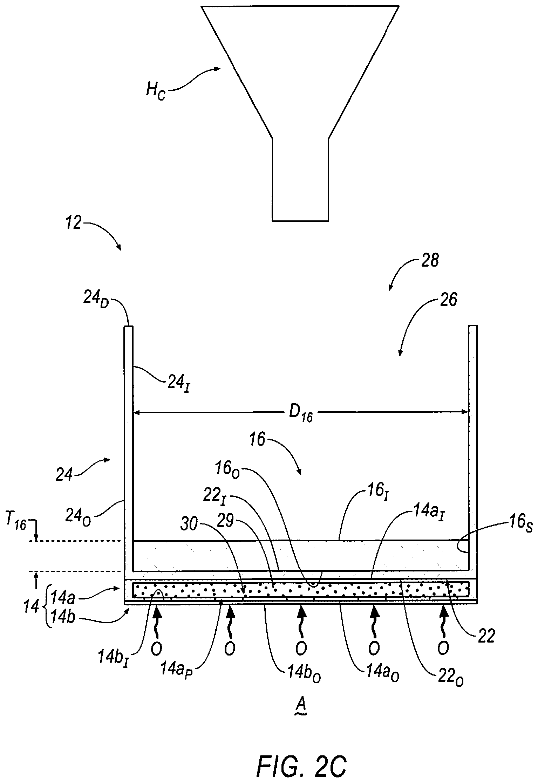

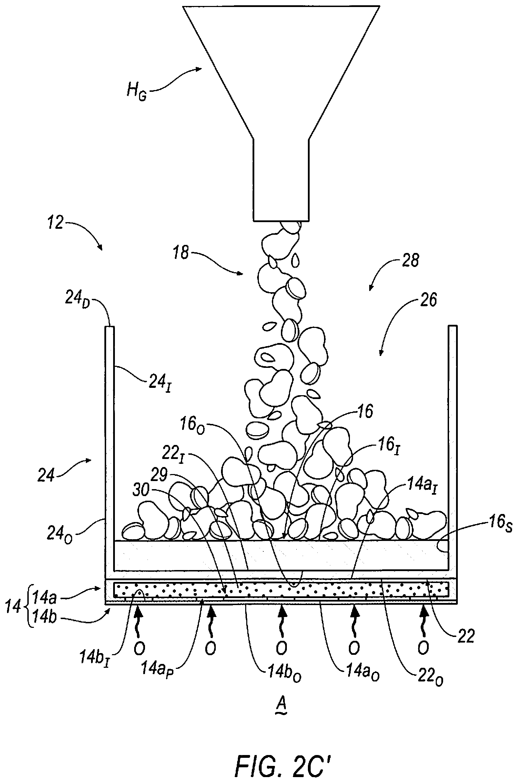

Referring to FIG. 2C, after a predetermined period of time, the first foodstuff 16 may be permitted to cure in order to permit the first foodstuff 16 to transition from a liquid state to a solid state. In an example, when the first foodstuff 16 is cured into a solid state, the first foodstuff 16 may stick to but may also be removably attached to at least a portion of the inner surface 22_{I} of the base portion 22 of the foodstuff container 12. In some instances, when the first foodstuff 16 is cured into a solid state, the first foodstuff 16 may be attached to or disposed over (i) all of the inner surface 22_{I} of the base portion 22 of the foodstuff container 12 and (ii) a portion of the inner surface 24_{I} of the sidewall portion 24 of the foodstuff container 12 that extends away from the inner surface 22_{I} of the base portion 22.

As seen in FIG. 2C, when the first foodstuff 16 has cured into a solid state, the first foodstuff 16 may be defined by an upper surface 16_{I}, a lower surface 16_{O} and a side surface 16_{S} connecting the upper surface 16_{I} to the lower surface 16_{O}. The first foodstuff 16 may also be defined by a thickness T₁₆ extending between the upper surface 16_{I} and the lower surface 16_{O}. Furthermore, if the inner surface 24_{I} of the sidewall portion 24 of the foodstuff container 12 defines the foodstuff-receiving cavity 26 of the foodstuff container 12 to have a substantially cylindrical shape, the side surface 16_{S} of the first foodstuff 16 may define the first foodstuff 16 to have a diameter D₁₆.

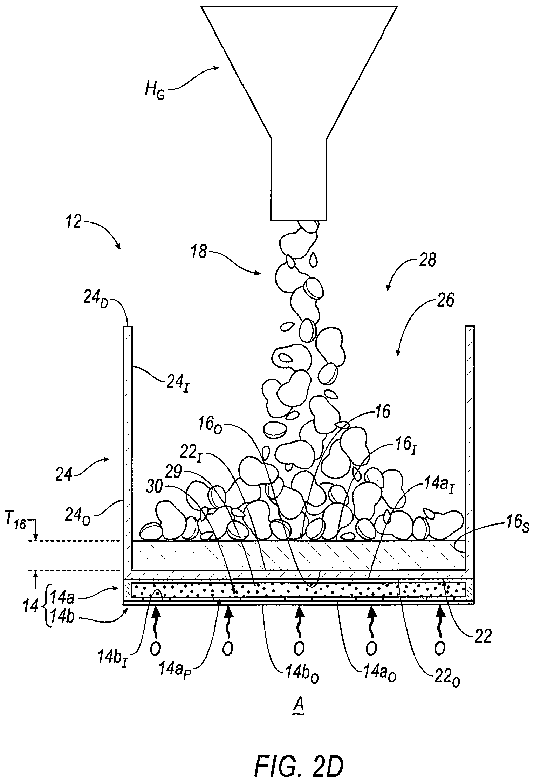

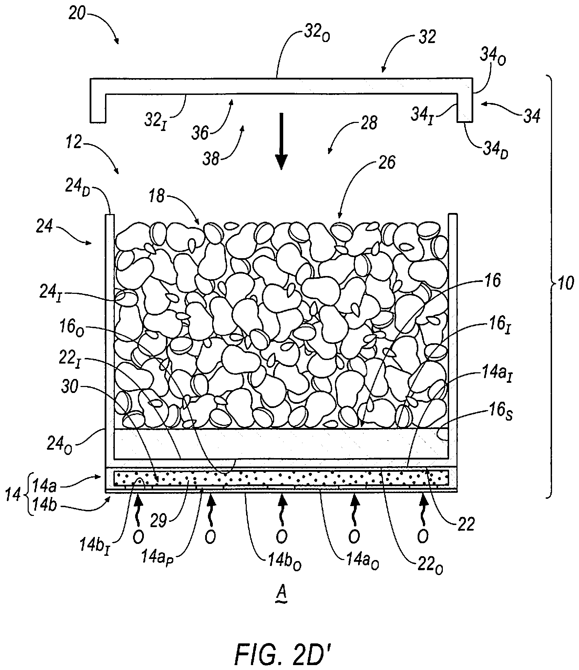

Referring to FIG. 2D, after the first foodstuff 16 has cured into a solid state, the second foodstuff 18 may be deposited into the foodstuff-receiving cavity 26 of the foodstuff container 12. The second foodstuff material 18 may include one or more of, but is not limited to: granola, muesli, oats, seeds, nuts, cereal or the like. Although the second foodstuff 18 is shown to include a plurality of pieces or units of foodstuff, the second foodstuff 18 may include one piece or one unit of foodstuff that is deposited into the foodstuff-receiving cavity 26.

In some examples (with respect to the present embodiment and subsequent embodiments described in the present disclosure with respect to assemblies 100, 200, 300, 400), the second foodstuff 18 may be defined as a "low moisture" food material. Conversely, an exemplary "high moisture" food material may be defined to include, for example, ice cream, chocolate, fudge or the like. Therefore, in some instances, when the second foodstuff 18 includes, for example, one or more of granola, muesli, oats, seeds, nuts, cereal or the like, such foodstuff is known to have a relatively low moisture content, and, therefore, may be deemed or defined as being an exemplary "low moisture" foodstuff material. Accordingly, in some instances, the second foodstuff 18 may include a "low moisture" foodstuff material, and, in being differentiated from the first foodstuff 16, the second foodstuff 18 may be deemed or defined in the negative context as not being a "high moisture" foodstuff material. Furthermore, in other examples, the first foodstuff 16 and the second foodstuff 18 may be defined as having approximately the same moisture content.

In an example, as seen in FIG. 2D, the second foodstuff 18 may deposited into the foodstuff-receiving cavity 26 of the foodstuff container 12 from a second foodstuff hopper H_{G}. The second foodstuff 18 may be contained with the foodstuff-receiving cavity 26 and arranged upon and over the upper surface 16_{I} of the first foodstuff 16 such that that second foodstuff 18 is separated from, and not comingled or mixed with, the first foodstuff 16.

As seen in FIG. 2E, the second foodstuff hopper H_{G} may meter any desirable amount of the second foodstuff 18 into the foodstuff-receiving cavity 26. In some instances, the second foodstuff hopper H_{G} may meter an amount of the second foodstuff 18 that is approximately equal to a remainder of a volume of the foodstuff-receiving cavity 26 that is not occupied by the first foodstuff 16.

Referring to FIG. 2E, the closure 20 includes at least a base portion 32. The base portion 32 includes an inner surface 32_{I} and an outer surface 32_{O}.

Optionally, the closure 20 may also include a sidewall portion 34 connected to the base portion 32. The sidewall portion 34 includes an inner surface 34_{I}, an outer surface 34_{O}, and a distal end surface 34_{D} that connects the inner surface 34_{I} to the outer surface 34_{O}.

The inner surface 32_{I} of the base portion 32 and the inner surface 34_{I} of the sidewall portion 34 define a container-receiving cavity 36. Access to the container-receiving cavity 36 is formed by an opening 38 defined by the inner surface 34_{I} of the sidewall portion 34 and the distal end surface 34_{D} of the sidewall portion 34.

Referring to FIG. 2F, in some instances, if the closure 20 is not formed with the sidewall portion 34 such that the closure 20 includes only the base portion 32, the inner surface 32_{I} of the base portion 32 of the closure 20 may be removably attached to the distal end surface 24_{D} of the sidewall portion 24 of the foodstuff container 12. Attachment of the inner surface 32_{I} of the base portion 32 of the closure 20 to the distal end surface 24_{D} of the sidewall portion 24 of the foodstuff container 12 may be conducted in any desirable methodology such as, for example, ultrasonic welding, a friction-fit connection or the like. However, if the closure 20 is formed with and includes the sidewall portion 34, the inner surface 34_{I} of the sidewall portion 34 of the closure 20 may include a threaded surface (not shown) that cooperates with a corresponding threaded surface (not shown) formed upon a portion of the outer surface 24_{O} of the sidewall portion 24 of the foodstuff container 12 in order to removably attach the closure 20 to the foodstuff container 12.

Referring to FIGS. 2A' -2E' an alternative methodology for assembling the assembly 10 is described. The alternative methodology for assembling the assembly 10 of FIGS. 2A'-2E' is substantially similar to the methodology for assembling the assembly 10 of FIGS. 2A-2F. The methodology for assembling the assembly 10 of FIGS. 2A'-2E' does, however, differ from the methodology for assembling the assembly 10 of FIGS. 2A-2F as shown and described below at FIGS. 2B'-2C'; therefore, the following description related to the methodology associated with the assembling of the assembly 10 at FIGS. 2A'-2E' is limited to the disclosure found at FIGS. 2B'-2C' (i.e., the remaining disclosure associated with the assembly of the assembly 10 at FIGS. 2A'-2E' is substantially the same as the disclosure associated with the assembly of the assembly 10 at FIGS. 2A-2F).

Referring to FIG. 2B', the first foodstuff 16 (e.g., chocolate, fudge or the like) may be deposited into the foodstuff-receiving cavity 26 of the foodstuff container 12. In an example, as seen in FIG. 2B', the first foodstuff 16 may be deposited into the foodstuff-receiving cavity 26 of the foodstuff container 12 in a pre-cured, substantially solid form (rather than in liquid form as described above at FIG. 2B). If the first foodstuff 16 is in a pre-cured, substantially solid form when it is deposited into the foodstuff-receiving cavity 26 of the foodstuff container 12, the first foodstuff 16 may be metered from a first foodstuff hopper H_{C} that may include, for example, a magazine of prefabricated first foodstuff 16 members that are in a pre-cured, substantially solid form.

Referring to FIG. 2C', the first foodstuff 16 may be removably attached to or, alternatively, disposed over at least a portion of the inner surface 22_{I} of the base portion 22 of the foodstuff container 12. In some instances, the first foodstuff 16 may be attached to or disposed over all of the inner surface 22_{I} of the base portion 22 of the foodstuff container 12 and a portion of the inner surface 24_{I} of the sidewall portion 24 of the foodstuff container 12 that extends away from the inner surface 22_{I} of the base portion 22 of the foodstuff container 12.

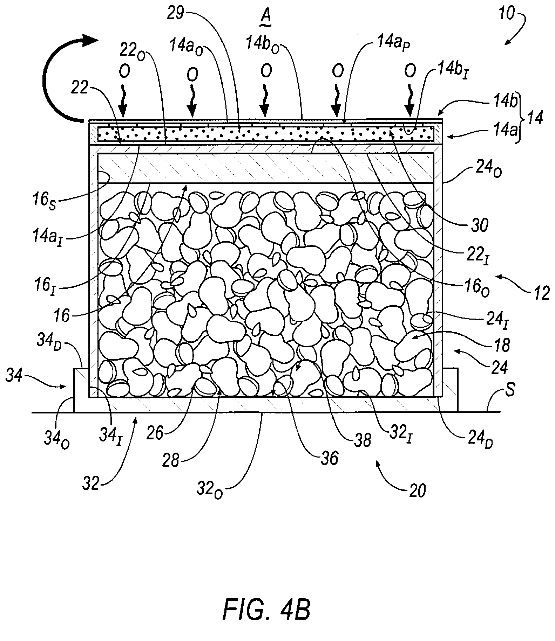

Referring to FIGS. 3A-3D and 4A-4I, a method of utilizing the assembly 10 of FIG. 1 is described. Referring to FIGS. 3A and 4A, the outer surface 14bo of the second portion 14b of the heating element 14 may be first optionally arranged upon a support surface S such that the assembly 10 is arranged in a "right-side-up" orientation upon the support surface S. Then, as seen in FIGS. 3B and 4B, the outer surface 32_{O} of the base portion 32 of the closure 20 may be arranged upon the support surface S such that the assembly 10 is arranged in an "up-side-down" orientation upon the support surface S.

Referring to FIGS. 3B and 4B, once the assembly 10 is arranged in the "up-side-down" orientation upon the support surface S, the second portion 14b of the heating element 14, which may be a removable film member, is then selectively-detached from the outer surface 14ao of the first portion 14a of the heating element 14. As seen in FIG. 3C, once removed from the first portion 14a of the heating element 14, the second portion 14b of the heating element 14 may be discarded into a trash receptacle T.

Referring to FIGS. 3C and 4C-4D, once the second portion 14b of the heating element 14 is selectively-detached from the first portion 14a of the heating element 14, the chemically-activated material 30 contained within the cavity 29 of the first portion 14a of the heating element 14 is selectively activated. Activation of the chemically-activated material 30 contained within the first portion 14a of the heating element 14 occurs when oxygen O from surrounding atmosphere A is permitted to be in fluid communication with the chemically-activated material 30. As described above, when the inner surface 14b_{I} of the second portion 14b of the heating element 14 is disposed adjacent the outer surface 14ao of the first portion 14a, the one or more passages 14a_{P} formed in the outer surface 14ao of the first portion 14a are not permitted to be in fluid communication with surrounding atmosphere A (thereby not permitting oxygen O from surrounding atmosphere A to pass through the one or more passages 14a_{P} formed in the outer surface 14ao of the first portion 14a of the heating element 14 for subsequently contacting the chemically-activated material 30). However, once the second portion 14b of the heating element 14 is removed from the first portion 14a of the heating element 14 as described above, an oxygen barrier formed by the second portion 14b of the heating element 14 no longer exists, and, as a result, oxygen O from surrounding atmosphere A is permitted to pass through the one or more passages 14a_{P} formed in the outer surface 14ao of the first portion 14a such that the oxygen O may come into contact with the chemically-activated material 30. When the oxygen O comes into contact with the chemically-activated material 30, a chemical reaction takes place (e.g., the zinc defining the chemically-activated material 30 becomes zinc oxide), which causes the chemically-activated material 30 to generate heat H (see, e.g., FIG. 4C).

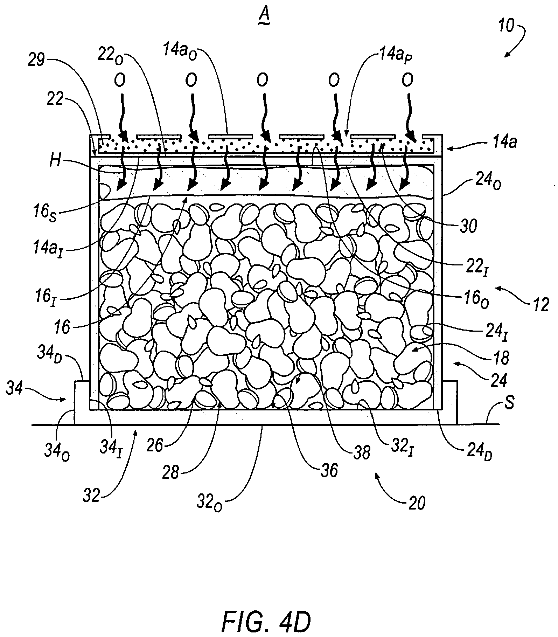

Referring to FIGS. 3D and 4D-4F, the heat H generated by the chemically-activated material 30 of the first portion 14a of the heating element 14 is passed through the base portion 22 of the foodstuff container 12 such that the heat H is ultimately imparted into and absorbed by the first foodstuff 16. Comparatively, as seen in FIGS. 4C-4F, the heat H causes the first foodstuff 16 to transition from a substantially solid state (see, e.g., FIG. 4C) to a melted, substantially liquid state (see, e.g., FIGS. 4D-4F). As seen in FIGS. 4D-4F, as the first foodstuff 16 transitions to a melted, substantially liquid form, the first foodstuff 16, with the assistance of gravity, detaches from one or more of the inner surface 22_{I} of the base portion 22 of the foodstuff container 12 and the inner surface 24_{I} of the sidewall portion 24 of the foodstuff container 12 such that the first foodstuff 16 vertically seeps or oozes downwardly and into the second foodstuff 18 such that the first foodstuff 16 is comingled throughout the second foodstuff 18 to define a comingled foodstuff F that is contained within foodstuff container 12.

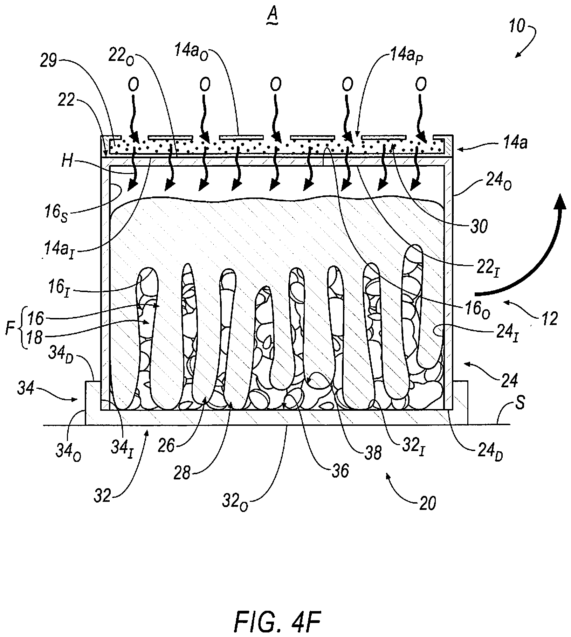

Referring to FIGS. 4F-4G, the container 12, the heating element 14 and the closure 20 is then returned to the "right-side-up" orientation upon the support surface S that that the outer surface 14ao of the first portion 14a of the heating element 14 is arranged upon the support surface S. Then, as seen in FIGS. 4G-4H, the closure 20 may be selectively-removed from the foodstuff container 12 such that a user U (see, e.g., FIG. 4I) may access the foodstuff-receiving cavity 26 of the foodstuff container 12 that contains the comingled foodstuff F. If desired, as seen in FIG. 4H, the user U may arrange a utensil (e.g., a spoon SP) within the foodstuff-receiving cavity 26 of the foodstuff container 12 for mixing or stirring the comingled foodstuff F. Alternatively, the closure 20 could remain attached to the foodstuff container 12 and the comingled foodstuff F could be shaken. Then, as seen in FIG. 4I, the user U may consume the comingled foodstuff F.

In view of the above-described functionality of the heating element 14, it is seen that the first foodstuff 16 is heated H by a portion (i.e., the heating element 14) of the foodstuff packaging 12, 14, 20. In other words, the foodstuff packaging 12, 14, 20 provides a "self-heating" function that avoids the use of a non-packaging, external heat source (e.g., a microwave oven, a gas oven, an electric oven, a stove, fire or the like) for imparting heat to the first foodstuff 16. Furthermore, the arrangement of the heating element 14 in an opposing relationship with respect to the first foodstuff 16 (due to the arrangement of the base portion 22 of the foodstuff container 12 between the heating element 14 and the first foodstuff 16) substantially limits the heat H generated by the heating element 14 to be mostly received by the first foodstuff 16 and not the second foodstuff 18.

Aside from the benefit provided by the "self-heating" functionality of the foodstuff packaging 12, 14, 20 that avoids the use of a non-packaging external heat source to generate heat for melting the first foodstuff 16, use of some external heat sources (e.g., a microwave oven) may damage and/or ruin the second foodstuff 18 when the first foodstuff 16 and the second foodstuff 18 are both contained within foodstuff packaging (such as the foodstuff packaging 12, 14, 20 associated with the assembly 10). For example, should a microwave oven be utilized to impart heat to the first foodstuff 16, the first foodstuff 16 may, as desired, transition from a liquid state to a solid state; however, if the second foodstuff 18 is, for example, a "low moisture" food product, the second foodstuff 18 may undesirably burn (as a result of having very little or no moisture, which may be evaporated upon being heated) when microwave energy is imparted into the second foodstuff 18. Therefore, although some of the heat H generated by the heating element 14 may be imparted into the second foodstuff 18, the heat H from the heating element 14 may merely warm the second foodstuff 18 while also avoiding any damage / burning of the second foodstuff 18, which would otherwise occur if a non-packaging external heat source (e.g., a microwave oven) were to be utilized for heating the first foodstuff 16.

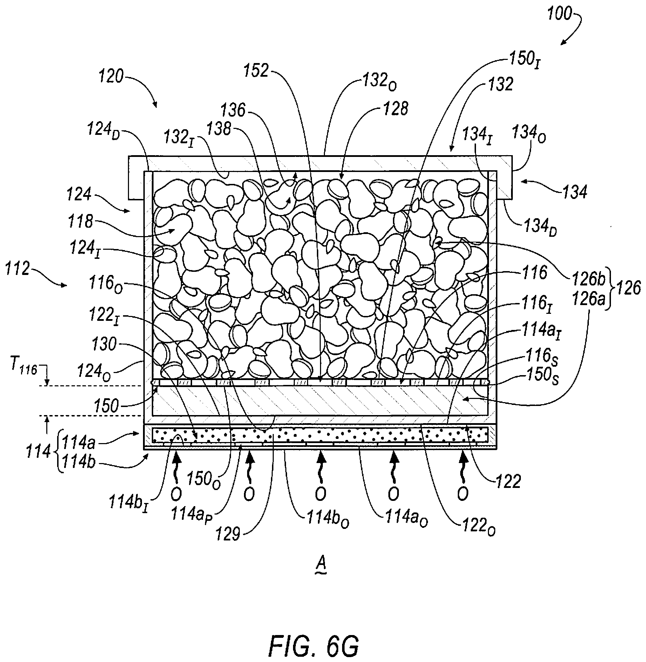

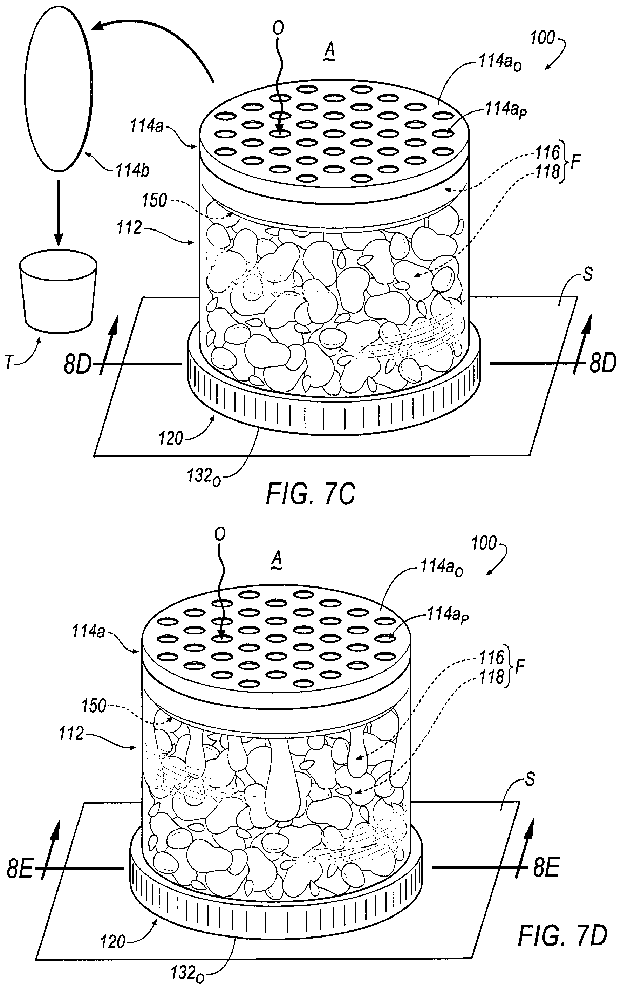

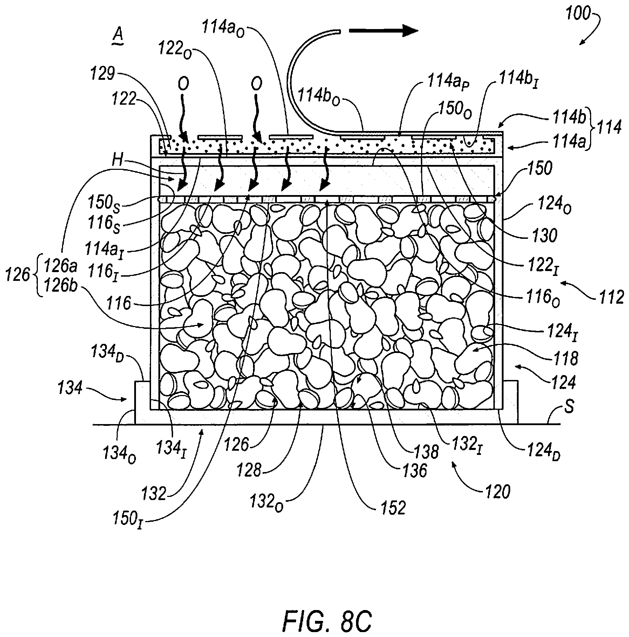

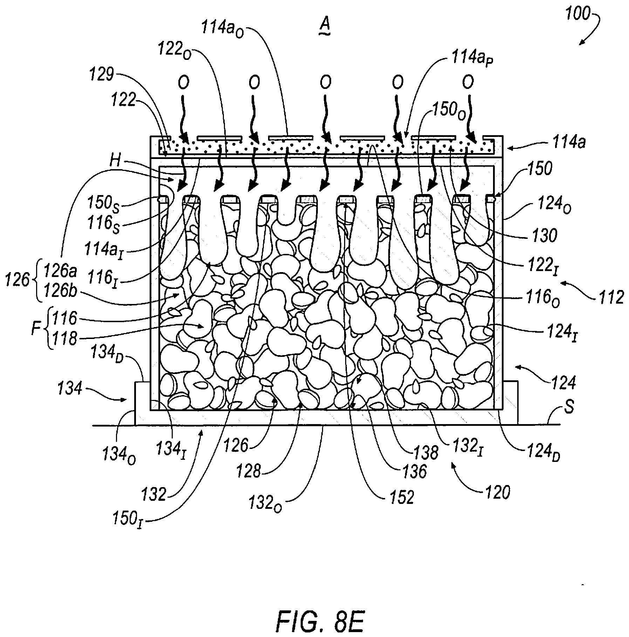

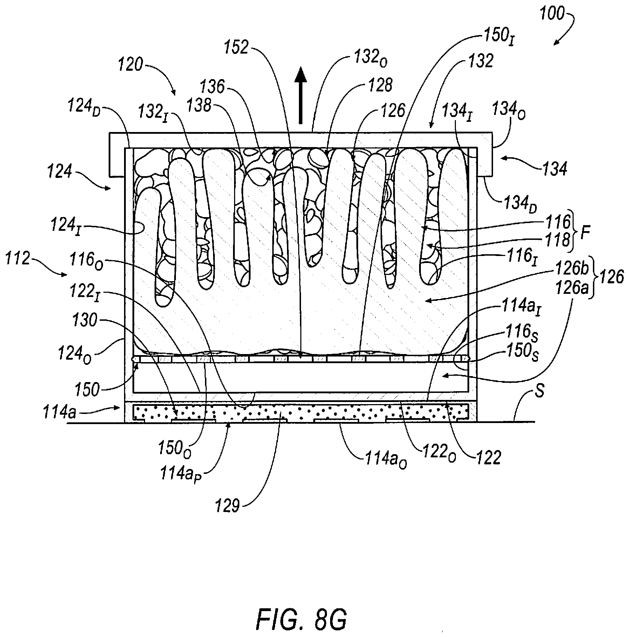

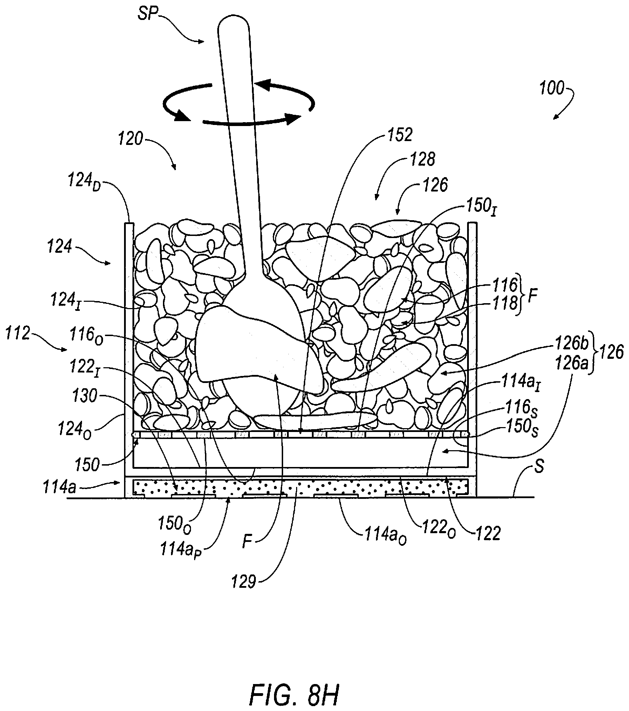

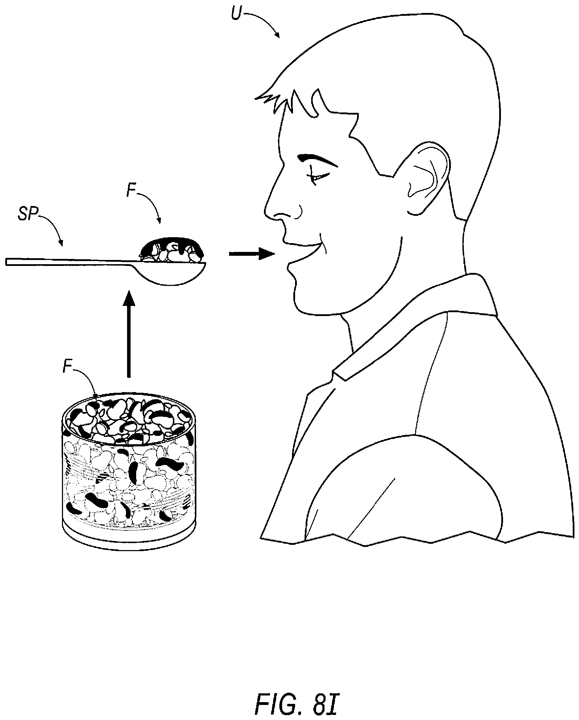

FIG. 5 illustrates an exemplary assembly, which is shown generally at 100. The assembly 100 includes a plurality of members defining foodstuff packaging (see, e.g., reference numerals 112, 114, 120, 150), a first foodstuff (see, e.g., reference numeral 116) and a second foodstuff (see, e.g., reference numeral 118). When the assembly 100 is assembled (see, e.g., FIG. 6G), the first foodstuff 116 may be separated from, and not comingled throughout, the second foodstuff 118. The assembly 100 may be subsequently activated (see, e.g., FIGS. 7B-7C, 8C-8D) by a user U (see, e.g., FIG. 8I) in order to cause a portion (see, e.g., reference numeral 114a) of the foodstuff packaging 112, 114, 120, 150 to impart heat (see, e.g., reference letter H in FIGS. 8C-8F) to the first foodstuff 116; the heat H imparted to the first foodstuff 116 causes the first foodstuff 116 to phase change (e.g., melt) from a first state (e.g., solid) to a second state (e.g., liquid). With the assistance of gravity, in the second state the first foodstuff 116 vertically seeps or oozes into the second foodstuff 118 such that the first foodstuff 116 is comingled throughout the second foodstuff 118 while the first foodstuff 116 and the second foodstuff 118 are contained within another portion (see, e.g., reference numeral 112) of the foodstuff packaging 112, 114, 120, 150 in order to define a comingled foodstuff (see, e.g., reference letter F in FIGS. 7C-7D, 8E-8I) that is contained within the foodstuff packaging 112, 114, 120, 150. The user U may then remove (see, e.g., FIGS. 8G-8I) another portion (see, e.g., reference numeral 120) of the foodstuff packaging 112, 114, 120, 150 in order to gain access (see, e.g., FIG. 8H) to the portion (see, e.g., reference numeral 112) of the foodstuff packaging 112, 114, 120, 150 that contains the comingled foodstuff F in order to subsequently consume (see, e.g., FIG. 8I) the comingled foodstuff F.

Referring to FIG. 5, the assembly 100 may include a foodstuff container 112, a heating element 114, a first foodstuff 116, a second foodstuff 118, a closure 120, and a foodstuff separator 150. FIGS. 6A-6G illustrate a methodology for assembling the assembly 100.

Referring to FIG. 6A, the foodstuff container 112 may include a base portion 122 connected to a sidewall portion 124. The base portion 122 may include an inner surface 122_{I} and an outer surface 122_{O}. The sidewall portion 124 may include an inner surface 124_{I}, an outer surface 124_{O} and a distal end surface 124_{D} connects the inner surface 124_{I} to the outer surface 124_{O}.

The inner surface 122_{I} of the base portion 122 and the inner surface 124_{I} of the sidewall portion 124 define a foodstuff-receiving cavity 126 of the foodstuff container 112. Access to the foodstuff-receiving cavity 126 is formed by an opening 128 defined by the inner surface 124_{I} of the sidewall portion 124 and the distal end surface 124_{D} of the sidewall portion 124.

With continued reference to FIGS. 5 and 6A, the heating element 114 may include a first portion 114a and a second portion 114b. Referring to FIG. 6A, the first portion 114a of the heating element 114 includes an inner surface 114a_{I}, an outer surface 114ao and one or more passages 114a_{P} formed in the outer surface 114a_{O}. The second portion 114b of the heating element 114 includes an inner surface 114b_{I} and an outer surface 114bo. The inner surface 114b_{I} of the second portion 114b of the heating element 114 is disposed adjacent the outer surface 114ao of the first portion 114a of the heating element 114. The inner surface 114a_{I} of the first portion 114a of the heating element 114 is disposed adjacent the outer surface 122_{O} of the base portion 122. The second portion 114b of the heating element 114 may be a removable film member that is discarded into a trash receptacle T once the inner surface 114b_{I} of the second portion 114b of the heating element 114 is selectively-detached from (and no longer disposed adjacent to) the outer surface 114ao of the first portion 114a of the heating element 114.

The first portion 114a of the heating element 114 further defines a cavity 129 that may include a chemically-activated material 130. For example, the chemically-activated material 130 may be disposed within the cavity 129. The chemically-activated material 130 may include an air-activated material, and more particularly, an oxygen-activated material, such as, for example, zinc. When the inner surface 114b_{I} of the second portion 114b of the heating element 114 is disposed adjacent the outer surface 114ao of the first portion 114a, the second portion 114b may prevent fluid communication between the cavity 129 and the atmosphere A through the one or more passages 114a_{P}. In particular, when the inner surface 114bi of the second portion 114b is disposed adj acent the outer surface 114ao of the first portion 114a, the one or more passages 14a_{P} are prevented from fluidly communicating with surrounding atmosphere A (thereby not permitting oxygen O from surrounding atmosphere A to pass through the one or more passages 114a_{P} formed in the outer surface 114ao of the first portion 114a of the heating element 114 for subsequently contacting the chemically-activated material 130). However, as will be described in the following disclosure at FIGS. 7B-7C, 8C-8D, a user U may selectively activate the chemically-activated material 130 by removing the second portion 114b of the heating element 114 from the first portion 114a of the heating element 114 in order to permit the oxygen O from the surrounding atmosphere A to pass through the one or more passages 114a_{P} formed in the outer surface 114ao of the first portion 114a and into the cavity 129 such that the oxygen O may come into contact with the chemically-activated material 130. When the oxygen O comes into contact with the chemically-activated material 130, a chemical reaction takes place (e.g., the zinc defining the chemically-activated material 130 becomes zinc oxide), which causes the chemically-activated material 130 to generate heat.

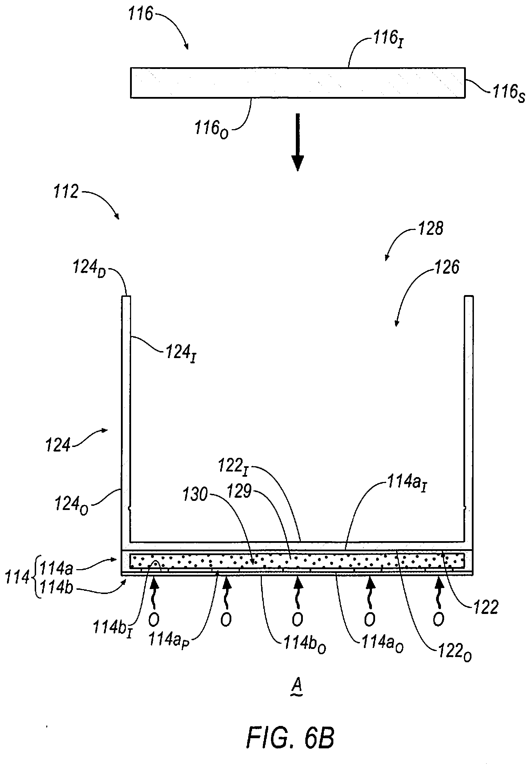

Referring to FIG. 6B, the first foodstuff 116 (e.g., chocolate, fudge or the like) may be deposited into the foodstuff-receiving cavity 126 of the foodstuff container 112. In an example, as seen in FIG. 6B, the first foodstuff 116 may be deposited into the foodstuff-receiving cavity 126 of the foodstuff container 112 in a pre-cured, substantially solid state. If the first foodstuff 116 is in a pre-cured, substantially solid state when it is deposited into the foodstuff-receiving cavity 126 of the foodstuff container 112, the first foodstuff 116 may be metered from a first foodstuff hopper H_{C} that may include, for example, a magazine of prefabricated first foodstuff 116 members that are in a pre-cured, substantially solid form.

The first foodstuff 116 may be defined by an upper surface 116_{I}, a lower surface 116_{O} and a side surface 116s connecting the upper surface 116_{I} to the lower surface 116_{O}. The first foodstuff 116 may also be defined by a thickness T₁₁₆ extending between the upper surface 116_{I} and the lower surface 116_{O}. Furthermore, if the inner surface 124_{I} of the sidewall portion 124 of the foodstuff container 112 defines the foodstuff-receiving cavity 126 of the foodstuff container 112 to have a substantially cylindrical shape, the side surface 116_{S} of the first foodstuff 116 may define the first foodstuff 116 to have a diameter D₁₁₆.

Referring to FIG. 6B, the first foodstuff 116 may be removably attached to or, alternatively, disposed over at least a portion of the inner surface 122_{I} of the base portion 122 of the foodstuff container 112. In some instances, the first foodstuff 116 may be attached to or disposed over all of the inner surface 122_{I} of the base portion 122 of the foodstuff container 112 and a portion of the inner surface 124_{I} of the sidewall portion 124 of the foodstuff container 112 that extends away from the inner surface 122_{I} of the base portion 122 of the foodstuff container 112.

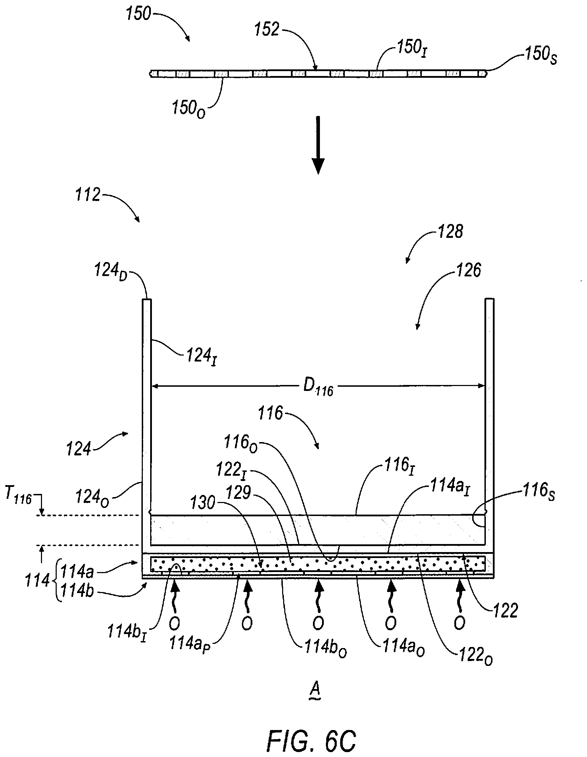

Referring to FIGS. 6C-6D, after the first foodstuff 116 is deposited into the foodstuff-receiving cavity 126 of the foodstuff container 112, the foodstuff separator 150 may be deposited into the foodstuff-receiving cavity 126 of the foodstuff container 112. The foodstuff separator 150 may include an upper surface 150_{I}, a lower surface 150_{O} and a side surface 150s connecting the upper surface 150_{I} to the lower surface 150_{O}. The foodstuff separator 150 is also defined by a thickness T₁₅₀ extending between the upper surface 150_{I} and the lower surface 150_{O}. As seen in FIG. 6D, the lower surface 150_{O} of the foodstuff separator 150 may be disposed adjacent to, or, in a spaced-apart relationship with respect to the upper surface 116_{I} of the first foodstuff 116.

The side surface 150_{S} of the foodstuff separator 150 may include a radially-outwardly-extending projection 150_{S-P}. As seen in FIG. 6D', the radially-outwardly-extending projection 150_{S-P} may be registered within a recess 124_{I-R} formed in the inner surface 124_{I} of the sidewall portion 124 of the foodstuff container 112 for radially connecting the foodstuff separator 150 to the inner surface 124_{I} of the sidewall portion 124 of the foodstuff container 112. When the foodstuff separator 150 is connected to the inner surface 124_{I} of the sidewall portion 124 of the foodstuff container 112, the foodstuff separator 150 separates the foodstuff-receiving cavity 126 of the foodstuff container 112 into a first foodstuff-receiving cavity portion 126a that is sized for receiving an amount of the first foodstuff 116 and a second foodstuff-receiving cavity portion 126b that is sized for receiving an amount of the second foodstuff 118.

Once the foodstuff separator 150 is connected to the inner surface 124_{I} of the sidewall portion 124 of the foodstuff container 112, the foodstuff separator 150 may retain the first foodstuff 116 between the lower surface 150_{O} of the foodstuff separator 150 and the inner surface 122_{I} of the base portion 122 of the foodstuff container 112. Furthermore, if the lower surface 150_{O} of the foodstuff separator 150 is disposed adjacent to the upper surface 116_{I} of the first foodstuff 116, the foodstuff separator 150 may secure the lower surface 116_{O} of the first foodstuff 116 adjacent to the inner surface 122_{I} of the base portion 122 of the foodstuff container 112 in order to promote a transfer of heat H from the heating element 114, through the base portion 122 of the foodstuff container 112 and to the first foodstuff 116.

As seen in FIGS. 5 and 6C-6D, the foodstuff separator 150 also includes a plurality of passages 152 that may extend through the thickness T₁₅₀ of the foodstuff separator 150. As will be described in the following disclosure, when the first foodstuff 116 transitions from a substantially solid state to a substantially liquid state as a result of the application of heat H from the heating element 114 by way of the base portion 122 of the foodstuff container 112, the plurality of passages 152 formed by the foodstuff separator 150 may permit the first foodstuff to seep, ooze or flow-through the plurality of passages 152 formed by the foodstuff separator 150 such that the first foodstuff 116 may flow out of the first foodstuff-receiving cavity portion 126a and into the second foodstuff-receiving cavity portion 126b.

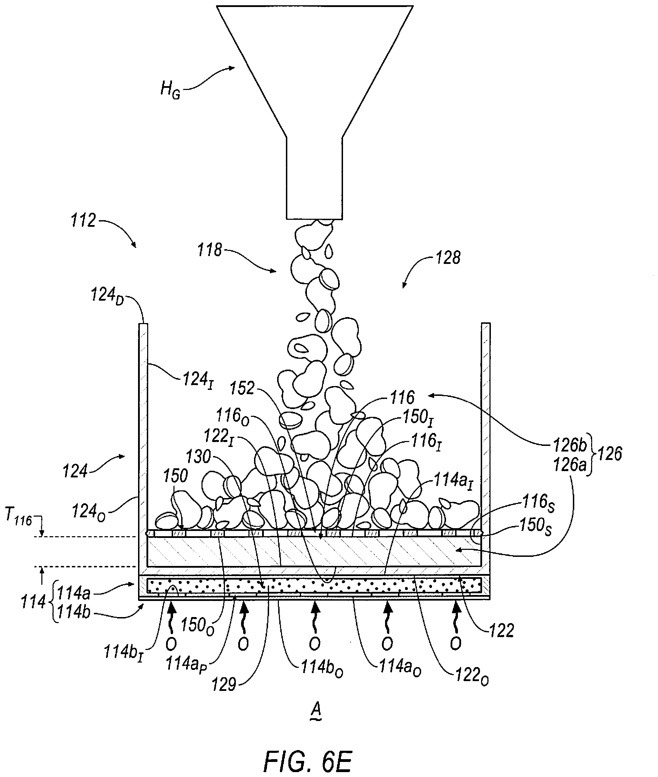

Referring to FIG. 6E, after the foodstuff separator 150 is connected to the inner surface 124_{I} of the sidewall portion 124 of the foodstuff container 112, the second foodstuff 118 may be deposited into the second foodstuff-receiving cavity portion 126b of the foodstuff-receiving cavity 126 of the foodstuff container 112. In an example, as seen in FIG. 6E, the second foodstuff 118 may deposited into the second foodstuff-receiving cavity portion 126b of the foodstuff-receiving cavity 126 of the foodstuff container 112 from a second foodstuff hopper H_{G}. The second foodstuff 118 is contained with the second foodstuff-receiving cavity portion 126b of the foodstuff-receiving cavity 126 and arranged upon and over the upper surface 150_{I} of the foodstuff separator 150 such that that second foodstuff 118 is separated from, and not comingled with, the first foodstuff 116. As seen in FIG. 6E, the second foodstuff hopper H_{G} may meter any desirable amount of the second foodstuff 118 into the second foodstuff-receiving cavity portion 126b of the foodstuff-receiving cavity 126.

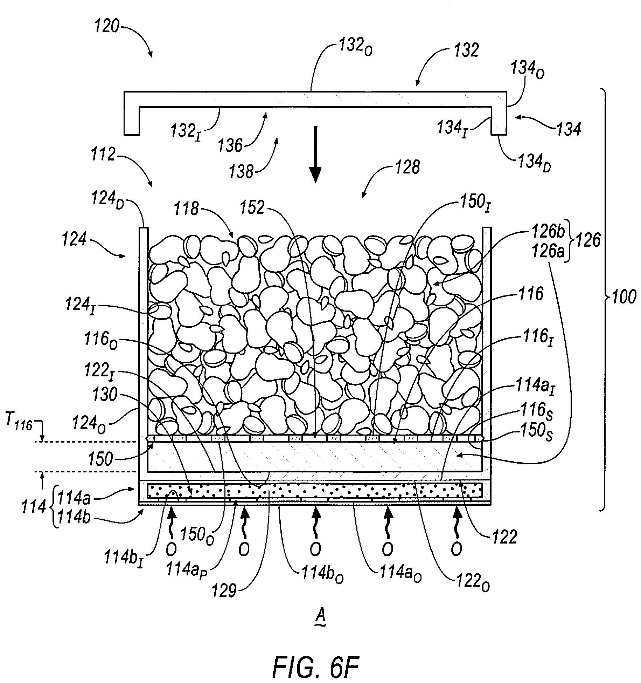

Referring to FIG. 6F, the closure 120 includes at least a base portion 132. The base portion 132 includes an inner surface 132_{I} and an outer surface 132_{O}.

Optionally, the closure 120 may also include a sidewall portion 134 connected to the base portion 132. The sidewall portion 134 includes an inner surface 134_{I}, an outer surface 134_{O} and a distal end surface 134_{D} that connects the inner surface 134_{I} to the outer surface 134_{O}.

The inner surface 132_{I} of the base portion 132 and the inner surface 134_{I} of the sidewall portion 134 define a container-receiving cavity 136. Access to the container-receiving cavity 136 is formed by an opening 138 defined by the inner surface 134_{I} of the sidewall portion 134 and the distal end surface 134_{D} of the sidewall portion 134.

Referring to FIG. 6F, in some instances, if the closure 120 is not formed with the sidewall portion 134 such that the closure 120 includes only the base portion 132, the inner surface 132_{I} of the base portion 132 of the closure 120 may be removably attached to the distal end surface 124_{D} of the sidewall portion 124 of the foodstuff container 112. Attachment of the inner surface 132_{I} of the base portion 132 of the closure 120 to the distal end surface 124_{D} of the sidewall portion 124 of the foodstuff container 112 may be conducted in any desirable methodology such as, for example, ultrasonic welding, a friction-fit connection or the like. However, if the closure 120 is formed with and includes the sidewall portion 134, the inner surface 134_{I} of the sidewall portion 134 of the closure 120 may include a threaded surface (not shown) that cooperates with a corresponding threaded surface (not shown) formed upon a portion of the outer surface 124_{O} of the sidewall portion 124 of the foodstuff container 112 in order to removably attach the closure 120 to the foodstuff container 112.

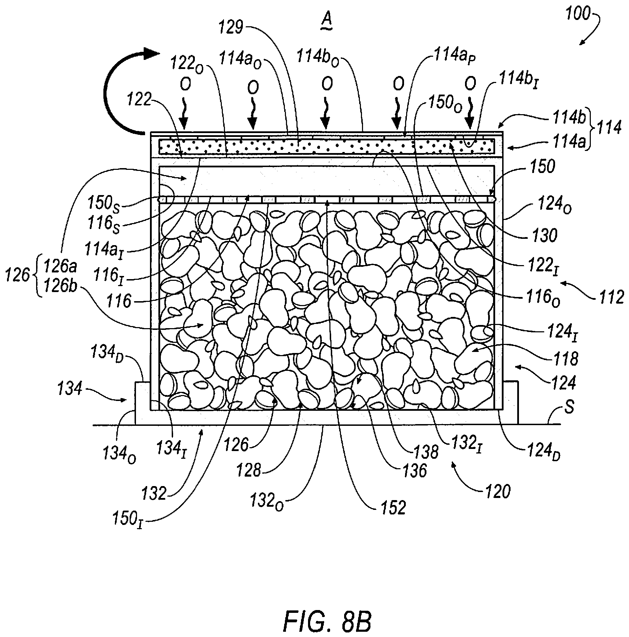

Referring to FIGS. 7A-7D and 8A-8I, a method of utilizing the assembly 100 of FIG. 5 is described. Referring to FIGS. 7A and 8A, the outer surface 114bo of the second portion 114b of the heating element 114 may be arranged upon a support surface S such that the assembly 100 is arranged in a "right-side-up" orientation upon the support surface S. Then, as seen in FIGS. 7B and 8B, the outer surface 132_{O} of the base portion 132 of the closure 120 may be arranged upon the support surface S such that the assembly 100 is arranged in an "up-side-down" orientation upon the support surface S.

Referring to FIGS. 7B and 8B, once the assembly 100 is arranged in the "up-side-down" orientation upon the support surface S, the second portion 114b of the heating element 114, which may be a removable film member, is then selectively-detached from the outer surface 114ao of the first portion 114a of the heating element 114. As seen in FIG. 7C, once removed from the first portion 114a of the heating element 114, the second portion 114b of the heating element 114 may be discarded into a trash receptacle T.

Referring to FIGS. 7C and 8C-8D, once the second portion 114b of the heating element 114 is selectively-detached from the first portion 114a of the heating element 114, the chemically-activated material 130 disposed within the cavity 129 of the first portion 114a of the heating element 114 is selectively activated. Activation of the chemically-activated material 130 contained within the first portion 114a of the heating element 114 occurs when oxygen O from surrounding atmosphere A is permitted to be in fluid communication with the chemically-activated material 130. As described above, when the inner surface 114b_{I} of the second portion 114b of the heating element 114 is disposed adjacent the outer surface 114ao of the first portion 114a, the one or more passages 114a_{P} formed in the outer surface 114a_{O} of the first portion 114a are not permitted to be in fluid communication with surrounding atmosphere A (thereby not permitting oxygen O from surrounding atmosphere A to pass through the one or more passages 114a_{P} formed in the outer surface 114ao of the first portion 114a of the heating element 114 for subsequently contacting the chemically-activated material 130). However, once the second portion 114b of the heating element 114 is removed from the first portion 114a of the heating element 114 as described above, an oxygen barrier formed by the second portion 114b of the heating element 114 no longer exists, and, as a result, oxygen O from surrounding atmosphere A is permitted to pass through the one or more passages 114a_{P} formed in the outer surface 114ao of the first portion 114a such that the oxygen O may come into contact with the chemically-activated material 130. When the oxygen O comes into contact with the chemically-activated material 130, a chemical reaction takes place (e.g., the zinc defining the chemically-activated material 130 becomes zinc oxide), which causes the chemically-activated material 130 to generate heat H (see, e.g., FIG. 8C).

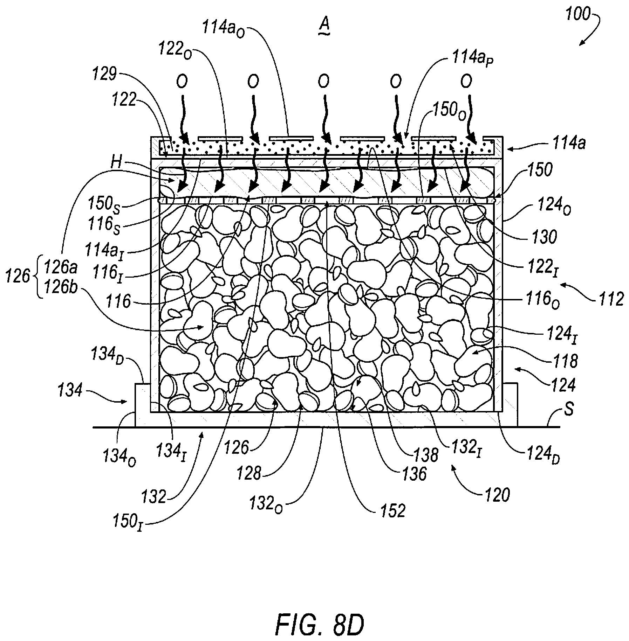

Referring to FIGS. 7D and 8D-8F, the heat H generated by the chemically-activated material 130 of the first portion 114a of the heating element 114 is passed through the base portion 122 of the foodstuff container 112 such that the heat H is ultimately imparted into and absorbed by the first foodstuff 116. Comparatively, as seen in FIGS. 8C-8F, the heat H causes the first foodstuff 116 to transition from a substantially solid state (see, e.g., FIG. 8C) to a melted, substantially liquid state (see, e.g., FIGS. 8D-8F). As seen in FIGS. 8D-8F, as the first foodstuff 116 transitions to a melted, substantially liquid form, the first foodstuff 116, with the assistance of gravity, detaches from one or more of the inner surface 122_{I} of the base portion 122 of the foodstuff container 112 and the inner surface 124_{I} of the sidewall portion 124 of the foodstuff container 112 such that the first foodstuff 116 vertically flows through the plurality of passages 152 formed by the foodstuff separator 150. In so doing, the first foodstuff 116 may flow out of the first foodstuff-receiving cavity portion 126a and into the second foodstuff-receiving cavity portion 126b such that the first foodstuff 116 seeps or oozes downwardly and into the second foodstuff 118. The first foodstuff 116 is comingled throughout the second foodstuff 118 to define a comingled foodstuff F that is contained within foodstuff container 112.

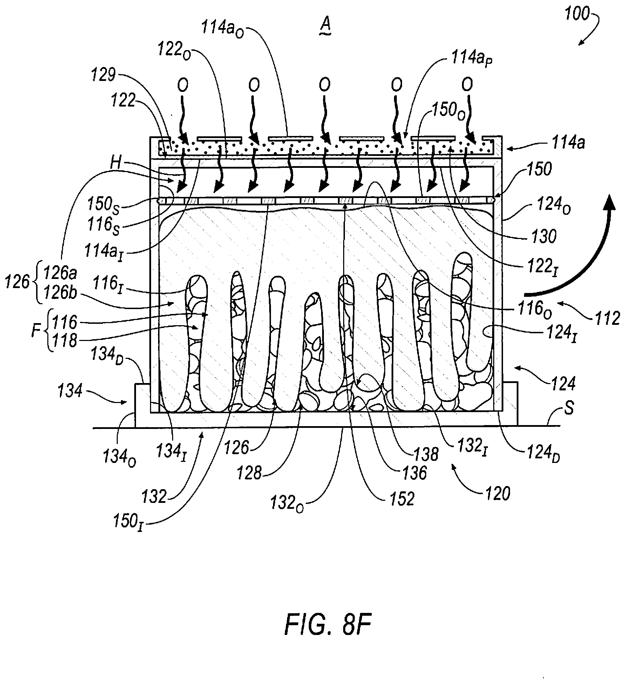

Referring to FIGS. 8F-8G, the container 112, the heating element 114 and the closure 120 is then returned to the "right-side-up" orientation upon the support surface S such that the outer surface 114ao of the first portion 114a of the heating element 114 is arranged upon the support surface S. Then, as seen in FIGS. 8G-8H, the closure 120 may be selectively-removed from the foodstuff container 112 such that a user U (see, e.g., FIG. 8I) may access the foodstuff-receiving cavity 126 of the foodstuff container 112 that contains the comingled foodstuff F. If desired, as seen in FIG. 8H, the user U may arrange a utensil (e.g., a spoon SP) within the foodstuff-receiving cavity 126 of the foodstuff container 112 for mixing or stirring the comingled foodstuff F. Alternatively, the closure 120 could remain attached to the foodstuff container 112 and the comingled foodstuff F could be shaken. Then, as seen in FIG. 8I, the user U may consume the comingled foodstuff F.

In view of the above-described functionality of the heating element 114, it is seen that the first foodstuff 116 is heated H by a portion (i.e., the heating element 114) of the foodstuff packaging 112, 114, 120, 150. In other words, the foodstuff packaging 112, 114, 120, 150 provides a "self-heating" function that avoids the use of a non-packaging, external heat source (e.g., a microwave oven, a gas oven, an electric oven, a stove, fire or the like) for imparting heat to the first foodstuff 116. Furthermore, the arrangement of the heating element 114 in an opposing relationship with respect to the first foodstuff 116 (due to the arrangement of the base portion 122 of the foodstuff container 112 between the heating element 114 and the first foodstuff 116) substantially limits the heat H generated by the heating element 114 to be mostly received by the first foodstuff 116 and not the second foodstuff 118.

Aside from the benefit provided by the "self-heating" functionality of the foodstuff packaging 112, 114, 120, 150 that avoids the use of a non-packaging external heat source to generate heat for melting the first foodstuff 116, use of some external heat sources (e.g., a microwave oven) may damage and/or ruin the second foodstuff 118 when the first foodstuff 116 and the second foodstuff 118 are both contained within foodstuff packaging (such as the foodstuff packaging 112, 114, 120, 150 associated with the assembly 100). For example, should a microwave oven be utilized to impart heat to the first foodstuff 116, the first foodstuff 116 may, as desired, transition from a liquid state to a solid state; however, if the second foodstuff 118 is an exemplary "low moisture" food product, the second foodstuff 118 may undesirably burn (as a result of having very little or no moisture, which may be evaporated upon being heated) when microwave energy is imparted into the second foodstuff 118. Therefore, although some of the heat H generated by the heating element 114 may be imparted into the second foodstuff 118, the heat H from the heating element 114 may merely warm the second foodstuff 118 while also avoiding any damage / burning of the second foodstuff 118, which would otherwise occur if a non-packaging external heat source (e.g., a microwave oven) were to be utilized for heating the first foodstuff 116.

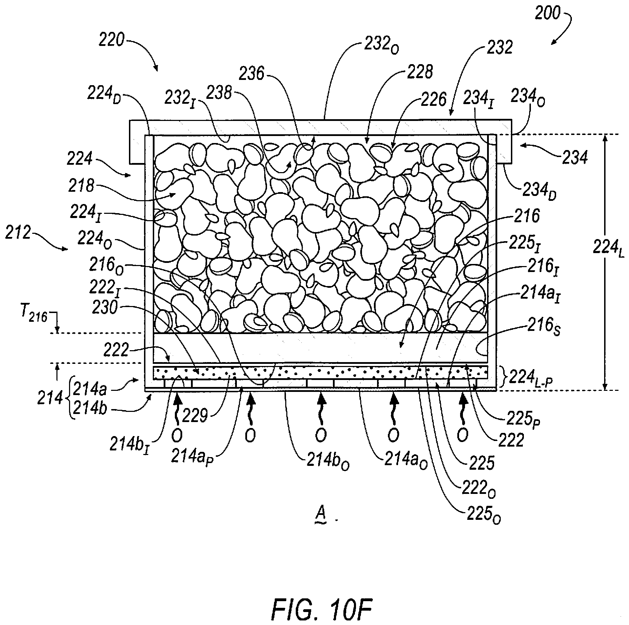

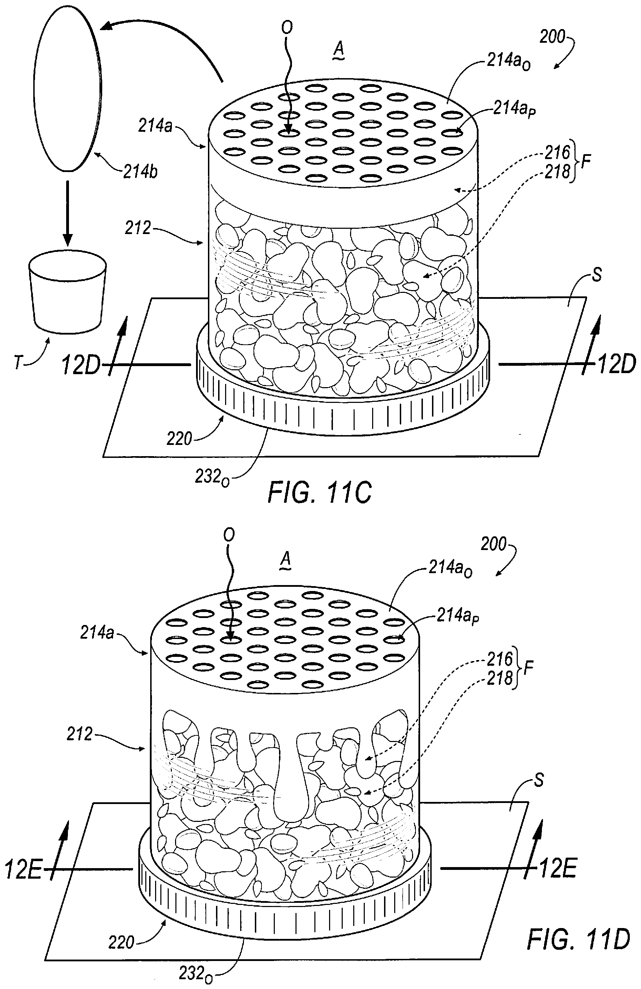

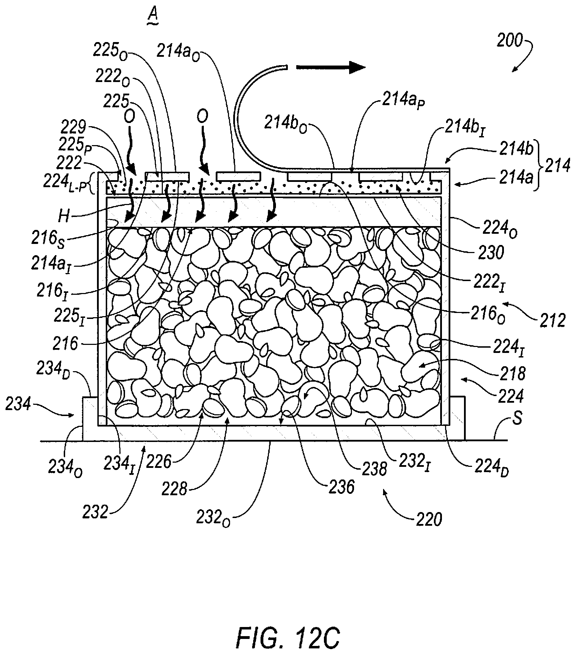

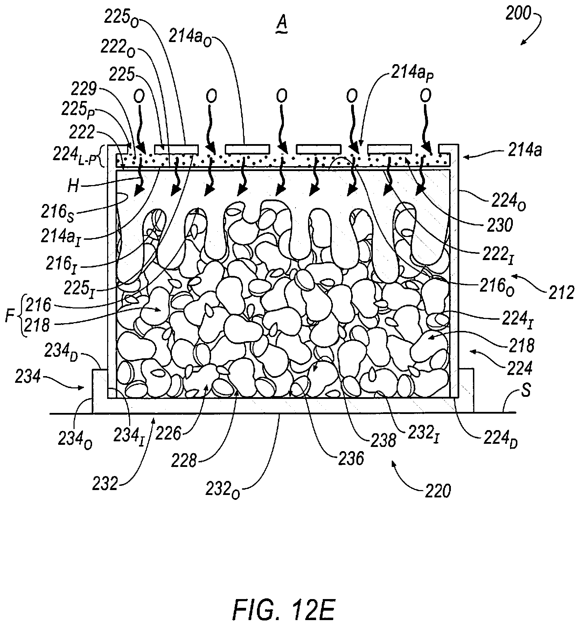

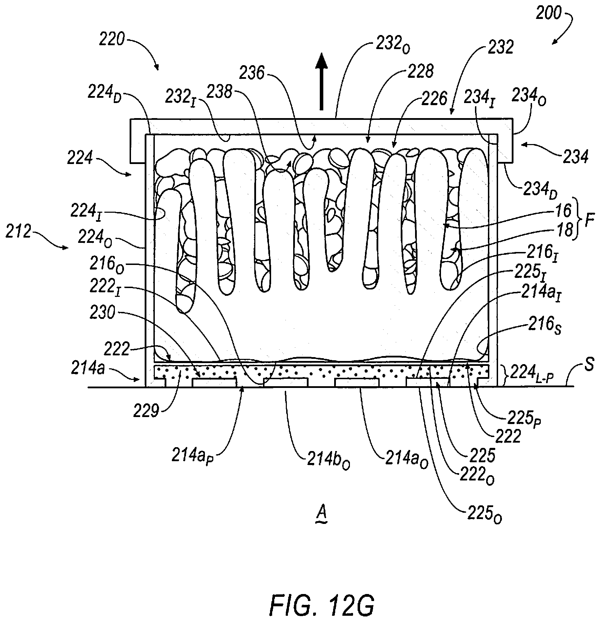

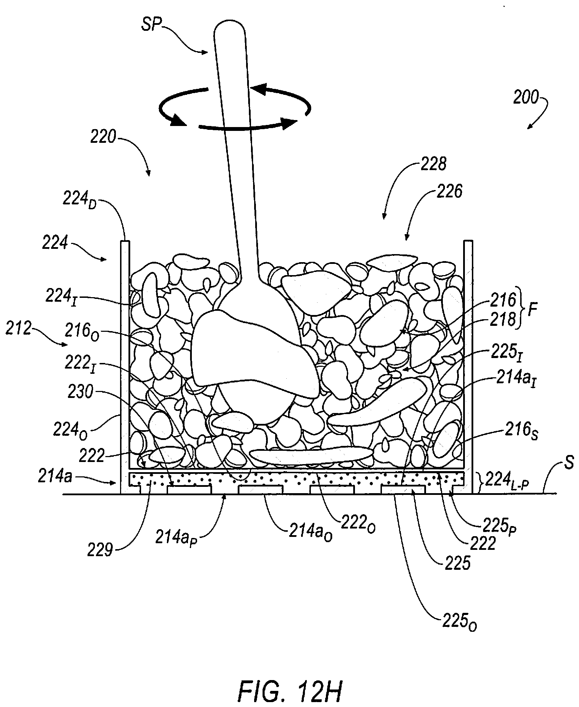

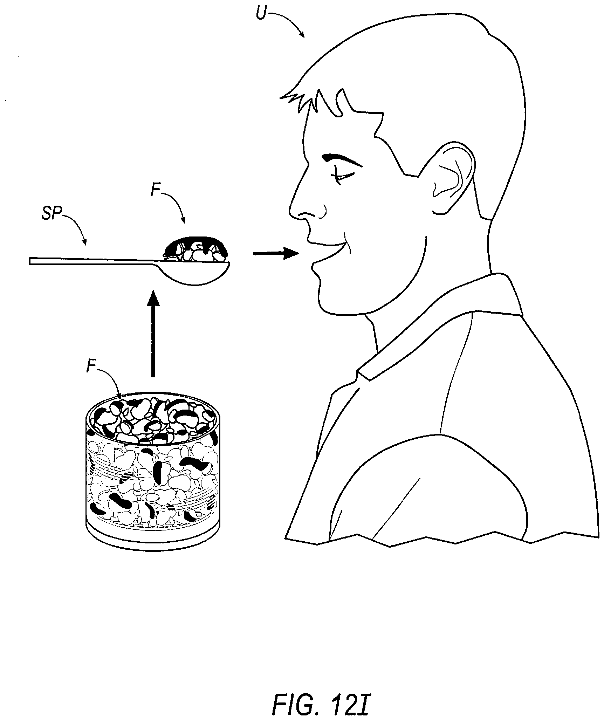

With reference to FIG. 9, an assembly 200 is shown. The assembly 200 includes a plurality of members defining foodstuff packaging (see, e.g., reference numerals 212, 214, 220), a first foodstuff (see, e.g., reference numeral 216) and a second foodstuff (see, e.g., reference numeral 218). When the assembly 200 is assembled (see, e.g., FIG. 10F), the first foodstuff 216 may be separated from, and not comingled throughout, the second foodstuff 218. The assembly 200 may be subsequently activated (see, e.g., FIGS. 11B-11C, 12C-12D) by a user U (see, e.g., FIG. 12I) in order to cause a portion (see, e.g., reference numeral 212) of the foodstuff packaging 212, 214, 220 to impart heat (see, e.g., reference letter H in FIGS. 12C-12F) to the first foodstuff 216; the heat H imparted to the first foodstuff 216 may cause the first foodstuff 216 to transition or phase change (e.g., melt) from a first state (e.g., solid) to a second state (e.g., liquid). With the assistance of gravity, in the second state the first foodstuff 216 may seep or ooze into the second foodstuff 218 such that the first foodstuff 216 is comingled throughout the second foodstuff 218 while the first foodstuff 216 and the second foodstuff 218 are contained within another portion (see, e.g., reference numeral 212) of the foodstuff packaging 212, 214, 220 in order to define a comingled foodstuff (see, e.g., reference letter F in FIGS. 11C-11D, 12E-12I) that is contained within the foodstuff packaging 212, 214, 220. The user U may then remove (see, e.g., FIGS. 12G-12H) another portion (see, e.g., reference numeral 220) of the foodstuff packaging 212, 214, 220 in order to gain access (see, e.g., FIG. 12H) to the portion (see, e.g., reference numeral 212) of the foodstuff packaging 212, 214, 220 that contains the comingled foodstuff F in order to subsequently consume (see, e.g., FIG. 12I) the comingled foodstuff F.

Referring to FIG. 9, the assembly 200 may include a foodstuff container 212, a heating element 214, a first foodstuff 216, a second foodstuff 218, and a closure 220. FIGS. 10A-10F illustrate a first methodology for assembling the assembly 200.

Referring to FIG. 10A, the foodstuff container 212 may include a base portion 222 connected to a sidewall portion 224. The base portion 222 includes an inner surface 222_{I} and an outer surface 222_{O}. The sidewall portion 224 includes an inner surface 224_{I}, an outer surface 224_{O}, and a distal end surface 224_{D} that connects the inner surface 224_{I} to the outer surface 224_{O}. Furthermore, a portion 224_{L-P} of a length 224_{L} of the sidewall portion 224 may extend beyond the outer surface 222_{O} of the base portion 222 thereby defining a cavity 229.

The inner surface 222_{I} of the base portion 222 and the inner surface 224_{I} of the sidewall portion 224 define a foodstuff-receiving cavity 226 of the foodstuff container 212. Access to the foodstuff-receiving cavity 226 is formed by an opening 228 defined by the inner surface 224_{I} of the sidewall portion 224 and the distal end surface 224_{D} of the sidewall portion 224.

With continued reference to FIGS. 9 and 10A, the heating element 214 includes a first portion 214a and a second portion 214b. Referring to FIG. 10A, the first portion 214a of the heating element 214 is defined by the cavity 229 formed by the foodstuff container 212 and a chemically-activated material 230 disposed therein. The foodstuff container 212 may further include a heating element retainer portion 225 connected to and extending from the portion 224_{L-P} of the length 224_{L} of the sidewall portion 224 that extends beyond the outer surface 222_{O} of the base portion 222. The heating element retainer portion 225 therefore may contribute to the formation of the first portion 214a of the heating element 214 whereby the heating element retainer portion 225 includes an inner surface 225_{I}, an outer surface 225_{O}. One or more passages 225_{P} may extend through the heating element retainer portion 225 from the outer surface 225_{O} to the inner surface 225_{I}. The second portion 214b of the heating element 214 includes an inner surface 214b_{I} and an outer surface 214bo. The inner surface 214b_{I} of the second portion 214b of the heating element 214 is disposed adjacent the outer surface 225_{O} of the heating element retainer portion 225. The second portion 214b of the heating element 214 may be a removable film member that is discarded into a trash receptacle T once the inner surface 214b_{I} of the second portion 214b of the heating element 214 is selectively-detached from (and no longer disposed adj acent to) the outer surface 225_{O} of the heating element retainer portion 225.

The chemically-activated material 230 may include an air-activated material, and more particularly, an oxygen-activated material, such as, for example, zinc. When the inner surface 214b_{I} of the second portion 214b of the heating element 214 is disposed adjacent the outer surface 225_{O} of the heating element retainer portion 225, the second portion 214b may prevent fluid communication between the cavity 229 and the atmosphere A through the one or more passages 225_{P} extending through the heating element retainer portion 225. In particular, when the inner surface 214b_{I} of the second portion 214b of the heating element 214 is disposed adjacent the outer surface 225_{O} of the heating element retainer portion 225, the one or more passages 225_{P} may be prevented from fluidly communicating with surrounding atmosphere A (thereby preventing oxygen O from surrounding atmosphere A to pass through the one or more passages 225_{P} for subsequently contacting the chemically-activated material 230). However, as will be described in the following disclosure at FIGS. 11B-11C, 12C-12D, a user U may selectively activate the chemically-activated material 230 by removing the second portion 214b of the heating element 214 from the first portion 214a of the heating element 214 in order to permit the oxygen O from the surrounding atmosphere A to pass through the one or more passages 225_{P} and into the cavity 229 such that the oxygen O may come into contact with the chemically-activated material 230. When the oxygen O comes into contact with the chemically-activated material 230, a chemical reaction takes place (e.g., the zinc defining the chemically-activated material 230 becomes zinc oxide), which causes the chemically-activated material 230 to generate heat.

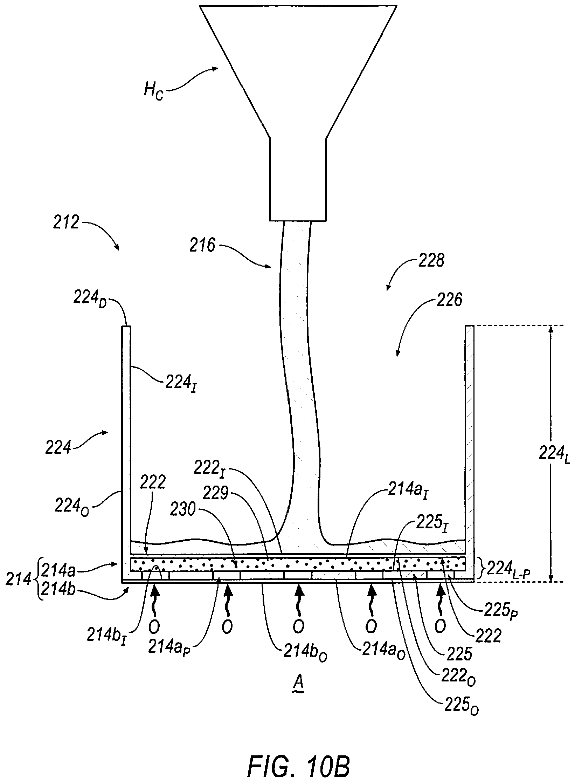

Referring to FIG. 10B, the first foodstuff 216 (e.g., chocolate, fudge or the like) may be deposited into the foodstuff-receiving cavity 226 of the foodstuff container 212. In an example, as seen in FIG. 10B, the first foodstuff 216 may be deposited into the foodstuff-receiving cavity 226 of the foodstuff container 212 in a liquid state or a solid state. If the first foodstuff 216 is in liquid state when it is deposited into the foodstuff-receiving cavity 226 of the foodstuff container 212, the first foodstuff 216 may be extruded into the foodstuff-receiving cavity 226 of the foodstuff container 212 from an extruder or first foodstuff hopper Hc.

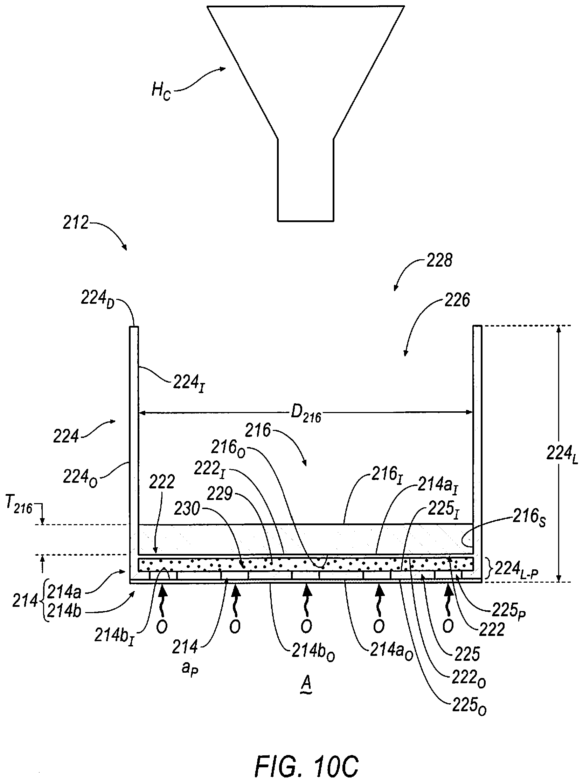

Referring to FIG. 10C, after a predetermined period of time, the first foodstuff 216 may be permitted to cure in order to permit the first foodstuff 216 to transition from a liquid state to a solid state. In an example, when the first foodstuff 216 is cured into a solid state, the first foodstuff 216 may stick to but may also be removably attached to at least a portion of the inner surface 222_{I} of the base portion 222 of the foodstuff container 212. In some instances, when the first foodstuff 216 is cured into a solid state, the first foodstuff 216 may be attached to or disposed over (i) all of the inner surface 222_{I} of the base portion 222 of the foodstuff container 212 and (ii) a portion of the inner surface 224_{I} of the sidewall portion 224 of the foodstuff container 212 that extends away from the inner surface 222_{I} of the base portion 222.

As seen in FIG. 10C, when the first foodstuff 216 has cured into a solid state, the first foodstuff 216 may be defined by an upper surface 216_{I}, a lower surface 216_{O} and a side surface 216s connecting the upper surface 216_{I} to the lower surface 216_{O}. The first foodstuff 216 may also be defined by a thickness T₂₁₆ extending between the upper surface 216_{I} and the lower surface 216_{O}. Furthermore, if the inner surface 224_{I} of the sidewall portion 224 of the foodstuff container 212 defines the foodstuff-receiving cavity 226 of the foodstuff container 212 to have a substantially cylindrical shape, the side surface 216_{S} of the first foodstuff 216 may define the first foodstuff 216 to have a diameter D₂₁₆.

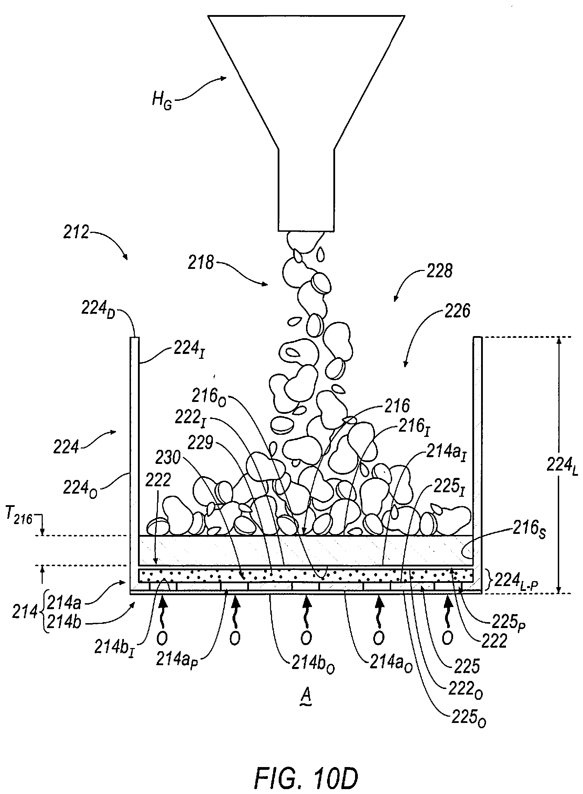

Referring to FIG. 10D, after the first foodstuff 216 has cured into a solid state, the second foodstuff 218 may be deposited into the foodstuff-receiving cavity 226 of the foodstuff container 212. The second foodstuff material 218 may include one or more of, but is not limited to: granola, muesli, oats, seeds, nuts, cereal or the like. Although the second foodstuff 218 is shown to include a plurality of pieces or units of foodstuff, the second foodstuff 218 may include one piece or one unit of foodstuff that is deposited into the foodstuff-receiving cavity 226.

In an example, as seen in FIG. 10D, the second foodstuff 218 may deposited into the foodstuff-receiving cavity 226 of the foodstuff container 212 from a second foodstuff hopper H_{G}. The second foodstuff 218 may be contained with the foodstuff-receiving cavity 226 and arranged upon and over the upper surface 216_{I} of the first foodstuff 216 such that that second foodstuff 218 is separated from, and not comingled or mixed with, the first foodstuff 216.

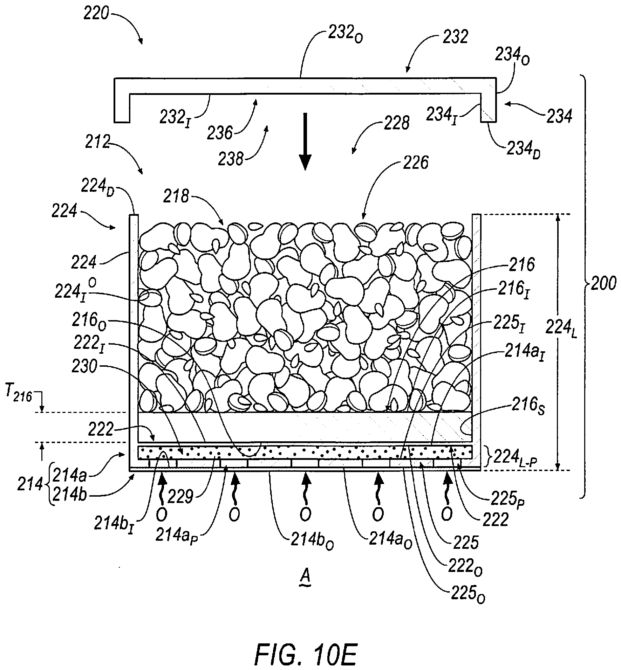

As seen in FIG. 10E, the second foodstuff hopper H_{G} may meter any desirable amount of the second foodstuff 218 into the foodstuff-receiving cavity 226. In some instances, the second foodstuff hopper H_{G} may meter an amount of the second foodstuff 218 that is approximately equal to a remainder of a volume of the foodstuff-receiving cavity 226 that is not occupied by the first foodstuff 216.

Referring to FIG. 10E, the closure 220 includes at least a base portion 232. The base portion 232 includes an inner surface 232_{I} and an outer surface 232_{O}.

Optionally, the closure 220 may also include a sidewall portion 234 connected to the base portion 232. The sidewall portion 234 includes an inner surface 234_{I}, an outer surface 234_{O}, and a distal end surface 234_{D} connecting the inner surface 234_{I} to the outer surface 234_{O}.

The inner surface 232_{I} of the base portion 232 and the inner surface 234_{I} of the sidewall portion 234 define a container-receiving cavity 236. Access to the container-receiving cavity 236 is formed by an opening 238 defined by the inner surface 234_{I} of the sidewall portion 234 and the distal end surface 234_{D} of the sidewall portion 234.

Referring to FIG. 10F, in some instances, if the closure 220 is not formed with the sidewall portion 234 such that the closure 220 includes only the base portion 232, the inner surface 232_{I} of the base portion 232 of the closure 220 may be removably attached to the distal end surface 224_{D} of the sidewall portion 224 of the foodstuff container 212. Attachment of the inner surface 232_{I} of the base portion 232 of the closure 220 to the distal end surface 224_{D} of the sidewall portion 224 of the foodstuff container 212 may be conducted in any desirable methodology such as, for example, ultrasonic welding, a friction-fit connection or the like. However, if the closure 220 is formed with and includes the sidewall portion 234, the inner surface 234_{I} of the sidewall portion 234 of the closure 220 may include a threaded surface (not shown) that cooperates with a corresponding threaded surface (not shown) formed upon a portion of the outer surface 224_{O} of the sidewall portion 224 of the foodstuff container 212 in order to removably attach the closure 220 to the foodstuff container 212.

In a substantially similar as described above at FIGS. 2A'-2E', an alternative methodology for assembling the assembly 200 may include depositing pre-cured (rather than in liquid form as described above at FIG. 10B) the first foodstuff 16 (e.g., chocolate, fudge or the like) into the foodstuff-receiving cavity 226 of the foodstuff container 212. If the first foodstuff 216 is in a pre-cured, substantially solid form when it is deposited into the foodstuff-receiving cavity 26 of the foodstuff container 12, the first foodstuff 16 may be metered from a first foodstuff hopper H_{C} (see, e.g., FIG. 2B') that may include, for example, a magazine of prefabricated first foodstuff 216 members that are in a pre-cured, substantially solid form.

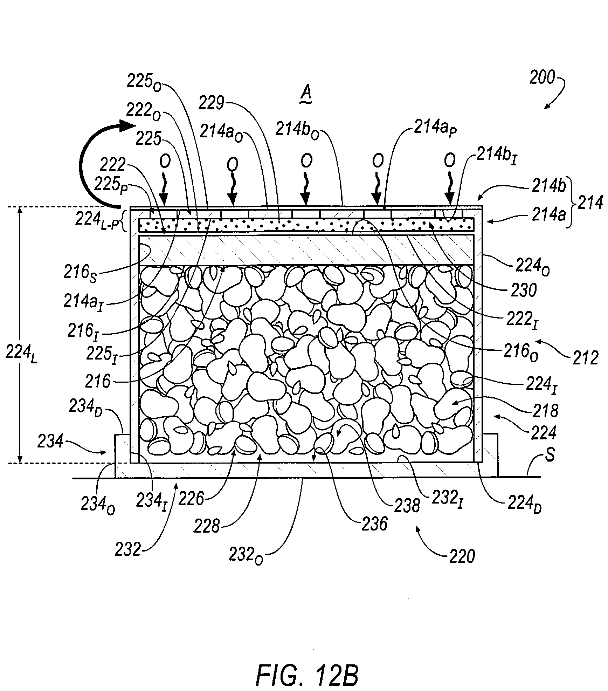

Referring to FIGS. 11A-11D and 12A-12I, a method of utilizing the assembly 200 of FIG. 9 is described. Referring to FIGS. 11A and 12A, the outer surface 214bo of the second portion 214b of the heating element 214 may be first optionally arranged upon a support surface S such that the assembly 200 is arranged in a "right-side-up" orientation upon the support surface S. Then, as seen in FIGS. 11B and 12B, the outer surface 232_{O} of the base portion 232 of the closure 220 may be arranged upon the support surface S such that the assembly 200 is arranged in an "up-side-down" orientation upon the support surface S.

Referring to FIGS. 11B and 12B, once the assembly 200 is arranged in the "up-side-down" orientation upon the support surface S, the second portion 214b of the heating element 214, which may be a removable film member, is then selectively-detached from the outer surface 225_{O} of the heating element retainer portion 225. As seen in FIG. 11C, once removed from the first portion 214a of the heating element 214, the second portion 214b of the heating element 214 may be discarded into a trash receptacle T.

Referring to FIGS. 11C and 12C-12D, once the second portion 214b of the heating element 214 is selectively-detached from the first portion 214a of the heating element 214, the chemically-activated material 230 contained within the cavity 229 of the first portion 214a of the heating element 214 is selectively activated. Activation of the chemically-activated material 230 contained within the first portion 214a of the heating element 214 occurs when oxygen O from surrounding atmosphere A is permitted to be in fluid communication with the chemically-activated material 230. As described above, when the inner surface 214b_{I} of the second portion 214b of the heating element 214 is disposed adjacent the outer surface 225_{O} of the heating element retainer portion 225, the one or more passages 225_{P} of the heating element retainer portion 225 are not permitted to be in fluid communication with surrounding atmosphere A (thereby not permitting oxygen O from surrounding atmosphere A to pass through the one or more passages 225_{P} of the heating element retainer portion 225 for subsequently contacting the chemically-activated material 230). However, once the second portion 214b of the heating element 214 is removed from the first portion 214a of the heating element 214 as described above, an oxygen barrier formed by the second portion 214b of the heating element 214 no longer exists, and, as a result, oxygen O from surrounding atmosphere A is permitted to pass through the one or more passages 225_{P} of the heating element retainer portion 225 such that the oxygen O may come into contact with the chemically-activated material 230. When the oxygen O comes into contact with the chemically-activated material 230, a chemical reaction takes place (e.g., the zinc defining the chemically-activated material 230 becomes zinc oxide), which causes the chemically-activated material 230 to generate heat H (see, e.g., FIG. 12C).

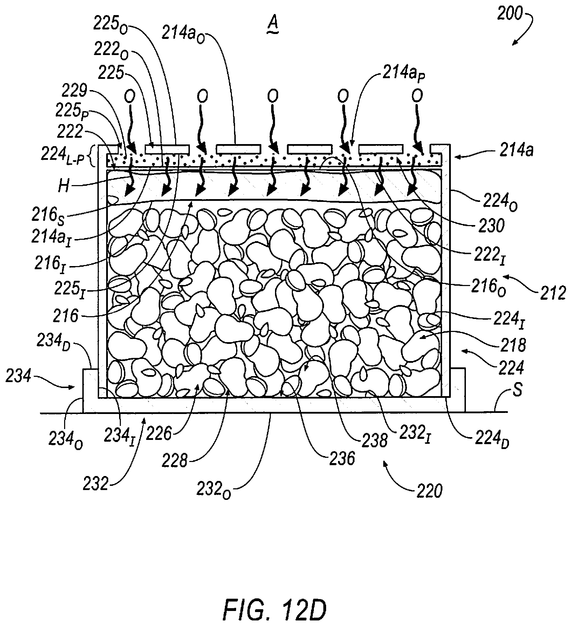

Referring to FIGS. 11D and 12D-12F, the heat H generated by the chemically-activated material 230 of the first portion 214a of the heating element 214 is passed through the base portion 222 of the foodstuff container 212 such that the heat H is ultimately imparted into and absorbed by the first foodstuff 216. Comparatively, as seen in FIGS. 12C-12F, the heat H causes the first foodstuff 216 to transition from a substantially solid state (see, e.g., FIG. 12C) to a melted, substantially liquid state (see, e.g., FIGS. 12D-12F). As seen in FIGS. 12D-12F, as the first foodstuff 216 transitions to a melted, substantially liquid form, the first foodstuff 216, with the assistance of gravity, detaches from one or more of the inner surface 222_{I} of the base portion 222 of the foodstuff container 212 and the inner surface 224_{I} of the sidewall portion 224 of the foodstuff container 212 such that the first foodstuff 216 vertically seeps or oozes downwardly and into the second foodstuff 218 such that the first foodstuff 216 is comingled throughout the second foodstuff 218 to define a comingled foodstuff F that is contained within foodstuff container 212.

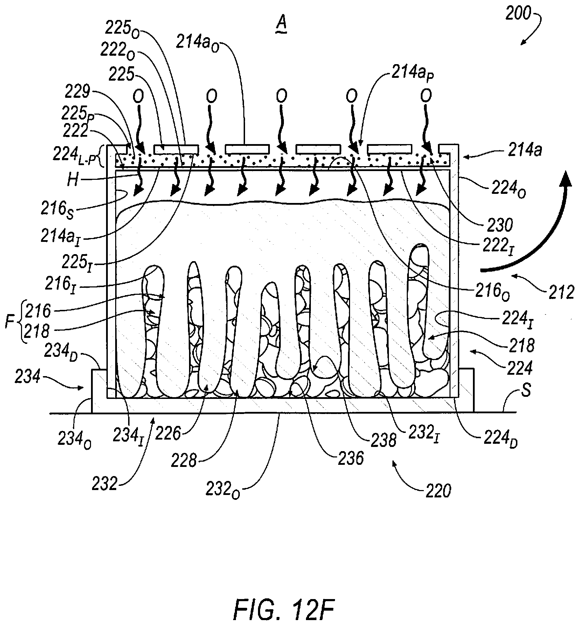

Referring to FIGS. 12F-12G, the container 212, the heating element 214 and the closure 220 is then returned to the "right-side-up" orientation upon the support surface S that that the outer surface 225_{O} of the heating element retainer portion 225 is arranged upon the support surface S. Then, as seen in FIGS. 12G-12H, the closure 220 may be selectively-removed from the foodstuff container 212 such that a user U (see, e.g., FIG. 12I) may access the foodstuff-receiving cavity 226 of the foodstuff container 212 that contains the comingled foodstuff F. If desired, as seen in FIG. 12H, the user U may arrange a utensil (e.g., a spoon SP) within the foodstuff-receiving cavity 226 of the foodstuff container 212 for mixing or stirring the comingled foodstuff F. Alternatively, the closure 220 could remain attached to the foodstuff container 212 and the comingled foodstuff F could be shaken. Then, as seen in FIG. 12I, the user U may consume the comingled foodstuff F.

In view of the above-described functionality of the heating element 214, it is seen that the first foodstuff 216 is heated H by a portion (i.e., the heating element 214) of the foodstuff packaging 212, 214, 220. In other words, the foodstuff packaging 212, 214, 220 provides a "self-heating" function that avoids the use of a non-packaging, external heat source (e.g., a microwave oven, a gas oven, an electric oven, a stove, fire or the like) for imparting heat to the first foodstuff 216. Furthermore, the arrangement of the heating element 214 in an opposing relationship with respect to the first foodstuff 216 (due to the arrangement of the base portion 222 of the foodstuff container 212 between the chemically-activated material 230 of the heating element 214 and the first foodstuff 216) substantially limits the heat H generated by the heating element 214 to be mostly received by the first foodstuff 216 and not the second foodstuff 218.

Aside from the benefit provided by the "self-heating" functionality of the foodstuff packaging 212, 214, 220 that avoids the use of a non-packaging external heat source to generate heat for melting the first foodstuff 216, use of some external heat sources (e.g., a microwave oven) may damage and/or ruin the second foodstuff 218 when the first foodstuff 216 and the second foodstuff 218 are both contained within foodstuff packaging (such as the foodstuff packaging 212, 214, 220 associated with the assembly 200). For example, should a microwave oven be utilized to impart heat to the first foodstuff 216, the first foodstuff 216 may, as desired, transition from a liquid state to a solid state; however, if the second foodstuff 218 is, for example, a "low moisture" food product, the second foodstuff 218 may undesirably burn (as a result of having very little or no moisture, which may be evaporated upon being heated) when microwave energy is imparted into the second foodstuff 218. Therefore, although some of the heat H generated by the heating element 214 may be imparted into the second foodstuff 218, the heat H from the heating element 214 may merely warm the second foodstuff 218 while also avoiding any damage / burning of the second foodstuff 218, which would otherwise occur if a non-packaging external heat source (e.g., a microwave oven) were to be utilized for heating the first foodstuff 216.

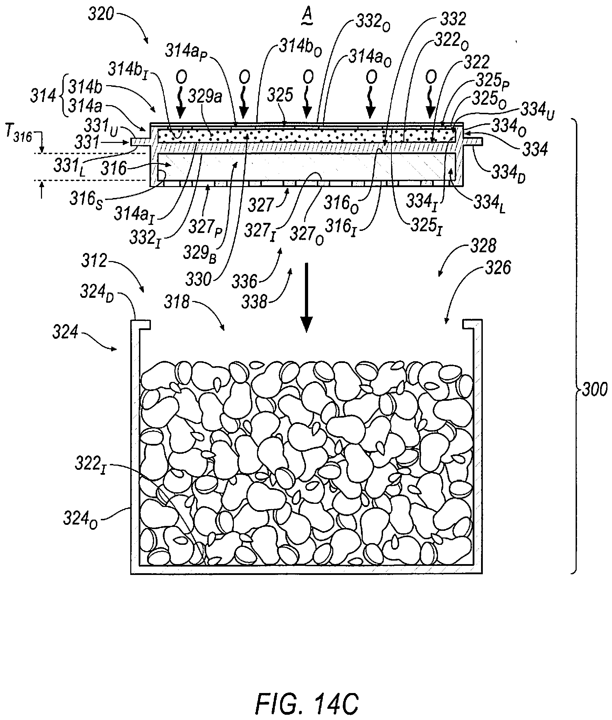

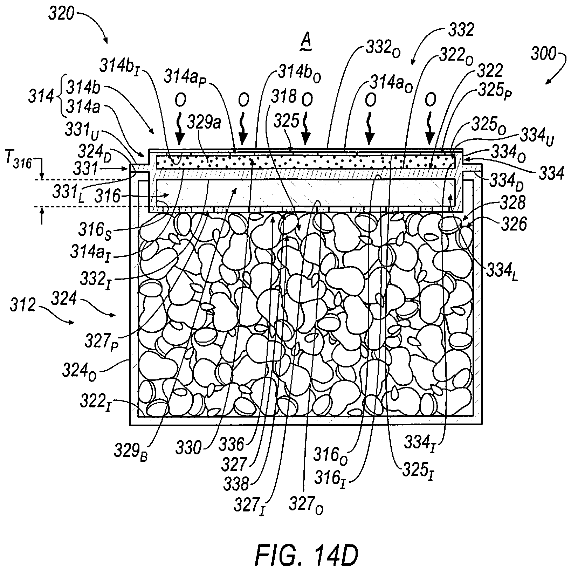

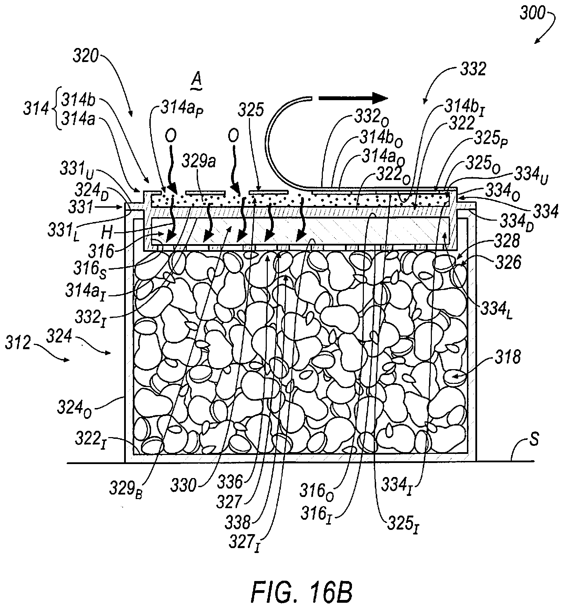

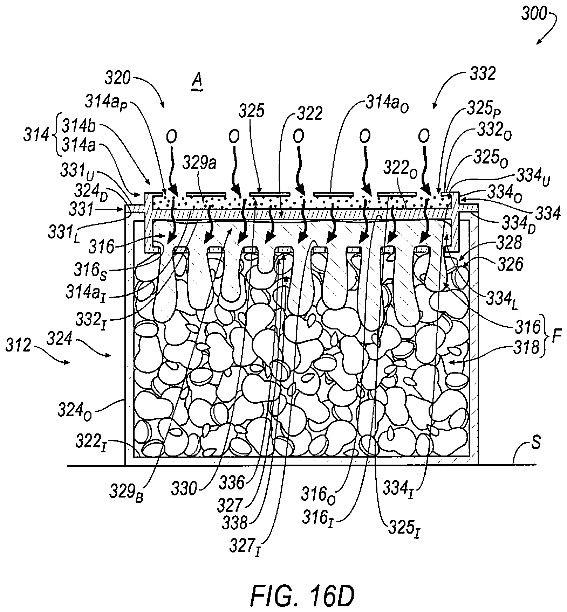

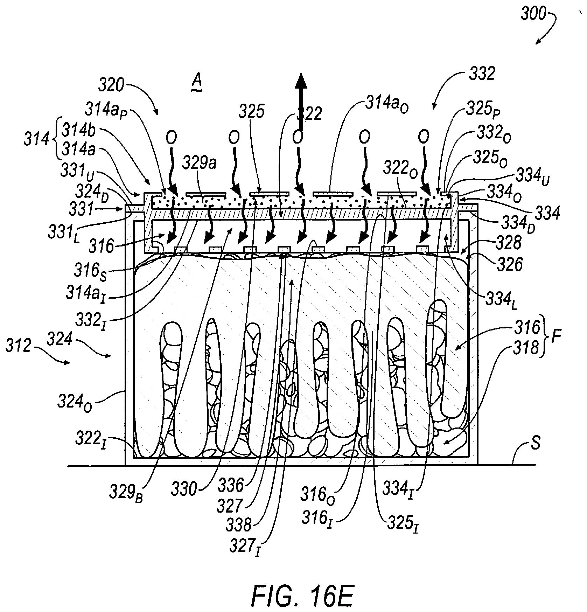

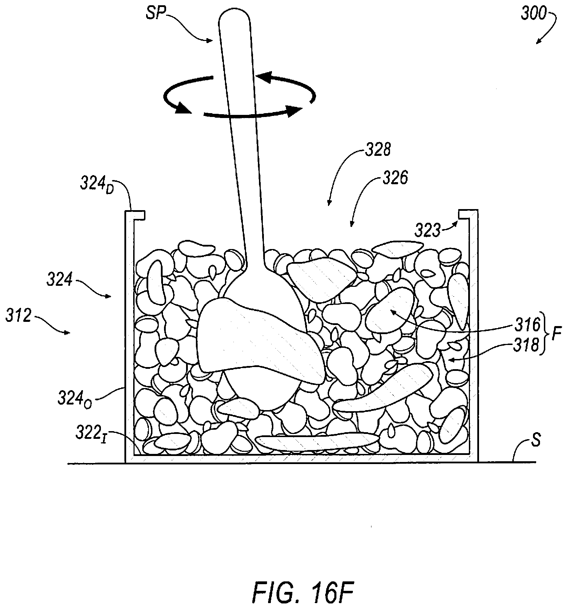

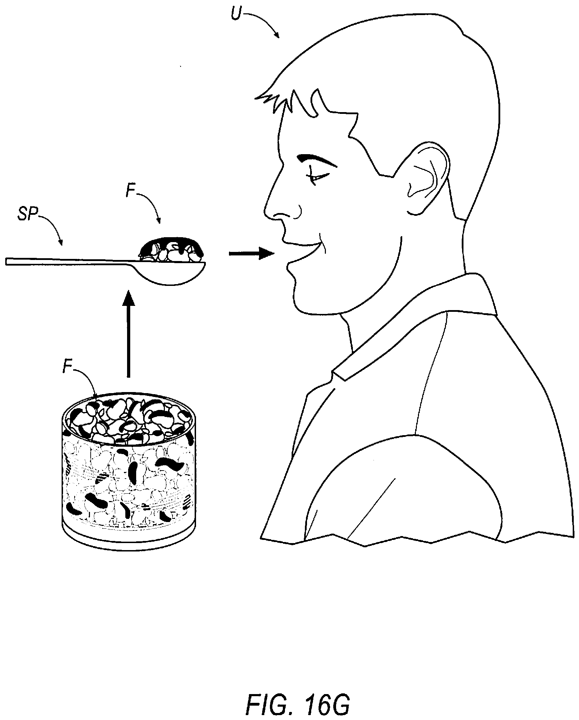

With reference to FIG. 13, an assembly 300 is shown. The assembly 300 includes a plurality of members defining foodstuff packaging (see, e.g., reference numerals 312, 314, 320), a first foodstuff (see, e.g., reference numeral 316 at, e.g., FIG. 14C) and a second foodstuff (see, e.g., reference numeral 318). When the assembly 300 is assembled (see, e.g., FIG. 14D), the first foodstuff 316 may be separated from, and not comingled throughout, the second foodstuff 318. The assembly 300 may be subsequently activated (see, e.g., FIGS. 15B-15C, 16B-16C) by a user U (see, e.g., FIG. 16G) in order to cause a portion (see, e.g., reference numeral 320) of the foodstuff packaging 312, 314, 320 to impart heat (see, e.g., reference letter H in FIGS. 16B-16D) to the first foodstuff 316; the heat H imparted to the first foodstuff 316 may cause the first foodstuff 316 to transition or phase change (e.g., melt) from a first state (e.g., solid) to a second state (e.g., liquid). With the assistance of gravity, in the second state the first foodstuff 316 may seep or ooze into the second foodstuff 318 such that the first foodstuff 316 is comingled throughout the second foodstuff 318 while the first foodstuff 316 and the second foodstuff 318 are contained within another portion (see, e.g., reference numeral 312) of the foodstuff packaging 312, 314, 320 in order to define a comingled foodstuff (see, e.g., reference letter F in FIGS. 15C-15D, 16D-16G) that is contained within the foodstuff packaging 312, 314, 320. The user U may then remove (see, e.g., FIGS. 16E-16F) another portion (see, e.g., reference numeral 320) of the foodstuff packaging 312, 314, 320 in order to gain access (see, e.g., FIG. 16F) to the portion (see, e.g., reference numeral 312) of the foodstuff packaging 312, 314, 320 that contains the comingled foodstuff F in order to subsequently consume (see, e.g., FIG. 16G) the comingled foodstuff F.

Referring to FIG. 13, the assembly 300 may include a foodstuff container 312, a heating element 314, a first foodstuff 316 (see FIG. 14C), a second foodstuff 318, and a closure 320. FIGS. 14A-14D illustrate a first methodology for assembling the assembly 300.

Referring to FIG. 14A, the foodstuff container 312 may include a base portion 322 connected to a sidewall portion 324. The base portion 322 includes an inner surface 322_{I} and an outer surface 322_{O}. The sidewall portion 324 includes an inner surface 324_{I}, an outer surface 324_{O}, and a distal end surface 324_{D} that connects the inner surface 324_{I} to the outer surface 324_{O}. In some instances, the distal end surface 324_{D} of the sidewall portion 324 of the foodstuff container 312 may project radially inwardly beyond the inner surface 324_{I} of the sidewall portion 324 of the foodstuff container 312 thereby forming closure-supporting-ledge 323.

The inner surface 322_{I} of the base portion 322 and the inner surface 324_{I} of the sidewall portion 324 define a foodstuff-receiving cavity 326 of the foodstuff container 312. Access to the foodstuff-receiving cavity 326 is formed by an opening 328 defined by the inner surface 324_{I} of the sidewall portion 324 and the distal end surface 324_{D} of the sidewall portion 324.

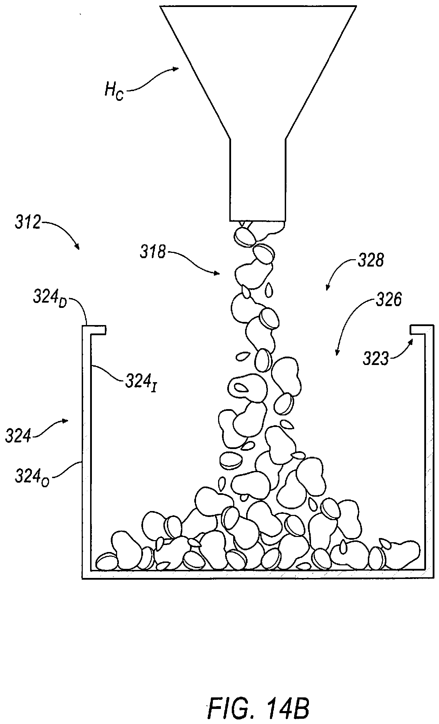

In an example, as seen in FIG. 14B, the second foodstuff 318 may deposited into the foodstuff-receiving cavity 326 of the foodstuff container 312 from a foodstuff hopper H_{G}. The second foodstuff 318 may be contained with the foodstuff-receiving cavity 326 and arranged upon and over the inner surface 322_{I} of the base portion 322 of the foodstuff container 312. As will be explained in the following disclosure, prior to activating the heating element 314, the first foodstuff 316 is contained within the closure 320, and, therefore, as seen in FIGS. 14C-14D, the second foodstuff 318 is initially separated from, and not comingled or mixed with, the first foodstuff 316.

As seen in FIG. 14B, the foodstuff hopper H_{G} may meter any desirable amount of the second foodstuff 318 into the foodstuff-receiving cavity 326. In some instances, the foodstuff hopper H_{G} may meter an amount of the second foodstuff 318 that is approximately equal to a volume of the foodstuff-receiving cavity 326 less a volume of the first foodstuff 316 that is contained within the closure 320 prior to activating the heating element 314. The second foodstuff material 318 may include one or more of, but is not limited to: granola, muesli, oats, seeds, nuts, cereal or the like. Although the second foodstuff 318 is shown to include a plurality of pieces or units of foodstuff, the second foodstuff 318 may include one piece or one unit of foodstuff that is deposited into the foodstuff-receiving cavity 326.

Referring to FIG. 14C, an exemplary view of the closure 320 is shown. The closure 320 includes a first cavity 329a and a second cavity 329b. The first cavity 329a of the closure 320 is defined by a heating element retainer portion 325, a base portion 332 and a sidewall portion 334. The second cavity 329b of the closure 320 is defined by a first foodstuff retainer portion 327, the base portion 332 and the sidewall portion 334. A chemically-activated material 330 is disposed within the first cavity 329a, and the first foodstuff 316 is disposed within the second cavity 329b. As will be described in the following disclosure, the heating element retainer portion 325 and the chemically-activated material 330 contributes to the formation of a first portion 314a of the heating element 314.

The sidewall portion 334 is connected to each of the heating element retainer portion 325, the first foodstuff retainer portion 327 and the base portion 332. The sidewall portion 334 includes an inner surface 334_{I}, an outer surface 334_{O}, an upper end portion 334u, a lower end portion 334_{L} and an intermediate portion 334_{M}.

The heating element retainer portion 325 includes an inner surface 325_{I} and an outer surface 325_{O}. The heating element retainer portion 325 is connected to and extends from the upper end portion 334u of the sidewall portion 334. One or more passages 325_{P} may extend through the heating element retainer portion 325 from the outer surface 325_{O} to the inner surface 325_{I}.

The base portion 332 includes an upper surface 332u and a lower surface 332_{L}. The base portion 332 is connected to and extends from the inner surface 334_{I} of the sidewall portion 334 proximate the intermediate portion 334_{M} of the sidewall portion 334.

The first foodstuff retainer portion 327 includes an inner surface 327_{I} and an outer surface 327_{O}. The first foodstuff retainer portion 327 is connected to and extends from the lower end portion 334_{L} of the sidewall portion 334. One or more passages 327_{P} may extend through the first foodstuff retainer portion 327 from the outer surface 327_{O} to the inner surface 327_{I}.

The inner surface 334_{I} of the sidewall portion 334, the inner surface 325_{I} of the heating element retainer portion 325 and the upper surface 332u of the base portion 332 defines the first cavity 329a that contains the chemically-activated material 330. The inner surface 334_{I} of the sidewall portion 334, the inner surface 327_{I} of the first foodstuff retainer portion 327 and the lower surface 332_{L} of the base portion 332 defines the second cavity 329a that contains the first foodstuff 316.

The closure 320 may include an outwardly-extending projection 331 that extends away from the outer surface 334_{O} of the sidewall portion 334. The outwardly-extending projection 331 may include an upper surface 331u and a lower surface 331_{L}. Referring to FIG. 14D, the lower surface 331_{L} of the outwardly-extending projection 331 is disposed adjacent the distal end surface 324_{D} of the sidewall portion 334 of the foodstuff container 312 that forms closure-supporting-ledge 323. Attachment of the outwardly-extending projection 331 of the closure 320 to the closure-supporting-ledge 323 of the foodstuff container 312 may be conducted in any desirable methodology such as, for example, ultrasonic welding, an adhesive connection or the like. In other examples, a portion of the outwardly-extending projection 331 of the closure 320 may be formed with the closure-supporting-ledge 323 of the foodstuff container 312 to thereby form a hinged lid connection of the closure 320 and the foodstuff container 312.

Referring to FIGS. 13 and 14C-14D, the second portion 314b of the heating element 314 is shown. The second portion 314b of the heating element 314 includes an inner surface 314b_{I} and an outer surface 314bo. As seen in FIGS. 14C-14D, the inner surface 314b_{I} of the second portion 314b of the heating element 314 is disposed adjacent the outer surface 325_{O} of the heating element retainer 325. The second portion 314b of the heating element 314 may be a removable film member that is discarded into a trash receptacle T once the inner surface 314b_{I} of the second portion 314b of the heating element 314 is selectively-detached from (and no longer disposed adjacent to) the outer surface 325_{O} of the heating element retainer 325.

The chemically-activated material 330 may include an air-activated material, and more particularly, an oxygen-activated material, such as, for example, zinc. When the inner surface 314b_{I} of the second portion 314b of the heating element 314 is disposed adjacent the outer surface 325_{O} of the heating element retainer 325, the second portion 314b may prevent fluid communication between the cavity 329 and the atmosphere A through the one or more passages 325_{P} extending through the heating element retainer 325. In particular, when the inner surface 314b_{I} of the second portion 314b of the heating element 314 is disposed adjacent the outer surface 325_{O} of the heating element retainer 325, the one or more passages 325_{P} may be prevented from fluidly communicating with surrounding atmosphere A (thereby preventing oxygen O from surrounding atmosphere A to pass through the one or more passages 325_{P} for subsequently contacting the chemically-activated material 330). However, as will be described in the following disclosure at FIGS. 15B-15C, 16B-16C, a user U may selectively activate the chemically-activated material 330 by removing the second portion 314b of the heating element 314 from the first portion 314a of the heating element 314 in order to permit the oxygen O from the surrounding atmosphere A to pass through the one or more passages 325_{P} and into the cavity 329 such that the oxygen O may come into contact with the chemically-activated material 330. When the oxygen O comes into contact with the chemically-activated material 330, a chemical reaction takes place (e.g., the zinc defining the chemically-activated material 330 becomes zinc oxide), which causes the chemically-activated material 330 to generate heat.

Referring to FIGS. 15A-15D and 16A-16G, a method of utilizing the assembly 300 of FIG. 13 is described. Referring to FIGS. 15A-15B and 16A-16B, the second portion 314b of the heating element 314, which may be a removable film member, is then selectively-detached from the outer surface 325_{O} of the heating element retainer 325. As seen in FIG. 15C, once removed from the first portion 314a of the heating element 314, the second portion 314b of the heating element 314 may be discarded into a trash receptacle T.

Referring to FIGS. 15B-15D and 16B-16D, once the second portion 314b of the heating element 314 is selectively-detached from the first portion 314a of the heating element 314, the chemically-activated material 330 contained within the cavity 329 of the first portion 314a of the heating element 314 is selectively activated. Activation of the chemically-activated material 330 contained within the first portion 314a of the heating element 314 occurs when oxygen O from surrounding atmosphere A is permitted to be in fluid communication with the chemically-activated material 330. As described above, when the inner surface 314b_{I} of the second portion 314b of the heating element 314 is disposed adjacent the outer surface 325_{O} of the heating element retainer 325, the one or more passages 325_{P} of the heating element retainer 325 are not permitted to be in fluid communication with surrounding atmosphere A (thereby not permitting oxygen O from surrounding atmosphere A to pass through the one or more passages 325_{P} of the heating element retainer 325 for subsequently contacting the oxygen-activated material 330). However, once the second portion 314b of the heating element 314 is removed from the first portion 314a of the heating element 314 as described above, an oxygen barrier formed by the second portion 314b of the heating element 314 no longer exists, and, as a result, oxygen O from surrounding atmosphere A is permitted to pass through the one or more passages 325_{P} of the heating element retainer 325 such that the oxygen O may come into contact with the chemically-activated material 330. When the oxygen O comes into contact with the chemically-activated material 330, a chemical reaction takes place (e.g., the zinc defining the chemically-activated material 330 becomes zinc oxide), which causes the chemically-activated material 330 to generate heat H (see, e.g., FIGS. 16B-16D).

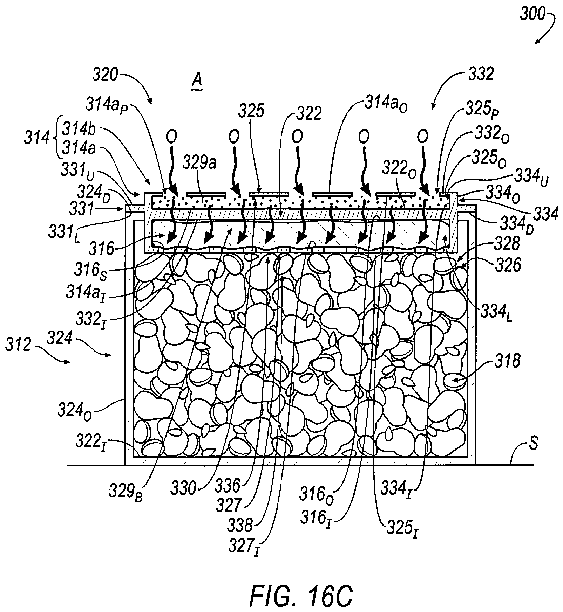

Referring to FIGS. 15B-15D and 16B-16D, the heat H generated by the chemically-activated material 330 of the first portion 314a of the heating element 314 is passed through the base portion 332 of the closure 320 such that the heat H is ultimately imparted into and absorbed by the first foodstuff 316. Comparatively, as seen in FIGS. 16B-16D, the heat H causes the first foodstuff 316 to transition from a substantially solid state (see, e.g., FIG. 16B) to a melted, substantially liquid state (see, e.g., FIGS. 16C-16D). As seen in FIGS. 16C-16E, as the first foodstuff 316 transitions to a melted, substantially liquid form, the first foodstuff 316, with the assistance of gravity, vertically seeps or oozes downwardly through the one or more passages 327_{P} of the first foodstuff retainer portion 327 and into the foodstuff-receiving cavity 326 of the foodstuff container 312 that contains the second foodstuff 318 such that the first foodstuff 316 is comingled throughout the second foodstuff 318 to define a comingled foodstuff F that is contained within foodstuff container 312.

Then, as seen in FIGS. 16E-16F, once a user U (see, e.g., FIG. 16G) has determined that most / all (or a desired amount) of the first foodstuff 316 has been evacuated from the closure 320, the user U may selectively-remove (or, alternatively, pivot away if the closure 320 is partially attached in a hinged configuration) the closure 320 from the foodstuff container 312 such that the user U may access the foodstuff-receiving cavity 326 of the foodstuff container 312 that contains the comingled foodstuff F. If desired, as seen in FIG. 16F, the user U may arrange a utensil (e.g., a spoon SP) within the foodstuff-receiving cavity 326 of the foodstuff container 312 for mixing or stirring the comingled foodstuff F. Alternatively, the closure 320 could remain attached to the foodstuff container 312 and the comingled foodstuff F could be shaken. Then, as seen in FIG. 16G, the user U may consume the comingled foodstuff F.

In view of the above-described functionality of the heating element 314, it is seen that the first foodstuff 316 is heated H by a portion (i.e., the heating element 314) of the foodstuff packaging 312, 314, 320. In other words, the foodstuff packaging 312, 314, 320 provides a "self-heating" function that avoids the use of a non-packaging, external heat source (e.g., a microwave oven, a gas oven, an electric oven, a stove, fire or the like) for imparting heat to the first foodstuff 316. Furthermore, the arrangement of the heating element 314 in an opposing relationship with respect to the first foodstuff 316 (due to the arrangement of both of the chemically-activated material 230 of the heating element 214 and the first foodstuff 216 being contained within exclusive cavities 329a, 329b that are separated by the base portion 332 of the closure 320) substantially limits the heat H generated by the heating element 314 to be mostly received by the first foodstuff 316 and not the second foodstuff 318.

Aside from the benefit provided by the "self-heating" functionality of the foodstuff packaging 312, 314, 320 that avoids the use of a non-packaging external heat source to generate heat for melting the first foodstuff 316, use of some external heat sources (e.g., a microwave oven) may damage and/or ruin the second foodstuff 318 when the first foodstuff 316 and the second foodstuff 318 are both contained within foodstuff packaging (such as the foodstuff packaging 312, 314, 320 associated with the assembly 300). For example, should a microwave oven be utilized to impart heat to the first foodstuff 316, the first foodstuff 316 may, as desired, transition from a liquid state to a solid state; however, if the second foodstuff 318 is, for example, a "low moisture" food product, the second foodstuff 318 may undesirably burn (as a result of having very little or no moisture, which may be evaporated upon being heated) when microwave energy is imparted into the second foodstuff 318. Therefore, although some of the heat H generated by the heating element 314 may be imparted into the second foodstuff 318, the heat H from the heating element 314 may merely warm the second foodstuff 318 while also avoiding any damage / burning of the second foodstuff 318, which would otherwise occur if a non-packaging external heat source (e.g., a microwave oven) were to be utilized for heating the first foodstuff 316.

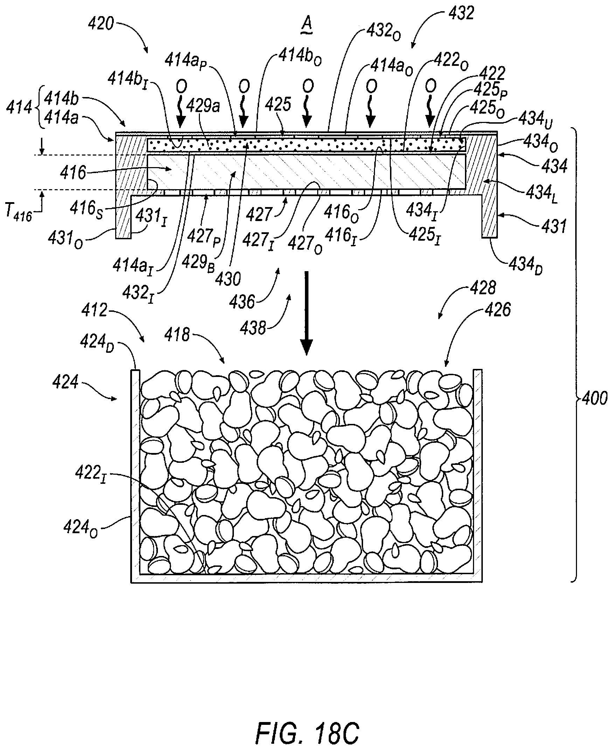

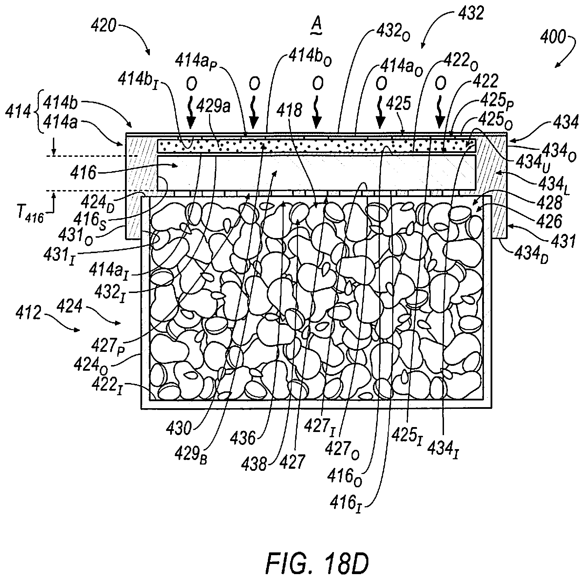

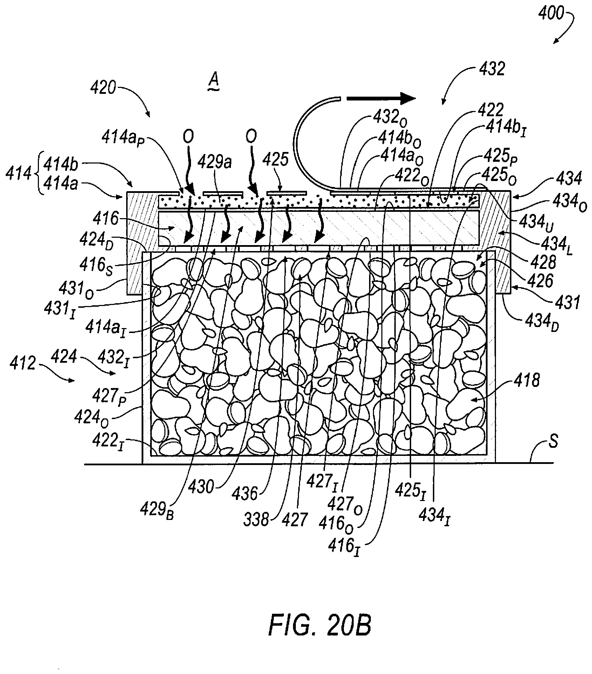

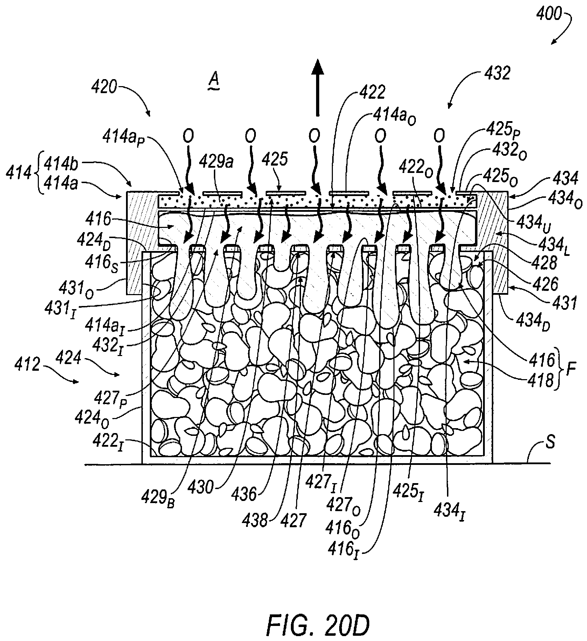

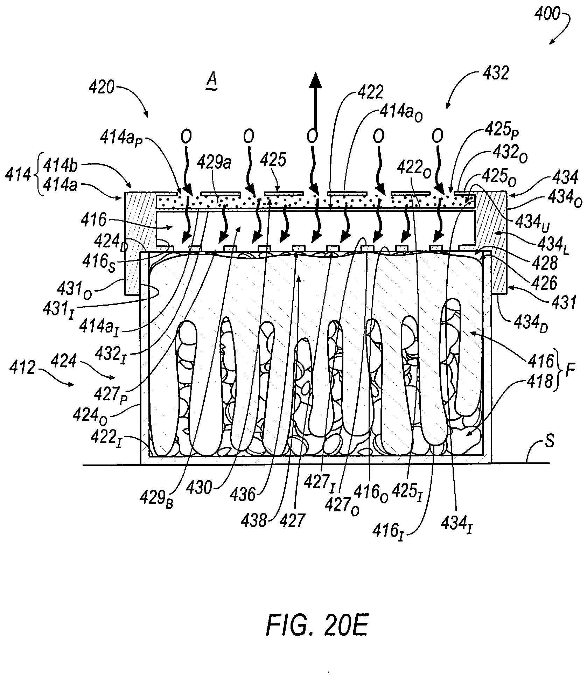

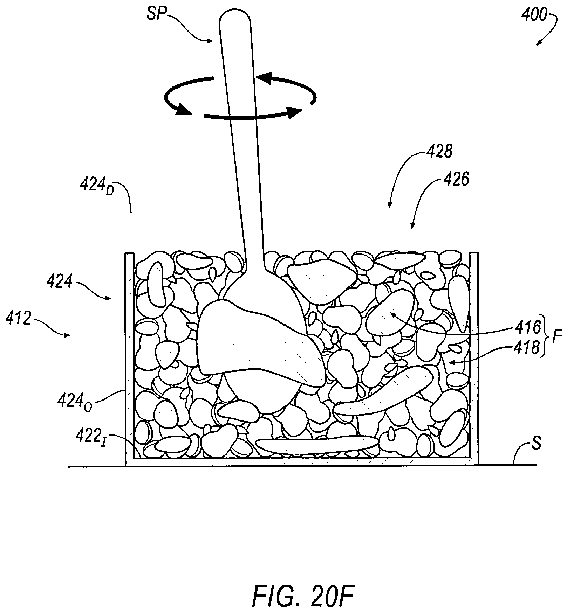

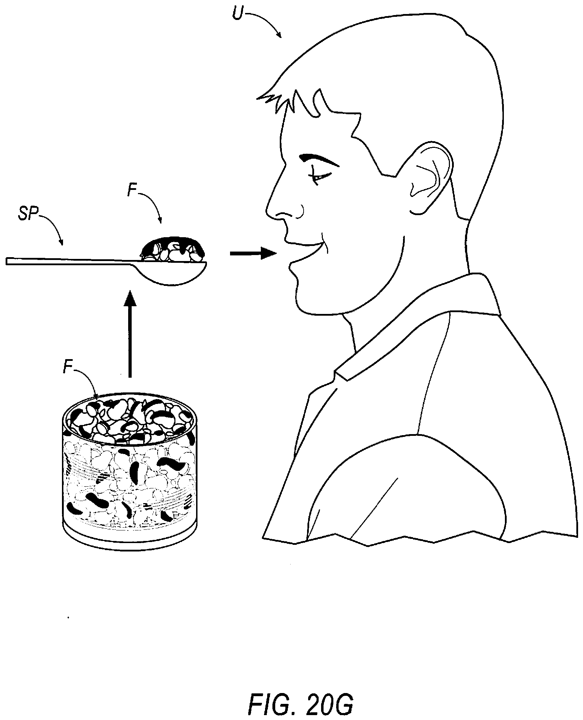

With reference to FIG. 17, an assembly 400 is shown. The assembly 400 includes a plurality of members defining foodstuff packaging (see, e.g., reference numerals 412, 414, 420), a first foodstuff (see, e.g., reference numeral 416 at, e.g., FIG. 18C) and a second foodstuff (see, e.g., reference numeral 418). When the assembly 400 is assembled (see, e.g., FIG. 18D), the first foodstuff 416 may be separated from, and not comingled throughout, the second foodstuff 418. The assembly 400 may be subsequently activated (see, e.g., FIGS. 19B-19C, 20B-20C) by a user U (see, e.g., FIG. 20G) in order to cause a portion (see, e.g., reference numeral 420) of the foodstuff packaging 412, 414, 420 to impart heat (see, e.g., reference letter H in FIGS. 20B-20D) to the first foodstuff 416; the heat H imparted to the first foodstuff 416 may cause the first foodstuff 416 to transition or phase change (e.g., melt) from a first state (e.g., solid) to a second state (e.g., liquid). With the assistance of gravity, in the second state the first foodstuff 416 may seep or ooze into the second foodstuff 418 such that the first foodstuff 416 is comingled throughout the second foodstuff 418 while the first foodstuff 416 and the second foodstuff 418 are contained within another portion (see, e.g., reference numeral 412) of the foodstuff packaging 412, 414, 420 in order to define a comingled foodstuff (see, e.g., reference letter F in FIGS. 19C-19D, 20D-20G) that is contained within the foodstuff packaging 412, 414, 420. The user U may then remove (see, e.g., FIGS. 20E-20F) another portion (see, e.g., reference numeral 420) of the foodstuff packaging 412, 414, 420 in order to gain access (see, e.g., FIG. 20F) to the portion (see, e.g., reference numeral 412) of the foodstuff packaging 412, 414, 420 that contains the comingled foodstuff F in order to subsequently consume (see, e.g., FIG. 20G) the comingled foodstuff F.

Referring to FIG. 17, the assembly 400 may include a foodstuff container 412, a heating element 414, a first foodstuff 416, a second foodstuff 418, and a closure 420. FIGS. 18A-18D illustrate a first methodology for assembling the assembly 400.

Referring to FIG. 18A, the foodstuff container 412 may include a base portion 422 connected to a sidewall portion 424. The base portion 422 includes an inner surface 422_{I} and an outer surface 422_{O}. The sidewall portion 424 includes an inner surface 424_{I}, an outer surface 424_{O}, and a distal end surface 424_{D} that connects the inner surface 424_{I} to the outer surface 424_{O}.

The inner surface 422_{I} of the base portion 422 and the inner surface 424_{I} of the sidewall portion 424 define a foodstuff-receiving cavity 426 of the foodstuff container 412. Access to the foodstuff-receiving cavity 426 is formed by an opening 428 defined by the inner surface 424_{I} of the sidewall portion 424 and the distal end surface 424_{D} of the sidewall portion 424.

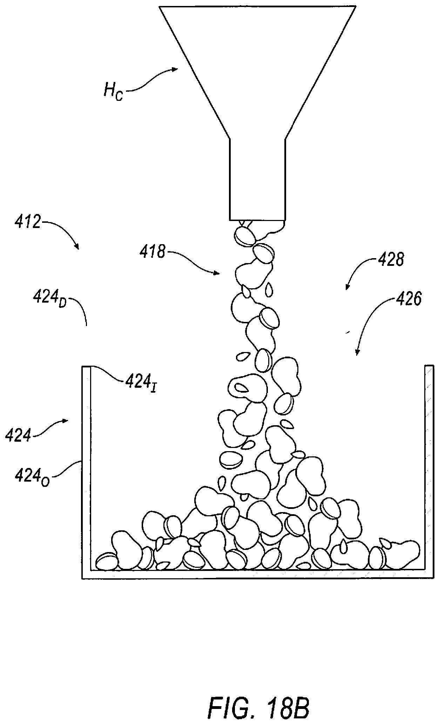

In an example, as seen in FIG. 18B, the second foodstuff 418 may deposited into the foodstuff-receiving cavity 426 of the foodstuff container 412 from a foodstuff hopper H_{G}. The second foodstuff 418 may be contained with the foodstuff-receiving cavity 426 and arranged upon and over the inner surface 422_{I} of the base portion 422 of the foodstuff container 412. As will be explained in the following disclosure, prior to activating the heating element 414, the first foodstuff 416 is contained within the closure 420, and, therefore, as seen in FIGS. 18C-18D, the second foodstuff 418 is initially separated from, and not comingled or mixed with, the first foodstuff 416.

As seen in FIG. 18B, the foodstuff hopper H_{G} may meter any desirable amount of the second foodstuff 418 into the foodstuff-receiving cavity 426. In some instances, the foodstuff hopper H_{G} may meter an amount of the second foodstuff 418 that is approximately equal to a volume of the foodstuff-receiving cavity 426 less a volume of the first foodstuff 416 that is contained within the closure 420 prior to activating the heating element 414. The second foodstuff material 418 may include one or more of, but is not limited to: granola, muesli, oats, seeds, nuts, cereal or the like. Although the second foodstuff 418 is shown to include a plurality of pieces or units of foodstuff, the second foodstuff 418 may include one piece or one unit of foodstuff that is deposited into the foodstuff-receiving cavity 426.

Referring to FIG. 18C, an exemplary view of the closure 420 is shown. The closure 420 includes a first cavity 429a and a second cavity 429b. The first cavity 429a of the closure 420 is defined by a heating element retainer portion 425, a base portion 432 and a sidewall portion 434. The second cavity 429b of the closure 420 is defined by a first foodstuff retainer portion 427, the base portion 432 and the sidewall portion 434. A chemically-activated material 430 is disposed within the first cavity 429a, and the first foodstuff 416 is disposed within the second cavity 429b. As will be described in the following disclosure, the heating element retainer portion 425 and the chemically-activated material 430 contributes to the formation of a first portion 414a of the heating element 414.

The sidewall portion 434 is connected to each of the heating element retainer portion 425, the first foodstuff retainer portion 427 and the base portion 432. The sidewall portion 434 includes an inner surface 434_{I}, an outer surface 434_{O}, an upper end portion 434u, a lower end portion 434_{L} and an intermediate portion 434_{I}.

The heating element retainer portion 425 includes an inner surface 425_{I} and an outer surface 425_{O}. The heating element retainer portion 425 is connected to and extends from the upper end portion 434u of the sidewall portion 434. One or more passages 425_{P} may extend through the heating element retainer portion 425 from the outer surface 425_{O} to the inner surface 425_{I}.

The base portion 432 includes an upper surface 432u and a lower surface 432_{L}. The base portion 432 is connected to and extends from the inner surface 434_{I} of the sidewall portion 434 proximate the intermediate portion 434_{I} of the sidewall portion 434.

The first foodstuff retainer portion 427 includes an inner surface 427_{I} and an outer surface 427_{O}. The first foodstuff retainer portion 427 is connected to and extends from the lower end portion 434_{L} of the sidewall portion 434. One or more passages 427_{P} may extend through the first foodstuff retainer portion 427 from the outer surface 427_{O} to the inner surface 427_{I}.

The inner surface 434_{I} of the sidewall portion 434, the inner surface 425_{I} of the heating element retainer portion 425 and the upper surface 432u of the base portion 432 defines the first cavity 429a that contains the chemically-activated material 430. The inner surface 434_{I} of the sidewall portion 434, the inner surface 427_{I} of the first foodstuff retainer portion 427 and the lower surface 432_{L} of the base portion 432 defines the second cavity 429a that contains the first foodstuff 416.

The closure 420 may include an outwardly-extending projection 431 that extends away from the outer surface 434_{O} of the sidewall portion 434 and the outer surface 427_{O} of the first foodstuff retainer portion 427. The outwardly-extending projection 431 may include an outer surface 431_{O} and an inner surface 431_{I}. The inner surface 431_{I} of the outwardly-extending projection 431 of the closure 420 may include a threaded surface (not shown) that cooperates with a corresponding threaded surface (not shown) formed upon a portion of the outer surface 424_{O} of the sidewall portion 424 of the foodstuff container 412 in order to removably attach the closure 420 to the foodstuff container 412. Alternatively, the inner surface 431_{I} of the outwardly-extending projection 431 of the closure 420 may be removably-attached to and cooperate with the outer surface 424_{O} of the sidewall portion 424 of the foodstuff container 412 in other configurations (e.g., a friction-fit connection, a snap-fit connection or the like) in order to removably attach the closure 420 to the foodstuff container 412.

Referring to FIGS. 17 and 18C-18D, the second portion 414b of the heating element 414 is shown. The second portion 414b of the heating element 414 includes an inner surface 414b_{I} and an outer surface 414bo. As seen in FIGS. 18C-18D, the inner surface 414b_{I} of the second portion 414b of the heating element 414 is disposed adjacent the outer surface 425_{O} of the heating element retainer 425. The second portion 414b of the heating element 414 may be a removable film member that is discarded into a trash receptacle T once the inner surface 414b_{I} of the second portion 414b of the heating element 414 is selectively-detached from (and no longer disposed adjacent to) the outer surface 425_{O} of the heating element retainer 425.

The chemically-activated material 430 may include an air-activated material, and more particularly, an oxygen-activated material, such as, for example, zinc. When the inner surface 414b_{I} of the second portion 414b of the heating element 414 is disposed adjacent the outer surface 425_{O} of the heating element retainer 425, the second portion 414b may prevent fluid communication between the cavity 429 and the atmosphere A through the one or more passages 425_{P} extending through the heating element retainer 425. In particular, when the inner surface 414b_{I} of the second portion 414b of the heating element 414 is disposed adjacent the outer surface 425_{O} of the heating element retainer 425, the one or more passages 425_{P} may be prevented from fluidly communicating with surrounding atmosphere A (thereby preventing oxygen O from surrounding atmosphere A to pass through the one or more passages 425_{P} for subsequently contacting the chemically-activated material 430). However, as will be described in the following disclosure at FIGS. 19B-19C, 20B-20C, a user U may selectively activate the chemically-activated material 430 by removing the second portion 414b of the heating element 414 from the first portion 414a of the heating element 414 in order to permit the oxygen O from the surrounding atmosphere A to pass through the one or more passages 425_{P} and into the cavity 429 such that the oxygen O may come into contact with the chemically-activated material 430. When the oxygen O comes into contact with the chemically-activated material 430, a chemical reaction takes place (e.g., the zinc defining the chemically-activated material 430 becomes zinc oxide), which causes the chemically-activated material 430 to generate heat.

Referring to FIGS. 19A-19D and 20A-20G, a method of utilizing the assembly 400 of FIG. 17 is described. Referring to FIGS. 19A-19B and 20A-20B, the second portion 414b of the heating element 414, which may be a removable film member, is then selectively-detached from the outer surface 425_{O} of the heating element retainer 425. As seen in FIG. 19C, once removed from the first portion 414a of the heating element 414, the second portion 414b of the heating element 414 may be discarded into a trash receptacle T.

Referring to FIGS. 19B-19D and 20B-20D, once the second portion 414b of the heating element 414 is selectively-detached from the first portion 414a of the heating element 414, the chemically-activated material 430 contained within the cavity 429 of the first portion 414a of the heating element 414 is selectively activated. Activation of the chemically-activated material 430 contained within the first portion 414a of the heating element 414 occurs when oxygen O from surrounding atmosphere A is permitted to be in fluid communication with the chemically-activated material 430. As described above, when the inner surface 414b_{I} of the second portion 414b of the heating element 414 is disposed adjacent the outer surface 425_{O} of the heating element retainer 425, the one or more passages 425_{P} of the heating element retainer 425 are not permitted to be in fluid communication with surrounding atmosphere A (thereby not permitting oxygen O from surrounding atmosphere A to pass through the one or more passages 425_{P} of the heating element retainer 425 for subsequently contacting the chemically-activated material 430). However, once the second portion 414b of the heating element 414 is removed from the first portion 414a of the heating element 414 as described above, an oxygen barrier formed by the second portion 414b of the heating element 414 no longer exists, and, as a result, oxygen O from surrounding atmosphere A is permitted to pass through the one or more passages 425_{P} of the heating element retainer 425 such that the oxygen O may come into contact with the chemically-activated material 430. When the oxygen O comes into contact with the chemically-activated material 430, a chemical reaction takes place (e.g., the zinc defining the chemically-activated material 430 becomes zinc oxide), which causes the chemically-activated material 430 to generate heat H (see, e.g., FIGS. 20B-20D).

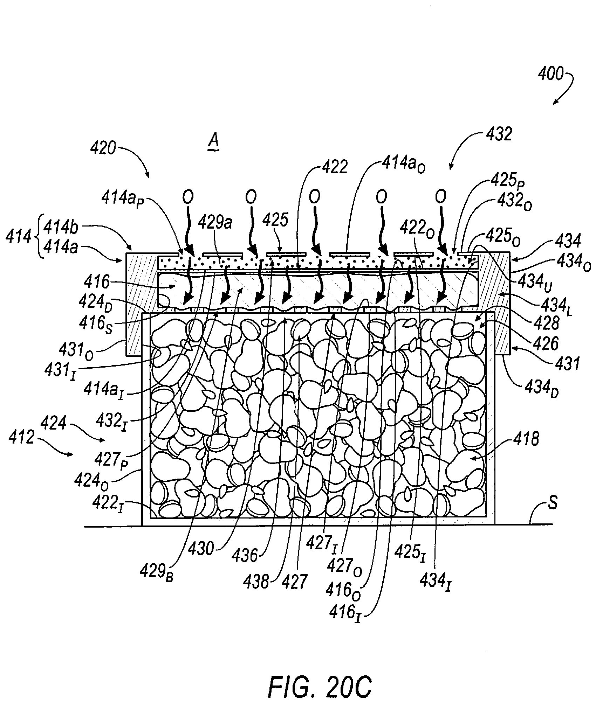

Referring to FIGS. 19B-19D and 20B-20D, the heat H generated by the chemically-activated material 430 of the first portion 414a of the heating element 414 is passed through the base portion 432 of the closure 420 such that the heat H is ultimately imparted into and absorbed by the first foodstuff 416. Comparatively, as seen in FIGS. 20B-20D, the heat H causes the first foodstuff 416 to transition from a substantially solid state (see, e.g., FIG. 20B) to a melted, substantially liquid state (see, e.g., FIGS. 20C-20D). As seen in FIGS. 20C-20E, as the first foodstuff 416 transitions to a melted, substantially liquid form, the first foodstuff 416, with the assistance of gravity, vertically seeps or oozes downwardly through the one or more passages 427_{P} of the first foodstuff retainer portion 427 and into the foodstuff-receiving cavity 426 of the foodstuff container 412 that contains the second foodstuff 418 such that the first foodstuff 416 is comingled throughout the second foodstuff 418 to define a comingled foodstuff F that is contained within foodstuff container 412.

Then, as seen in FIGS. 20E-20F, once a user U (see, e.g., FIG. 20G) has determined that most / all (or a desired amount) of the first foodstuff 416 has been evacuated from the closure 420, the user U may selectively-remove the closure 420 from the foodstuff container 412 such that the user U may access the foodstuff-receiving cavity 426 of the foodstuff container 412 that contains the comingled foodstuff F. If desired, as seen in FIG. 20F, the user U may arrange a utensil (e.g., a spoon SP) within the foodstuff-receiving cavity 426 of the foodstuff container 412 for mixing or stirring the comingled foodstuff F. Alternatively, the closure 420 could remain attached to the foodstuff container 412 and the comingled foodstuff F could be shaken. Then, as seen in FIG. 20G, the user U may consume the comingled foodstuff F.

In view of the above-described functionality of the heating element 414, it is seen that the first foodstuff 416 is heated H by a portion (i.e., the heating element 414) of the foodstuff packaging 412, 414, 420. In other words, the foodstuff packaging 412, 414, 420 provides a "self-heating" function that avoids the use of a non-packaging, external heat source (e.g., a microwave oven, a gas oven, an electric oven, a stove, fire or the like) for imparting heat to the first foodstuff 416. Furthermore, the arrangement of the heating element 414 in an opposing relationship with respect to the first foodstuff 416 (due to the arrangement of both of the chemically-activated material 430 of the heating element 414 and the first foodstuff 416 being contained within exclusive cavities 429a, 429b that are separated by the base portion 432 of the closure 420) substantially limits the heat H generated by the heating element 414 to be mostly received by the first foodstuff 416 and not the second foodstuff 418.

Aside from the benefit provided by the "self-heating" functionality of the foodstuff packaging 412, 414, 420 that avoids the use of a non-packaging external heat source to generate heat for melting the first foodstuff 416, use of some external heat sources (e.g., a microwave oven) may damage and/or ruin the second foodstuff 418 when the first foodstuff 416 and the second foodstuff 418 are both contained within foodstuff packaging (such as the foodstuff packaging 412, 414, 420 associated with the assembly 400). For example, should a microwave oven be utilized to impart heat to the first foodstuff 416, the first foodstuff 416 may, as desired, transition from a liquid state to a solid state; however, if the second foodstuff 418 is, for example, a "low moisture" food product, the second foodstuff 418 may undesirably burn (as a result of having very little or no moisture, which may be evaporated upon being heated) when microwave energy is imparted into the second foodstuff 418. Therefore, although some of the heat H generated by the heating element 414 may be imparted into the second foodstuff 418, the heat H from the heating element 414 may merely warm the second foodstuff 418 while also avoiding any damage / burning of the second foodstuff 418, which would otherwise occur if a non-packaging external heat source (e.g., a microwave oven) were to be utilized for heating the first foodstuff 416.

A number of implementations have been described. Nevertheless, it will be understood that various modifications may be made without departing from the scope of the following claims. For example, the actions recited in the claims can be performed in a different order and still achieve desirable results.

## Claims

1. An assembly (10) comprising:
foodstuff container (12) including a base portion (22) and a sidewall portion (24) defining a foodstuff-receiving cavity (26);
a chemically-activated heating element (14) operable to generate heat disposed adjacent to an outer surface (22_{O}) of the base portion (22);
a first foodstuff (16) disposed within the foodstuff-receiving cavity (26) adjacent to an inner surface (22_{I}) of the base portion (22), the first foodstuff (16) operable to transition from a first state to a second state upon application of the heat; and
a second foodstuff (18) disposed within the foodstuff-receiving cavity (26) and **characterized in that**:
the sidewall portion (124) includes an inner surface (124I) having a recess (124IR),
the assembly further includes a separator (150) disposed within the cavity (126) of the container (112) and including (i) a upper surface (150_{I}), (ii) a lower surface (150_{O}) formed on an opposite side from the upper surface (150_{I}), (iii) a side surface (150_{S}) connecting the upper surface (150_{I}) to the lower surface (150_{O}), (iv) a plurality of passages extending through the separator (150) from the upper surface (150_{I}) to the lower surface (150_{O}), and (v) a radially-outwardly-extending projection (150SP, 154) extending from the side surface (150_{S}) and registered within the recess (124IR) of the inner surface (124I) of the foodstuff container (12), wherein the separator (150) separates the cavity (126) into a first cavity portion (126a) including the first foodstuff (16) and a second cavity portion (126b) including the second foodstuff (18),
wherein in the first state the first foodstuff (16) is separated from the second foodstuff (18) by the separator (150) and the first foodstuff (16) is operable to pass through the separator (150) via the plurality of passages (152) when in the second state.

2. The assembly (10) of Claim 1, wherein the first foodstuff (16) is separated from the second foodstuff (18) when the first foodstuff (16) is in the first state, and the first foodstuff (16) is comingled throughout the second foodstuff (18) when the first foodstuff (16) is in the second state.

3. The assembly (10) of Claim 1, wherein the second foodstuff (18) is at least one of granola, muesli, oats, seeds, nuts, and cereal while the first foodstuff (16) material is at least one of chocolate and fudge.

4. The assembly (10) of Claim 1, wherein the chemically-activated heating element (14) comprises zinc.

5. The assembly (10) of Claim 1, further comprising a closure (20), and wherein the heating element (14) is attached to the foodstuff container (12).

6. The assembly (10) of Claim 5, wherein the heating element (14) is formed with the foodstuff container (12) or with the closure (20)

7. A method comprising:
providing a container (12) having a base portion (22) and a sidewall portion (24) defining a food-receiving cavity (26);
disposing a chemically-activated heating element (14) operable to generate heat adjacent to an outer surface (22_{O}) of the base portion of the container (12);
disposing a first foodstuff (16) within the food-receiving cavity (26) adjacent to an inner surface (22_{I}) of the base portion (22), the first foodstuff (16) operable to transition from a first state to a second state upon application of the heat; and
disposing a second foodstuff (18) within the cavity food-receiving (26)
**characterized by**:
the sidewall portion (124) of the container (12) including an inner surface (124_{I}) having a recess (124_{IR}),
disposing a separator (150) within the cavity (126) between the first foodstuff (16) and the second foodstuff (18), the separator (150) including (i) a upper surface (150_{I}), (ii) a lower surface (150_{O}) formed on an opposite side from the upper surface (150_{I}), (iii) a side surface (150_{S}) connecting the upper surface (150_{I}) to the lower surface (150_{O}), (iv) a radially-outwardly-extending projection (150_{SP}, 154) extending from the side surface (150s) and registered within the recess (124_{IR}) of the inner surface (124_{I}) of the foodstuff container (12) and a plurality of passages (152) formed therethrough, wherein the separator (150) separates the cavity (126) into a first cavity portion (126a) including the first foodstuff (16) and a second cavity portion (126b) including the second foodstuff (18) and the first foodstuff (16) is operable to pass through the separator (150) via the plurality of passages (152) when in the second state.

8. The method of Claim 7, wherein disposing the first foodstuff (16) within the food-receiving cavity (26) includes separating the first foodstuff (16) from the second foodstuff (18) when the first foodstuff (16) is arranged in the first state, and comingling the first foodstuff (16) with the second foodstuff (18) when the first foodstuff (16) is arranged in the second state.

9. The method of Claim 7, wherein disposing the second foodstuff (18) within the food-receiving cavity (26) includes disposing at least one of granola, muesli, oats, seeds, nuts, and cereal within the cavity food-receiving (26) and / or disposing the first foodstuff (16) within the food-receiving cavity (26) includes disposing at least one of chocolate and fudge within the food-receiving cavity (26).

10. The method of Claim 7, wherein providing the heating element (14) with a chemically-activated material includes providing the heating element (14) with zinc.

11. The method of Claim 7, wherein the first state of the first foodstuff (16) is a solid state and the second state of the first foodstuff (16) is a liquid state.

12. The method of Claim 7, wherein the first foodstuff (16) is disposed intermediate the chemically-activated heating element (14) and the second foodstuff (18).

## Patentansprüche

1. Anordnung (10), die Folgendes umfasst:
einen Nahrungsmittelbehälter (12), der einen Basisabschnitt (22) und einen Seitenwandabschnitt (24), der einen Nahrungsmittelaufnahmehohlraum (26) definiert, beinhaltet;
ein chemisch aktiviertes Heizelement (14), das betreibbar ist, Wärme zu erzeugen, und neben einer äußeren Fläche (22_{O}) des Basisabschnitt (22) angeordnet ist;
ein erstes Nahrungsmittel (16), das im Nahrungsmittelaufnahmehohlraum (26) neben einer inneren Fläche (22_{I}) des Basisabschnitts (22) angeordnet ist, wobei das erste Nahrungsmittel (16) betreibbar ist, nach Anwendung der Wärme von einem ersten Zustand in einen zweiten Zustand überzugehen; und
ein zweites Nahrungsmittel (18), das im Nahrungsmittelaufnahmehohlraum (26) angeordnet ist
und **dadurch gekennzeichnet, dass**:
der Seitenwandabschnitt (124) eine innere Fläche (1241) beinhaltet, die eine Ausnehmung (124IR) aufweist,
die Anordnung ferner einen Separator (150) beinhaltet, der im Hohlraum (126) des Behälters (112) angeordnet ist und (i) eine obere Fläche (150_{I}), (ii) eine untere Fläche (150_{O}), die auf einer gegenüberliegenden Seite der oberen Fläche (150_{I}) ausgebildet ist, (iii) eine Seitenfläche (150_{S}), die die obere Fläche (150_{I}) mit der unteren Fläche (150_{O}) verbindet, (iv) eine Vielzahl von Durchführungen, die sich durch den Separator (150) von der oberen Fläche (150_{I}) zur unteren Fläche (150_{O}) erstrecken, und (v) einen sich radial nach außen erstreckenden Vorsprung (150SP, 154), der sich von der Seitenfläche (150s) erstreckt und in der Ausnehmung (124IR) der inneren Fläche (1241) des Nahrungsmittelbehälters (12) registriert ist, wobei der Separator (150) den Hohlraum (126) in einen ersten Hohlraumabschnitt (126a), der das erste Nahrungsmittel (16) beinhaltet, und einen zweiten Hohlraumabschnitt (126b), der das zweite Nahrungsmittel (18) beinhaltet, trennt,
wobei das erste Nahrungsmittel (16) im ersten Zustand des zweiten Nahrungsmittels (18) vom Separator (150) getrennt ist und das erste Nahrungsmittel (16) betreibbar ist, im zweiten Zustand via die Vielzahl von Durchführungen (152) durch den Separator (150) geleitet zu werden.

2. Anordnung (10) nach Anspruch 1, wobei das erste Nahrungsmittel (16) vom zweiten Nahrungsmittel (18) getrennt ist, wenn sich das erste Nahrungsmittel (16) im ersten Zustand befindet, und das erste Nahrungsmittel (16) mit dem gesamten zweiten Nahrungsmittel (18) vermischt wird, wenn sich das erste Nahrungsmittel (16) im zweiten Zustand befindet.

3. Anordnung (10) nach Anspruch 1, wobei das zweite Nahrungsmittel (18) mindestens eines von Müsli, Hafer, Samenkörnern, Nüssen und Zerealien ist, während das erste Nahrungsmittel(16)-Material mindestens eines von Schokolade und Karamell ist.

4. Anordnung (10) nach Anspruch 1, wobei das chemisch aktivierte Heizelement (14) Zink umfasst.

5. Anordnung (10) nach Anspruch 1, die ferner einen Verschluss (20) umfasst und wobei das Heizelement (14) am Nahrungsmittelbehälter (12) befestigt ist.

6. Anordnung (10) nach Anspruch 5, wobei das Heizelement (14) mit dem Nahrungsmittelbehälter (12) oder mit dem Verschluss (20) ausgebildet ist.

7. Verfahren, das Folgendes umfasst:
Bereitstellen eines Behälters (12), der einen Basisabschnitt (22) und einen Seitenwandabschnitt (24), der einen Lebensmittelaufnahmehohlraum (26) definiert, aufweist;
Anordnen eines chemisch aktivierten Heizelements (14), das betreibbar ist, Wärme zu erzeugen, neben einer äußeren Fläche (22_{O}) des Basisabschnitts des Behälters (12);
Anordnen eines ersten Nahrungsmittels (16) im Lebensmittelaufnahmehohlraum (26) neben einer inneren Fläche (22_{I}) des Basisabschnitts (22), wobei das erste Nahrungsmittel (16) betreibbar ist, nach Anwendung der Wärme von einem ersten Zustand in einen zweiten Zustand überzugehen; und
Anordnen eines zweiten Nahrungsmittels (18) im Lebensmittelaufnahmehohlraum (26);
**dadurch gekennzeichnet, dass**:
der Seitenwandabschnitt (124) des Behälters (12) eine innere Fläche (124_{I}) beinhaltet, die eine Ausnehmung (124_{IR}) aufweist,
Anordnen eines Separators (150) im Hohlraum (126) zwischen dem ersten Nahrungsmittel (16) und dem zweiten Nahrungsmittel (18), wobei der Separator (150) (i) eine obere Fläche (150_{I}), eine untere Fläche (150_{O}), die auf einer gegenüberliegenden Seite der oberen Fläche (150_{I}) ausgebildet ist, (iii) eine Seitenfläche (150s), die die obere Fläche (150_{I}) mit der unteren Fläche (150_{O}) verbindet, (iv) einen sich radial nach außen erstreckenden Vorsprung (150_{SP}, 154), der sich von der Seitenfläche (150s) erstreckt und in der Ausnehmung (124_{IR}) der inneren Fläche (124_{I}) des Nahrungsmittelbehälters (12) registriert ist, und eine Vielzahl von Durchführungen (152), die dadurch ausgebildet sind, wobei der Separator (150) den Hohlraum (126) in einen ersten Hohlraumabschnitt (126a), der das erste Nahrungsmittel (16) beinhaltet, und einen zweiten Hohlraumabschnitt (126b), der das zweite Nahrungsmittel (18) beinhaltet, trennt und das erste Nahrungsmittel (16) betreibbar ist, im zweiten Zustand via die Vielzahl von Durchführungen (152) durch den Separator (150) geleitet zu werden.

8. Verfahren nach Anspruch 7, wobei das Anordnen des ersten Nahrungsmittels (16) im Lebensmittelaufnahmehohlraum (26) das Trennen des ersten Nahrungsmittels (16) vom zweiten Nahrungsmittel (18), wenn das erste Nahrungsmittel (16) im ersten Zustand angeordnet ist, und das Vermischen des ersten Nahrungsmittels (16) mit dem zweiten Nahrungsmittel (18), wenn das erste Nahrungsmittel (16) im zweiten Zustand angeordnet ist, beinhaltet.

9. Verfahren nach Anspruch 7, wobei das Anordnen des zweiten Nahrungsmittels (18) im Lebensmittelaufnahmehohlraum (26) das Anordnen von mindestens einem von Müsli, Hafer, Samenkörnern, Nüssen und Zerealien im Lebensmittelaufnahmehohlraum (26) beinhaltet und/oder das Anordnen des ersten Nahrungsmittels (16) im Lebensmittelaufnahmehohlraum (26) das Anordnen von mindestens einem von Schokolade und Karamell im ersten Lebensmittelaufnahmehohlraum (26) beinhaltet.

10. Verfahren nach Anspruch 7, wobei das Bereitstellen des Heizelements (14) mit einem chemisch aktivierten Material das Bereitstellen des Heizelements (14) mit Zink beinhaltet.

11. Verfahren nach Anspruch 7, wobei der erste Zustand des ersten Nahrungsmittels (16) ein fester Zustand ist und der zweite Zustand des ersten Nahrungsmittels (16) ein flüssiger Zustand ist.

12. Verfahren nach Anspruch 7, wobei das erste Nahrungsmittel (16) zwischen dem chemisch aktivierten Heizelement (14) und dem zweiten Nahrungsmittel (18) angeordnet ist.

## Revendications

1. Ensemble (10) comprenant :
un récipient pour denrées alimentaires (12) comportant une partie de base (22) et une partie de paroi latérale (24) définissant une cavité de réception de denrée alimentaire (26) ;
un élément chauffant activé chimiquement (14) pouvant générer de la chaleur, disposé de manière adjacente à une surface extérieure (22_{O}) de la partie de base (22) ;
une première denrée alimentaire (16) disposée au sein de la cavité de réception de denrée alimentaire (26) de manière adjacente à une surface intérieure (22_{I}) de la partie de base (22), la première denrée alimentaire (16) pouvant passer d'un premier état à un second état sous l'effet de la chaleur ; et
une seconde denrée alimentaire (18) disposée au sein de la cavité de réception de denrée alimentaire (26)
et **caractérisé en ce que** :
la partie de paroi latérale (124) comporte une surface intérieure (1241) ayant un renfoncement (124IR),
l'ensemble comportant en outre un séparateur (150) disposé au sein de la cavité (126) du récipient (112) et comportant (i) une surface supérieure (150_{I}), (ii) une surface inférieure (150_{O}) formée sur un côté opposé à la surface supérieure (150_{I}), (iii) une surface latérale (150_{S}) reliant la surface supérieure (150_{I}) à la surface inférieure (150_{O}), (iv) une pluralité de passages s'étendant à travers le séparateur (150) à partir de la surface supérieure (150_{I}) jusqu'à la surface inférieure (150_{O}), et (v) une saillie s'étendant radialement vers l'extérieur (150SP, 154) s'étendant à partir de la surface latérale (150ₛ) et marquée au sein du renfoncement (124IR) de la surface intérieure (1241) du récipient pour denrées alimentaires (12), dans lequel le séparateur (150) sépare la cavité (126) en une première partie de cavité (126a) comportant la première denrée alimentaire (16) et une seconde partie de cavité (126b) comportant la seconde denrée alimentaire (18),
dans lequel, dans le premier état, la première denrée alimentaire (16) est séparée de la seconde denrée alimentaire (18) par le séparateur (150) et la première denrée alimentaire (16) peut traverser le séparateur (150) par la pluralité de passages (152) lorsqu'elle est dans le second état.

2. Ensemble (10) selon la revendication 1, dans lequel la première denrée alimentaire (16) est séparée de la seconde denrée alimentaire (18) lorsque la première denrée alimentaire (16) est dans le premier état, et la première denrée alimentaire (16) est mélangée à la seconde denrée alimentaire (18) lorsque la première denrée alimentaire (16) est dans le second état.

3. Ensemble (10) selon la revendication 1, dans lequel la seconde denrée alimentaire (18) est au moins l'une parmi du granola, muesli, avoine, graines, fruits à coque et céréales, tandis que la matière de la première denrée alimentaire (16) est au moins l'une parmi du chocolat et du fudge.

4. Ensemble (10) selon la revendication 1, dans lequel l'élément chauffant activé chimiquement (14) comprend du zinc.

5. Ensemble (10) selon la revendication 1, comprenant en outre une fermeture (20), et dans lequel l'élément chauffant (14) est fixé au récipient pour denrées alimentaires (12).

6. Ensemble (10) selon la revendication 5, dans lequel l'élément chauffant (14) est formé avec le récipient pour denrées alimentaires (12) ou avec la fermeture (20).

7. Procédé comprenant :
la fourniture d'un récipient (12) ayant une partie de base (22) et une partie de paroi latérale (24) définissant une cavité de réception de denrée alimentaire (26) ;
la disposition d'un élément chauffant activé chimiquement (14) pouvant générer de la chaleur de manière adjacente à une surface extérieure (22_{O}) de la partie de base du récipient (12) ;
la disposition d'une première denrée alimentaire (16) au sein de la cavité de réception d'aliment (26) de manière adjacente à une surface intérieure (22_{I}) de la partie de base (22), la première denrée alimentaire (16) pouvant passer d'un premier état à un second état sous l'effet de la chaleur ; et
la disposition d'une seconde denrée alimentaire (18) au sein de la cavité de réception d'aliment (26) ;
**caractérisé par** :
la partie de paroi latérale (124) du récipient (12) comportant une surface intérieure (124_{I}) ayant un renfoncement (124_{IR}),
la disposition d'un séparateur (150) au sein de la cavité (126) entre la première denrée alimentaire (16) et la seconde denrée alimentaire (18), le séparateur (150) comportant (i) une surface supérieure (150_{I}), (ii) une surface inférieure (150_{O}) formée sur un côté opposé à la surface supérieure (150_{I}), (iii) une surface latérale (150ₛ) reliant la surface supérieure (150_{I}) à la surface inférieure (150_{O}), (iv) une saillie s'étendant radialement vers l'extérieur (150_{SP}, 154) s'étendant à partir de la surface latérale (150ₛ) et marquée au sein du renfoncement (124_{IR}) de la surface intérieure (124_{I}) du récipient pour denrées alimentaires (12) et une pluralité de passages (152) formés à travers elle, dans lequel le séparateur (150) sépare la cavité (126) en une première partie de cavité (126a) comportant la première denrée alimentaire (16) et une seconde partie de cavité (126b) comportant la seconde denrée alimentaire (18) et la première denrée alimentaire (16) peut traverser le séparateur (150) par la pluralité de passages (152) lorsqu'elle est dans le second état.

8. Procédé selon la revendication 7, dans lequel la disposition de la première denrée alimentaire (16) au sein de la cavité de réception d'aliment (26) comporte la séparation de la première denrée alimentaire (16) de la seconde denrée alimentaire (18) lorsque la première denrée alimentaire (16) est agencée dans le premier état, et le mélange de la première denrée alimentaire (16) avec la seconde denrée alimentaire (18) lorsque la première denrée alimentaire (16) est agencée dans le second état.

9. Procédé selon la revendication 7, dans lequel la disposition de la seconde denrée alimentaire (18) au sein de la cavité de réception d'aliment (26) comporte la disposition d'au moins l'un parmi un granola, muesli, avoine, graines, fruits à coque et céréales au sein de la cavité de réception d'aliment (26) et/ou la disposition de la première denrée alimentaire (16) au sein de la cavité de réception d'aliment (26) comporte la disposition d'au moins l'un parmi du chocolat et du fudge au sein de la cavité de réception d'aliment (26).

10. Procédé selon la revendication 7, dans lequel la fourniture à l'élément chauffant (14) d'une matière activée chimiquement comporte la fourniture à l'élément chauffant (14) de zinc.

11. Procédé selon la revendication 7, dans lequel le premier état de la première denrée alimentaire (16) est un état solide et le second état de la première denrée alimentaire (16) est un état liquide.

12. Procédé selon la revendication 7, dans lequel la première denrée alimentaire (16) est disposée de façon intermédiaire entre l'élément chauffant activé chimiquement (14) et la seconde denrée alimentaire (18).
